# EUROPEAN PATENT APPLICATION

(11) **EP 4 836 494 A1**
(43) Date of publication of application: **04.11.2026**
(21) Application number: 24923116.8
(22) Date of filing: 08.04.2024
(51) Int. Cl.: H04W 24/02

(54) **TWT ADJUSTMENT METHOD, AND DEVICE, SYSTEM AND STORAGE MEDIUM**

(30) Priority: 08.02.2024 CN 202410176288
(71) Applicant: Honor Device Co., Ltd., Shenzhen, Guangdong 518040 (CN)
(72) Inventor: MA, Hongyang, Shenzhen, Guangdong 518040 (CN); HAO, Yixiu, Shenzhen, Guangdong 518040 (CN); HOU, Tianyi, Shenzhen, Guangdong 518040 (CN)
(74) Representative: Gill Jennings & Every LLP
(86) International application number: PCT/CN2024/086598
(87) International publication number: WO 2025/166891

(57) **Abstract**

This application provides a target wake time TWT adjustment method, a device, a system, and a storage medium, and relates to the field of terminal technologies. In solutions of this application, when a first electronic device enables a hotspot, if the first electronic device supports a TWT capability, the first electronic device disables the TWT capability in a beacon frame and a probe response frame, so that a terminal device that does not support the TWT capability can successfully discover the first electronic device through scanning, thereby improving a success rate of establishing a WLAN connection between the first electronic device and the terminal device.

## Description

This application claims priority to Chinese Patent Application No. 202410176288.1, filed with the China National Intellectual Property Administration on February 8, 2024 and entitled "TWT ADJUSTMENT METHOD, DEVICE, SYSTEM, AND STORAGE MEDIUM", which is incorporated herein by reference in its entirety.

### TECHNICAL FIELD

This application relates to the field of terminal technologies, and in particular, to a TWT adjustment method, a device, a system, and a storage medium.

### BACKGROUND

With an increasing requirement of people for device portability, a conventional wired network cannot meet the requirement, and a wireless local area network (wireless local area net, WLAN) technology emerges. In the WLAN, a terminal device is in a wake-up state for a long time, which causes unnecessary energy waste.

In a related technology, an energy saving mechanism: a target wake time (target wake time, TWT) is designed for the terminal device. An access point (access point, AP) device and a station (station, STA) device of the WLAN agree on a TWT wake time in advance. When reaching the wake time, the STA device wakes up, the STA device exchanges data with the AP device, and the STA device enters a sleep state at another time, thereby reducing energy consumption of the STA device. However, when a terminal device such as a mobile phone serves as an AP device to enable a hotspot, if a TWT capabilities tag of the AP device is enabled, another device that does not support a TWT capability cannot discover the AP device through scanning, thereby causing a WLAN connection failure.

### SUMMARY

This application provides a TWT adjustment method, a device, a system, and a storage medium, to resolve a technical problem of a WLAN connection failure because a device that does not support a TWT capability cannot discover, through scanning, an AP device that supports the TWT capability.

To achieve the foregoing objective, the following technical solutions are used in this application:
According to a first aspect, an embodiment of this application provides a TWT adjustment method. The method may be applied to a first electronic device. The method may include: a first electronic device enables a hotspot; and the first electronic device sends first signaling. The first signaling includes information indicating that the first electronic device has disabled a TWT capability. For example, the first signaling may be a periodically sent beacon frame, or the first signaling may be a probe response frame corresponding to a probe request frame.

In the foregoing solution, the first electronic device supports the TWT capability. When the first electronic device enables the hotspot, although the first electronic device supports the TWT capability, the first electronic device still disables the TWT capability of the first electronic device in the first signaling. In this way, regardless of whether a device (for example, a terminal device) that receives the first signaling supports the TWT capability, the first electronic device can be successfully discovered through scanning by using the first signaling. For example, when a production year of Wi-Fi firmware of the terminal device is early, and therefore the terminal device does not support the TWT capability, if parsed content of the probe response frame is that the first electronic device does not support the TWT capability, a lower layer (for example, a Wi-Fi driver) of the terminal device determines, according to default code logic, that there is no TWT capability conflict between the first electronic device and the terminal device, and normally reports the parsed content to an upper layer (for example, a Wi-Fi setting module) of the terminal device, to discover the first electronic device through scanning, thereby improving a success rate of establishing a WLAN connection between the first electronic device and the terminal device.

In a possible implementation, a Wi-Fi version enabled on the first electronic device may be any one of the following: a 7th generation wireless network technology Wi-Fi7, a 6th generation wireless network technology Wi-Fi6, a 5th generation wireless network technology Wi-Fi5, or a 4th generation wireless network technology Wi-Fi4. The first electronic device may set an extended capabilities tag of the beacon frame or the probe response frame, to indicate that the first electronic device does not support the TWT capability.

In a possible implementation, before the first electronic device sends the first signaling, the method may further include: the first electronic device generates first information; the first information indicates to disable the TWT capability of the first electronic device; and the first electronic device generates the first signaling based on the first information. For example, the Wi-Fi version enabled on the first electronic device is Wi-Fi5. The first electronic device may reconfigure the 78^{th} element of the extended capabilities tag of the probe response frame as "0", to indicate that the first electronic device does not support the TWT capability. Therefore, the first electronic device can generate the first signaling based on the 78^{th} element of the extended capabilities tag.

In a possible implementation, the first signaling may include a first beacon frame and a first probe response frame. Correspondingly, that the first electronic device enables the hotspot, and sends the first signaling includes: the first electronic device receives a first operation of enabling the hotspot by a user; in response to the first operation, the first electronic device enables the hotspot, and periodically broadcasts the first beacon frame, where the first beacon frame may include the information indicating that the first electronic device has disabled the TWT capability; the first electronic device receives a first probe request frame from a terminal device; and the first electronic device sends a first probe response frame to the terminal device, where the first probe response frame may include the information indicating that the first electronic device has disabled the TWT capability.

For example, that in response to the first operation, the first electronic device enables the hotspot, and periodically broadcasts the first beacon frame includes: the first electronic device configures first information in response to the first operation, where the first information indicates to disable the TWT capability of the first electronic device; and the first electronic device disables the TWT capability of the first electronic device based on the first information, and periodically broadcasts the first beacon frame, where the first beacon frame includes the information indicating that the first electronic device has disabled the TWT capability.

In the foregoing solution, regardless of whether the terminal device supports the TWT capability, when the first electronic device enables the hotspot, the first electronic device may directly disable the TWT capability in the first beacon frame, so that TWT capability configurations of the first beacon frame and the first probe response frame are consistent. In this way, a problem of a TWT capability conflict that may exist between the first electronic device and the terminal device is avoided, thereby improving probability that the terminal device discovers the first electronic device through scanning.

In a possible implementation, that the first electronic device enables the hotspot may include: the first electronic device enables the hotspot, and starts timing. That the first electronic device sends the first signaling includes: when a timing duration reaches a preset duration (for example, 2 minutes), if no wireless local area network connection is established between the first electronic device and another device, the first electronic device sends the first signaling.

For example, the first signaling may be a second probe response frame. The first electronic device may configure second information in response to a first operation of enabling the hotspot by a user. The second information indicates to enable the TWT capability of the first electronic device. The first electronic device enables the hotspot, enables the TWT capability of the first electronic device based on the second information, and starts timing. The first electronic device broadcasts a second beacon frame according to a preset periodicity. The second beacon frame includes the information indicating that the first electronic device has enabled the TWT capability. When the timing duration reaches the preset duration, if no wireless local area network connection is established between the first electronic device and the another device, the first electronic device configures first information, and deletes the second information. The first information indicates to disable the TWT capability of the first electronic device. Then, the first electronic device receives a second probe request frame from the terminal device. Afterward, the first electronic device sends the second probe response frame to the terminal device. The second probe response frame includes the information indicating that the first electronic device has disabled the TWT capability.

In the foregoing solution, when the first electronic device enables the hotspot, the first electronic device may enable the TWT capability. If the terminal device does not support the TWT capability, the following case may occur: the terminal device cannot discover the first electronic device through scanning. Therefore, when the first electronic device enables the hotspot, the first electronic device may first enable the TWT capability, and then disable the TWT capability of the first electronic device if a STA device is not connected to the first electronic device after the timing duration reaches the preset duration. In this way, the terminal device can discover the first electronic device through scanning, and can also establish a TWT protocol when the terminal device supports the TWT capability.

In a possible implementation, after the first electronic device enables the hotspot, before the first electronic device sends the first signaling, the method may further include: the first electronic device receives a third probe request frame from the terminal device. Correspondingly, that the first electronic device sends the first signaling includes: if the third probe request frame includes information indicating that the terminal device does not support the TWT capability (that is, indicates that the terminal device does not support the TWT capability), the first electronic device sends the first signaling to the terminal device. The method may further include: if the first probe request frame includes information indicating that the terminal device supports the TWT capability (that is, indicates that the terminal device supports the TWT capability), the first electronic device sends second signaling to the terminal device. The second signaling includes the information indicating that the first electronic device has enabled the TWT capability.

For example, the first signaling may be a third probe response frame, and the second signaling may be a fourth probe response frame. The first electronic device configures second information in response to a first operation of enabling the hotspot by a user. The second information indicates to enable the TWT capability of the first electronic device. The first electronic device enables the hotspot based on the second information, and periodically broadcasts a third beacon frame. The third beacon frame includes the information indicating that the first electronic device has enabled the TWT capability. The first electronic device receives the third probe request frame from the terminal device, and parses the third probe request frame to obtain first parsed content. If the first parsed content indicates that the terminal device does not support the TWT capability, the first electronic device configures the first information, and deletes the second information. The first information indicates to disable the TWT capability of the first electronic device. The first electronic device generates the third probe response frame based on the first information, and sends the third probe response frame to the terminal device. The third probe response frame includes the information indicating that the first electronic device has disabled the TWT capability. If the first parsed content indicates that the terminal device supports the TWT capability, the first electronic device maintains the second information, and generates the fourth probe response frame based on the second information. The first electronic device sends the fourth probe response frame to the terminal device. The fourth probe response frame includes the information indicating that the first electronic device has enabled the TWT capability.

In the foregoing solution, when the first electronic device enables the hotspot, the TWT capability may be enabled first. If the terminal device does not support the TWT capability, the following case may occur: the terminal device cannot discover the first electronic device through scanning. Therefore, when the first electronic device enables the hotspot, the first electronic device may first enable the TWT capability, and then determine, based on the TWT capability that is of the terminal device and that is carried in the probe request frame, whether to disable the TWT capability of the first electronic device. In this way, the terminal device can discover the first electronic device through scanning, and can also establish the TWT protocol when the terminal device supports the TWT capability.

In a possible implementation, after the first electronic device enables the hotspot, before the first electronic device sends the first signaling, the method may further include: the first electronic device receives a first request message from a terminal device, where the first request message is used to request to disable the TWT capability of the first electronic device. Correspondingly, that the first electronic device sends the first signaling includes: the first electronic device disables the TWT capability of the first electronic device based on the first request message, and sends the first signaling to the terminal device.

For example, the first signaling is a fifth probe response frame. The first electronic device configures second information in response to a first operation of enabling the hotspot by a user. The second information indicates to enable the TWT capability of the first electronic device. The first electronic device enables the hotspot, enables the TWT capability of the first electronic device based on the second information, and broadcasts a fourth beacon frame according to a preset periodicity. The fourth beacon frame includes information indicating that the first electronic device has enabled the TWT capability. The first electronic device configures first information based on the first request message, and deletes the second information. The first information indicates to disable the TWT capability of the first electronic device. The first electronic device disables the TWT capability of the first electronic device based on the first information, and generates the fifth probe response frame. The first electronic device sends the fifth probe response frame to the terminal device. The fifth probe response frame includes information indicating that the first electronic device has disabled the TWT capability.

In the foregoing solution, when the first electronic device enables the hotspot, the TWT capability may be enabled. If the terminal device does not support the TWT capability, the following case may occur: the terminal device cannot discover the first electronic device through scanning. Therefore, when the first electronic device enables the hotspot, the first electronic device may first enable the TWT capability. After the terminal device determines, based on the first signaling, that the first electronic device supports the TWT capability, the terminal device may indicate the first electronic device to disable the TWT capability, so that the terminal device can discover the first electronic device through scanning.

In a possible implementation, after the first electronic device enables the hotspot, before the first electronic device sends the first signaling, the method may further include: the first electronic device periodically broadcasts a fifth beacon frame according to a preset periodicity, where the fifth beacon frame includes information indicating that the first electronic device has enabled the TWT capability (that is, indicates that the first electronic device supports the TWT capability). The fifth beacon frame may be the second beacon frame, the third beacon frame, or the fourth beacon frame.

In the foregoing solution, the terminal device may be a STA device that supports the TWT capability, or may be a STA device that does not support the TWT capability. When the first electronic device enables the hotspot, the first electronic device cannot predict whether the terminal device supports the TWT capability. To avoid a problem in which the terminal device supporting the TWT capability cannot establish the TWT protocol with the first electronic device because the TWT capability of the first electronic device is directly disabled, the first electronic device may first enable the TWT capability based on the beacon frame, and then further determine, in a subsequent process based on whether timing of the first electronic device expires, whether to disable the TWT capability.

In a possible implementation, after the first electronic device enables the hotspot, before the first electronic device sends the first signaling, the method may further include: the first electronic device sends third signaling and fourth signaling, where the third signaling includes the information indicating that the first electronic device has disabled the TWT capability (that is, indicates that the first electronic device does not support the TWT capability), and the fourth signaling includes information indicating that the first electronic device has enabled the TWT capability (that is, indicates that the first electronic device supports the TWT capability); and the first electronic device receives a second request message from a terminal device, where the second request message is used to request to disable the TWT capability of the first electronic device. Correspondingly, that the first electronic device sends the first signaling includes: the first electronic device disables the TWT capability of the first electronic device based on the second request message, and sends the first signaling to the terminal device.

For example, both the third signaling and the fourth signaling may be beacon frames, or both are probe response frames.

For example, the third signaling is a sixth beacon frame, and the fourth signaling is a seventh beacon frame. In response to a first operation of enabling the hotspot by a user, the first electronic device configures first information and second information. The first information indicates to disable the TWT capability of the first electronic device, and the second information indicates to enable the TWT capability of the first electronic device. The first electronic device enables the hotspot based on the first information and the second information. Then, the first electronic device generates the first beacon frame based on the first information, and generates the second beacon frame based on the second information. Then, the first electronic device broadcasts a sixth beacon frame and a seventh beacon frame according to a preset periodicity. Afterward, the first electronic device reconfigures the first information based on the second request message, disables the TWT capability of the first electronic device based on the first information, generates the first signaling, and sends the first signaling to the terminal device.

In the foregoing solution, because the terminal device may support the TWT capability or may not support the TWT capability, if the TWT capability of the first electronic device is directly disabled, a problem in which the terminal device supporting the TWT capability cannot establish the TWT protocol with the first electronic device may occur. When enabling the hotspot, the first electronic device may send two beacon frames: One beacon frame indicates that the first electronic device supports the TWT capability, and the other beacon frame indicates that the first electronic device does not support the TWT capability. In this way, after receiving the two beacon frames, the terminal device may indicate, based on the TWT capability of the terminal device, the first electronic device to disable or enable the TWT capability, so that the terminal device can discover the first electronic device through scanning.

According to a second aspect, an embodiment of this application provides a TWT adjustment method. The method may be applied to a terminal device. The terminal device may not support a TWT capability, or may not support a TWT capability. The method may include: the terminal device starts to search for a wireless local area network; and the terminal device receives first signaling from a first electronic device. The first signaling may include information indicating that the first electronic device has disabled a TWT capability. For example, the first signaling may be a beacon frame periodically sent by the first electronic device, or the first message may be a probe response frame corresponding to a probe request frame sent by the terminal device.

In the foregoing solution, although the first electronic device supports the TWT capability, the first electronic device disables the TWT capability in the first signaling, so that the terminal device that does not support the TWT capability can successfully discover the first electronic device through scanning by using a probe response frame. For example, when a production year of Wi-Fi firmware of the terminal device is early, and therefore the terminal device does not support the TWT capability, if parsed content of the first signaling is that the first electronic device does not support the TWT capability, a lower layer (for example, a Wi-Fi driver) of the terminal device determines, according to default code logic, that there is no TWT capability conflict between the first electronic device and the terminal device, and normally reports the parsed content to an upper layer (for example, a Wi-Fi setting module) of the terminal device, to discover the first electronic device through scanning, thereby improving a success rate of establishing a WLAN connection between the first electronic device and the terminal device.

In a possible implementation, the first signaling may include a first beacon frame and a first probe response frame. That the terminal device starts to search for the wireless local area network, and the terminal device receives the first signaling from the first electronic device includes: the terminal device starts to search for the wireless local area network, and periodically receives the first beacon frame; the terminal device sends a first probe request frame to the first electronic device; and the terminal device receives the first probe response frame from the first electronic device. The terminal device does not support the TWT capability.

In the foregoing solution, when the first electronic device enables the hotspot, the first electronic device may directly disable the TWT capability in the first beacon frame, so that TWT capability configurations of the first beacon frame and the first probe response frame are consistent. In this way, a problem of a TWT capability conflict that may exist between the first electronic device and the terminal device is avoided, thereby improving probability that the terminal device discovers the first electronic device through scanning.

In a possible implementation, the first signaling is a second probe response frame. That the terminal device starts to search for the wireless local area network, and the terminal device receives the first signaling from the first electronic device includes: the terminal device starts to search for the wireless local area network, and starts timing; when a timing duration reaches a preset duration, if no wireless local area network connection is established between the terminal device and another device, the terminal device sends a second probe request frame, where the second probe request frame includes information indicating that the terminal device does not support the TWT capability; and the terminal device receives the second probe response frame from the first electronic device based on the second probe request frame.

In the foregoing solution, after the terminal device starts to search for the network, timing starts. In an initial stage, the terminal device may not indicate, to the first electronic device, whether the terminal device supports the TWT capability. After the timing duration reaches the preset duration, if the terminal device is not connected to an AP device, the terminal device may indicate, to the first electronic device, that the terminal device does not support the TWT capability. Therefore, the first electronic device changes TWT capability information of a probe response frame and a beacon frame, so that the terminal device can discover the first electronic device through scanning.

In a possible implementation, that the terminal device receives the first signaling from the first electronic device includes: if the terminal device does not support the TWT capability, the terminal device sends a third probe request frame to the first electronic device, where the third probe request frame includes information indicating that the terminal device does not support the TWT capability; and the terminal device receives a third probe response frame from the first electronic device based on the third probe request frame, where the first signaling is the third probe response frame.

In the foregoing solution, the first electronic device may enable the TWT capability at an initial moment. The terminal device indicates, in the probe request frame, that the terminal device does not support the TWT capability. Therefore, the first electronic device disables the TWT capability of the first electronic device, so that the terminal device can successfully discover the first electronic device through scanning.

In a possible implementation, after the terminal device starts to search for the wireless local area network, the method may further include: if the terminal device supports the TWT capability, the terminal device sends a third probe request frame to the first electronic device, where the third probe request frame includes information indicating that the terminal device supports the TWT capability; and the terminal device receives second signaling from the first electronic device based on the third probe request frame, where the second signaling includes information indicating that the first electronic device has enabled the TWT capability.

In the foregoing solution, the first electronic device may disable the TWT capability at an initial moment. The terminal device indicates, in the probe request frame, that the terminal device supports the TWT capability. Therefore, the first electronic device enables the TWT capability of the first electronic device, so that the terminal device establishes a TWT connection with the first electronic device.

In a possible implementation, after the terminal device starts to search for the wireless local area network, before the terminal device receives the first signaling from the first electronic device, the method may further include: the terminal device sends a fourth probe request frame to the first electronic device, where the fourth probe request frame does not include information indicating whether to disable the TWT capability of the terminal device.

In the foregoing solution, the terminal device may not indicate, in the probe request frame, whether the terminal device supports the TWT capability. Instead, the first electronic device determines, based on a connection duration of the device, to disable the TWT capability of the first electronic device.

In a possible implementation, after the terminal device starts to search for the wireless local area network, before the terminal device receives the first signaling from the first electronic device, the method may further include: the terminal device sends a first request message to the first electronic device, where the first request message is used to request to disable the TWT capability of the first electronic device. Correspondingly, that the terminal device receives the first signaling from the first electronic device includes: the terminal device receives the first signaling from the first electronic device based on the first request message.

In the foregoing solution, after the terminal device determines, based on a packet of the first electronic device, that the first electronic device supports the TWT capability, the terminal device may indicate the first electronic device to disable the TWT capability, so that the terminal device can successfully discover the first electronic device through scanning.

In a possible implementation, after the terminal device starts to search for the wireless local area network, before the terminal device receives the first signaling from the first electronic device, the method may further include: the terminal device receives a second beacon frame from the first electronic device, where the second beacon frame includes second information, and the second information indicates to enable the TWT capability of the first electronic device.

In the foregoing solution, when the first electronic device enables the hotspot, the first electronic device cannot predict whether the terminal device supports the TWT capability. To avoid a problem in which the terminal device supporting the TWT capability cannot establish the TWT protocol with the first electronic device because the TWT capability of the first electronic device is directly disabled, the first electronic device may first enable the TWT capability based on the beacon frame, and then further determine, in a subsequent process based on whether the terminal device supports the TWT capability or whether timing of the first electronic device expires or whether a request message of disabling the TWT capability from the terminal device is received, whether to disable the TWT capability.

In a possible implementation, before the terminal device receives the first signaling from the first electronic device, the method may further include: the terminal device receives third signaling and fourth signaling from the first electronic device, where the third signaling includes the information indicating that the first electronic device has disabled the TWT capability, and the fourth signaling includes information indicating that the first electronic device has enabled the TWT capability; and the terminal device selects, in the third signaling based on the TWT capability of the terminal device, the information indicating that the first electronic device has disabled the TWT capability, or selects, in the fourth signaling, the information indicating that the first electronic device has enabled the TWT capability.

For example, both the third signaling and the fourth signaling are beacon frames. If the terminal device does not support the TWT capability, the terminal device selects the third signaling, and sends a second request message to the first electronic device, where the second request message is used to request to disable the TWT capability of the first electronic device, the first signaling is a sixth probe response frame, and the sixth probe response frame is obtained based on the second request message. Alternatively, if the terminal device supports the TWT capability, the terminal device selects the fourth signaling, and sends a third request message to the first electronic device, where the third request message is used to request to enable the TWT capability of the first electronic device, the first signaling is a seventh probe response frame, and the seventh probe response frame is obtained based on the third request message.

For another example, both the third signaling and the fourth signaling are probe response frames. If the terminal device does not support the TWT capability, the terminal device selects probe response frame information corresponding to the third signaling, and determines that the first electronic device is discovered through scanning for connection. Alternatively, if the terminal device supports the TWT capability, the terminal device selects probe response frame information corresponding to the fourth signaling, and determines that the first electronic device is discovered through scanning for connection.

In the foregoing solution, the third signaling received by the terminal device from the first electronic device includes two packets: One packet indicates that the first electronic device supports the TWT capability, and the other packet indicates that the first electronic device does not support the TWT capability. When the terminal device does not support the TWT capability, the terminal device may indicate, based on the TWT capability of the terminal device, the first electronic device to disable the TWT capability, so that the terminal device can discover the first electronic device through scanning.

According to a third aspect, this application provides an apparatus. The apparatus includes a unit configured to perform the method in the first aspect or the second aspect. The apparatus may correspondingly perform the method described in the first aspect or the second aspect. For related description of the units in the apparatus, refer to the description in the first aspect or the second aspect. For brevity, details are not described herein again.

According to a fourth aspect, this application provides an electronic device. The electronic device is a first electronic device. The first electronic device may be an AP device. The first electronic device may include one or more processors and a memory. The memory is coupled to the one or more processors. The memory is configured to store computer program code. The computer program code includes computer instructions. The one or more processors invoke the computer instructions, so that the first electronic device performs the method provided in any one of the first aspect and the possible implementation of the first aspect.

According to a fifth aspect, this application provides a terminal device. The terminal device may be a STA device. The terminal device may include one or more processors and a memory. The memory is coupled to the one or more processors. The memory is configured to store computer program code. The computer program code includes computer instructions. The one or more processors invoke the computer instructions, so that the terminal device performs the method provided in any one of the second aspect and the possible implementation of the second aspect.

According to a sixth aspect, this application provides a communication system. The communication system may include the AP device provided in the fourth aspect and the STA device provided in the fifth aspect.

According to a seventh aspect, this application provides a computer-readable storage medium. The computer-readable storage medium includes computer instructions. When computer instructions are run on a first electronic device (that is, an AP device), the first electronic device is enabled to perform the method provided in any one of the first aspect and the possible implementation of the first aspect. When computer instructions are run on a terminal device (that is, a STA device), the terminal device is enabled to perform the method provided in any one of the second aspect and the possible implementation of the second aspect.

According to an eighth aspect, this application provides a computer program product. When the computer program product runs on a first electronic device, the first electronic device is enabled to perform the method provided in any one of the first aspect and the possible implementation of the first aspect. When the computer program product runs on a terminal device, the terminal device is enabled to perform the method provided in any one of the second aspect and the possible implementation of the second aspect.

According to a ninth aspect, this application provides a chip system. When the chip system is applied to a first electronic device, the chip system includes one or more processors. The one or more processors are configured to invoke computer instructions, so that the first electronic device performs the method provided in any one of the first aspect and the possible implementation of the first aspect. When the chip system is applied to a terminal device, the chip system includes one or more processors. The one or more processors are configured to invoke computer instructions, so that the terminal device performs the method provided in any one of the second aspect and the possible implementation of the second aspect.

It may be understood that, for beneficial effects that can be achieved by the apparatus according to the third aspect, the electronic device according to the fourth aspect, the electronic device according to the fifth aspect, the communication system according to the sixth aspect, the computer-readable storage medium according to the seventh aspect, the computer program product according to the eighth aspect, and the chip system according to the ninth aspect, reference may be made to the beneficial effects in the first aspect and the second aspect. Details are not described herein again.

### BRIEF DESCRIPTION OF DRAWINGS

FIG. 1A and FIG. 1B each are a diagram of a WLAN system according to an embodiment of this application;
FIG. 2 is a diagram of a TWT working mechanism according to an embodiment of this application;
FIG. 3 is a diagram of a hardware structure of an electronic device according to an embodiment of this application;
FIG. 4 is another diagram of a hardware structure of an electronic device according to an embodiment of this application;
FIG. 5A, FIG. 5B, FIG. 5C, and FIG. 5D are a diagram of a scenario in which a hotspot of a mobile phone 1 is enabled according to an embodiment of this application;
FIG. 6A, FIG. 6B, and FIG. 6C are a diagram of a scenario in which a mobile phone 2 does not discover a mobile phone 1 according to an embodiment of this application;
FIG. 7A, FIG. 7B, and FIG. 7C are a diagram of a scenario in which a mobile phone 2 discovers a mobile phone 1 according to an embodiment of this application;
FIG. 8 is a diagram of an architecture of an electronic device according to an embodiment of this application;
FIG. 9 is a flowchart of a TWT capability management method according to an embodiment of this application;
FIG. 10 is a diagram 1 of a scenario in which a STA scans an AP according to an embodiment of this application;
FIG. 11A and FIG. 11B are another flowchart of a TWT capability management method according to an embodiment of this application;
FIG. 12 is a diagram 2 of a scenario in which a STA scans an AP according to an embodiment of this application;
FIG. 13A and FIG. 13B are another flowchart of a TWT capability management method according to an embodiment of this application;
FIG. 14 is a diagram 3 of a scenario in which a STA scans an AP according to an embodiment of this application;
FIG. 15 is a diagram 4 of a scenario in which a STA scans an AP according to an embodiment of this application;
FIG. 16A and FIG. 16B are another flowchart of a TWT capability management method according to an embodiment of this application;
FIG. 17 is a diagram 5 of a scenario in which a STA scans an AP according to an embodiment of this application;
FIG. 18A and FIG. 18B are another flowchart of a TWT capability management method according to an embodiment of this application;
FIG. 19 is a diagram 6 of a scenario in which a STA scans an AP according to an embodiment of this application;
FIG. 20A and FIG. 20B are another flowchart of a TWT capability management method according to an embodiment of this application;
FIG. 21 is a diagram 7 of a scenario in which a STA scans an AP according to an embodiment of this application;
FIG. 22A and FIG. 22B are another flowchart of a TWT capability management method according to an embodiment of this application; and
FIG. 23 is a diagram of establishing a WLAN connection between an AP and a STA according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. Clearly, the described embodiments are some of rather than all embodiments of this application.

In this application, the terms "first", "second", and the like are intended to distinguish between different objects or distinguish between different processing on a same object, but do not indicate a particular order among the objects. For example, a first operation and a second operation are used to distinguish between different operations, but are not intended to indicate a particular order of the operations.

In embodiments of this application, a "plurality of" means two or more.

The following describes some nouns or terms involved in this application.

### 1. Wireless local area network (wireless local area net, WLAN)

The WLAN is a network system in which computer devices are interconnected by using a wireless communication technology, to communicate with each other and implement resource sharing. The WLAN has a plurality of implementation protocols. For ease of description, a part of embodiments below is described by using a wireless fidelity (wireless fidelity, Wi-Fi) network protocol as an example. This constitutes no limitation on this application.

The Wi-Fi network mainly includes an access point (access point, AP) device and a station (station, STA) device. The AP device is an electronic device that serves as an AP in the Wi-Fi network, and the STA device is an electronic device that serves as a STA in the Wi-Fi network. In the Wi-Fi network, the STA device may establish a wireless connection to the AP device by using a built-in wireless network interface card (for example, a Wi-Fi chip). The AP device may provide a wireless connection service for the STA device. A plurality of STA devices may access a same Wi-Fi network by using one AP device, to implement interconnection. The AP device may be connected to the Internet (Internet) through a wired or wireless connection. To be specific, the STA device may be connected to the Internet through the AP device, for example, downloading data from an Internet side or uploading data to an Internet side. In other words, the STA device may implement a Wi-Fi Internet access service, for example, a quality of service (quality of service, QoS) service, by using the AP device. The QoS service is a service such as a streaming media service whose quality is ensured based on QoS parameters in a process of transmitting uplink data or downlink data over the Wi-Fi network.

### 2. Target wake time (target wake time, TWT)

The TWT is an energy saving mechanism designed for a terminal device. The AP device and the STA device agree on a TWT time periodicity in advance. When reaching the TWT time periodicity negotiated between the STA device and the AP device, the STA device wakes up and waits for a trigger frame (trigger) sent by the AP device, and then the AP device exchanges a data frame with the STA device. After each time of transmission is completed, the STA device returns to a sleep state, to achieve an energy saving purpose.

This application provides a TWT adjustment method. In this method, when a terminal device such as a mobile phone serves as an AP device to enable a hotspot, if the AP device supports a TWT capability, the AP device disables a TWT capabilities tag in a beacon frame and a probe response frame, so that another device that does not support the TWT capability can successfully discover the AP device through scanning, thereby improving a success rate of establishing a WLAN connection.

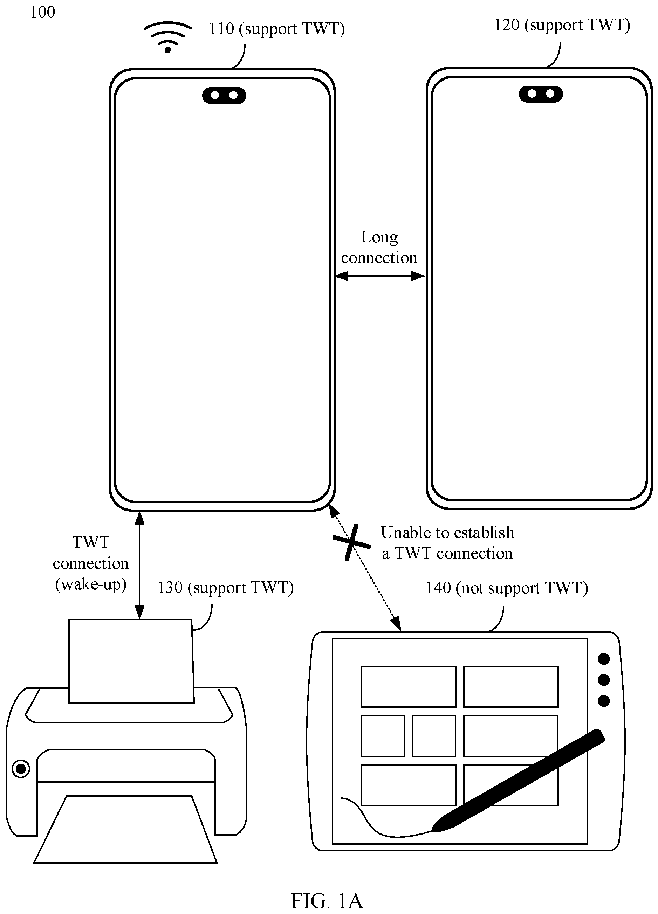

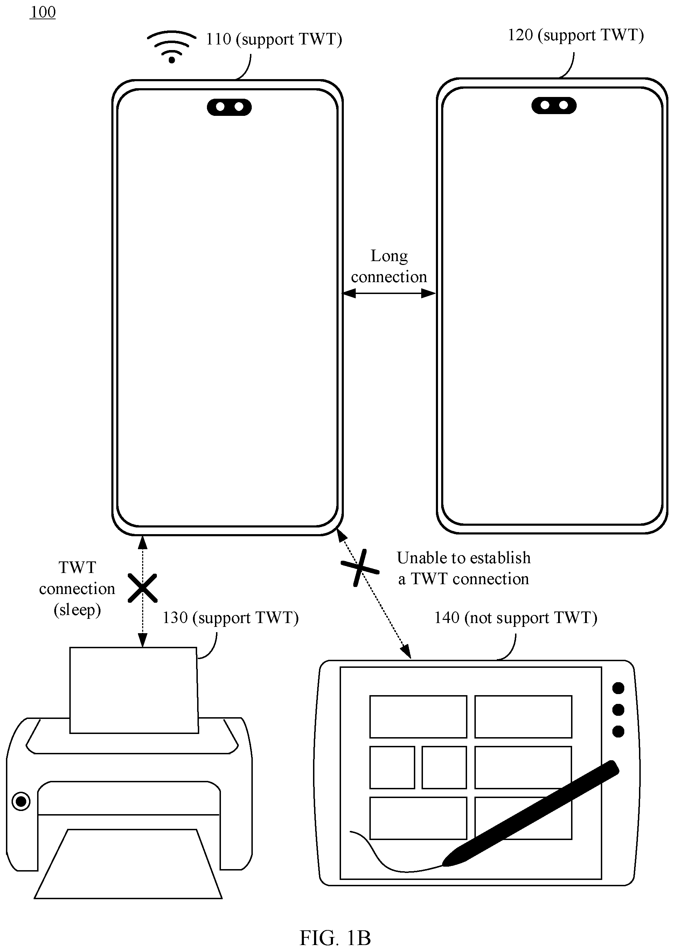

For example, FIG. 1A and FIG. 1B each are a diagram of a WLAN system according to an embodiment of this application.

The WLAN system may include one or more basic service sets (basic service set, BSS). As shown in FIG. 1A and FIG. 1B, the WLAN includes one BSS 100. The BSS 100 indicates a set of apparatuses that communicate with each other within coverage of one AP device. The BSS 100 may include an AP device (for example, an electronic device 110) and a plurality of STA devices (for example, a terminal device 120, a terminal device 130, and a terminal device 140) connected to the AP device.

The AP device is an entity that provides access of wireless media to a distributed system (DS). In this embodiment of this application, the AP device may also be referred to as a base station wireless communication terminal. The base station wireless communication terminal may be various types of wireless communication terminals that allocate a communication medium (medium) resource and perform scheduling (scheduling) in communication with a plurality of wireless communication terminals. In an example, the AP device may be a terminal device such as a mobile phone (mobile phone), a personal computer (personal computer, PC), or a tablet computer (Pad). In another example, the AP device may be a central controller, a base station (base station, BS), a NodeB, a base transceiver system (base transceiver system, BTS), a station controller, or the like. A specific type of the AP device is not specifically limited in this application, and may be determined according to an actual use requirement.

The STA device may be a device that conforms to an IEEE 802.11 standard medium access control (medium access control, MAC) and that is configured for predetermining of a physical layer (physical layer) interface to a wireless medium. In this embodiment of this application, the STA device may be a wearable device, a virtual reality (virtual reality, VR) device, an augmented reality (augmented reality, AR) device, a wireless terminal in a smart city (smart city), a wireless terminal in a smart home (smart home), or the like. In an example, the AP device and the STA device may be devices of a same type. For example, both the AP device and the STA device are mobile phones. In another example, the AP device and the STA device may be different types of devices. For example, the AP device is a mobile phone, and the STA device is a PC.

In some embodiments, the AP device supports a TWT capability; and the STA device may support the TWT capability, or may not support the TWT capability. As shown in FIG. 1A and FIG. 1B, the electronic device 110, the terminal device 120, and the terminal device 130 may support the TWT capability, and the terminal device 140 may not support the TWT capability.

For the electronic device 110 and the terminal device 120, although both the electronic device 110 and the terminal device 120 support the TWT capability, because the terminal device 120 needs to continuously access the Internet by using the electronic device 110, the electronic device 110 and the terminal device 120 may establish a long connection based on the WLAN technology. In other words, the WLAN connection between the electronic device 110 and the terminal device 120 has a wake-up state only and does not have a sleep state.

For the electronic device 110 and the terminal device 130, based on power consumption limitation of the terminal device 130, a TWT connection may be established between the electronic device 110 and the terminal device 120. As shown in FIG. 1A, the terminal device 130 is in a wake-up state in some time periods, and the electronic device 110 and the terminal device 130 may exchange data. As shown in FIG. 1B, the terminal device 130 is in a sleep state in other time periods, and the electronic device 110 and the terminal device 130 cannot exchange data.

For the electronic device 110 and the terminal device 140, when the electronic device 110 enables a hotspot, because the electronic device 110 supports the TWT capability, the electronic device 110 enables a TWT capabilities tag in a beacon frame and a probe response frame (probe response). The probe response frame includes a response message for a probe request frame (probe request) sent by the terminal device 140. The probe request frame is used to scan the available electronic device 110. After a lower layer (for example, Wi-Fi firmware) of the terminal device 140 receives the beacon frame or the probe response frame, the lower layer (for example, a Wi-Fi driver) of the terminal device 140 parses the beacon frame or the probe response frame. If it is found that the electronic device 110 supports the TWT capability, and the terminal device 140 does not support the TWT capability due to an early production year of the Wi-Fi firmware of the terminal device 140 and the like, the Wi-Fi driver of the terminal device 140 determines, according to default code logic, that there is a TWT capability conflict between the electronic device 110 and the terminal device 140, discards parsed content of the electronic device 110, and does not report the parsed content of the electronic device 110 to an upper layer (for example, a Wi-Fi setting module) of the terminal device 140. Therefore, the upper layer of the terminal device 140 cannot obtain the parsed content of the electronic device 110, and the upper layer of the terminal device 140 mistakenly determines that the electronic device 110 is not discovered through scanning. As a result, a connection cannot be established between the electronic device 110 and the terminal device 140.

To avoid a case in which the terminal device 140 cannot discover the electronic device 110 through scanning, the electronic device 110 may disable the TWT capabilities tag in the beacon frame and the probe response frame. When the electronic device 110, as the electronic device 110, enables the hotspot, the electronic device 110 may broadcast the beacon frame according to a periodicity of 100 milliseconds. The TWT capabilities tag is disabled in the beacon frame, to indicate that the electronic device 110 does not support the TWT capability. The terminal device 140 may send a probe request frame. The probe request frame is used to scan the available electronic device 110 (that is, an available WLAN network). After the probe request frame is received, the electronic device 110 returns the probe response frame to the terminal device 140, and the TWT capabilities tag is disabled in the probe response frame, to indicate that the electronic device 110 does not support the TWT capability.

After the probe request frame is sent, if the terminal device 140 preferentially receives the beacon frame, the terminal device 140 parses the beacon frame by using the beacon frame as a scanning result; or if the terminal device 140 preferentially receives the probe response frame, the terminal device 140 parses the probe response frame by using the probe response frame as a scanning result. The lower layer (for example, the Wi-Fi driver) of the terminal device 140 parses the beacon frame or the probe response frame. Although the terminal device 140 does not support the TWT capability, because the electronic device 110 disables the TWT capabilities tag, the Wi-Fi driver of the terminal device 140 determines that there is no logical conflict, and normally reports the parsed content of the electronic device 110 to the upper layer (for example, the Wi-Fi setting module) of the terminal device 140. The upper layer of the terminal device 140 determines that the electronic device 110 is discovered through scanning. This allows establishment of the WLAN connection (that is, the long connection) between the electronic device 110 and the terminal device 140.

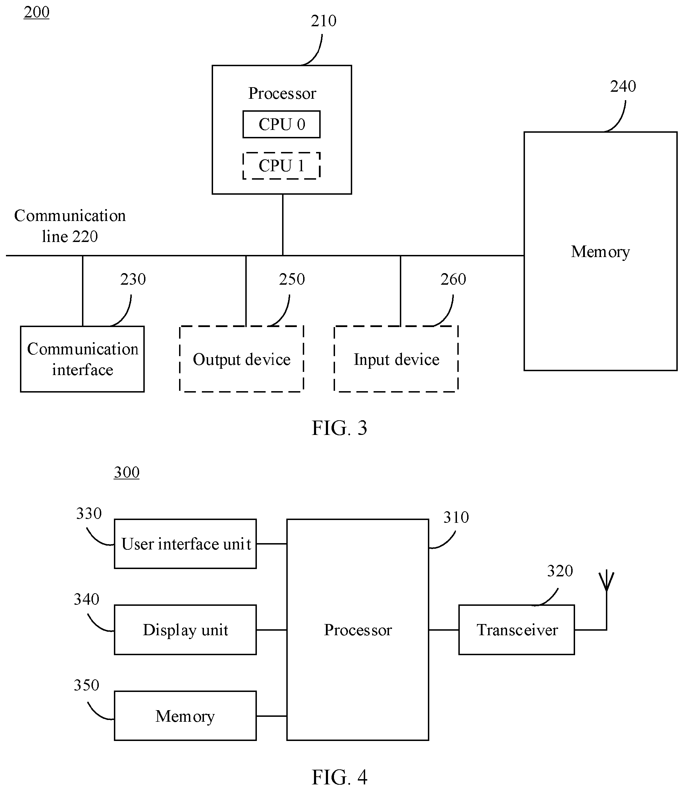

It should be noted that the AP device and the STA device in the foregoing embodiment each may be implemented by an independent device, or each may be a functional module in a device. This is not specifically limited in this embodiment of this application. It may be understood that the foregoing function may be a network element in a hardware device, a software function running on dedicated hardware, a virtualization function instantiated on a platform, or a chip system. In this embodiment of this application, the chip system may include a chip, or may include a chip and another discrete component. In some embodiments, the AP device shown in FIG. 1A and FIG. 1B may have a hardware structure shown in FIG. 3. The STA device shown in FIG. 1A and FIG. 1B may have a hardware structure shown in FIG. 4.

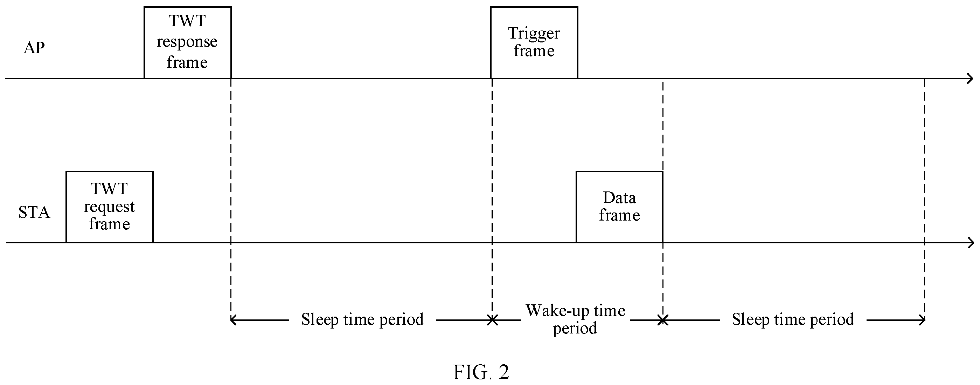

For example, FIG. 2 is a diagram of a TWT working mechanism according to an embodiment of this application.

As shown in FIG. 2, a TWT requesting station (for example, a STA device in a WLAN connection) sends a TWT request frame (TWT request) to a TWT responding station (for example, an AP device in a WLAN connection), and requests to set a wake-up time. After receiving the TWT request frame, the TWT responding station sends a TWT response frame (TWT response) to the TWT requesting station. After interaction between the two parties succeeds, a TWT time schedule is established between the TWT requesting station and the TWT responding station. The TWT time schedule includes a TWT time periodicity. Generally, the TWT time periodicity includes one or more beacon frame (beacon) periodicities. For example, one beacon frame periodicity is 100 milliseconds, and one TWT time periodicity is several minutes, hours, or days. When reaching the time periodicity negotiated between the STA device and the AP device, the STA device wakes up and waits for the trigger frame (trigger) sent by the AP device, and then both parties exchange data frames. After each time of transmission is completed, the STA device returns to the sleep state. In addition, the AP device may group a terminal device based on a specified TWT time periodicity, and connect to a plurality of terminals at a time, to improve energy saving efficiency.

For example, FIG. 3 is a diagram of a hardware structure of an AP device 200 according to an embodiment of this application.

The AP device 200 may be an AP device. As shown in FIG. 3, the AP device 200 includes at least one processor 210, a communication line 220, at least one communication interface 230, and a memory 240. The processor 210, the memory 240, and the communication interface 230 may be connected through the communication line 220. In this embodiment of this application, at least one may be one, two, three, or more.

The processor 210 may be a central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. The processor may alternatively be any other apparatus having a processing function, for example, a circuit, a component, or a software module. In an example, the AP device 200 may further include Wi-Fi firmware, and the processor 210 may indicate the Wi-Fi firmware to disable a TWT capabilities tag.

The communication line 220 may include a path for transmitting information between components included in the AP device 200.

The communication interface 230 may be configured to communicate with another device or a communication network (for example, a STA device or the Ethernet). The communication interface 230 may be a module, a circuit, a transceiver, or any apparatus that can implement communication. In an example, the communication interface 230 may be configured to: send a beacon frame and a probe response frame, and receive a probe request frame from a STA device.

The memory 240 may be a read-only memory (read-only memory, ROM), another type of static storage device that can store static information and/or instructions, a random access memory (random access memory, RAM), another type of dynamic storage device that can store information and/or instructions, an electrically erasable programmable read-only memory (electrically erasable programmable read-only memory, EEPROM), a compact disc read-only memory (compact disc read-only memory, CD-ROM), another compact disc storage, optical disc storage (including compressed optical discs, laser discs, optical discs, digital versatile optical discs, and Blu-ray discs), a magnetic disk storage medium, another magnetic storage device, or any another medium that can be used to carry or store expected program code in a form of an instruction or a data structure and that is accessible by a computer.

In an implementable manner, the memory 240 may exist independently of the processor 210, that is, the memory 240 may be a memory external to the processor 210. In this case, the memory 240 may be connected to the processor 210 through the communication line 220, and may be configured to store instructions or program code. When invoking and executing the instructions or the program code stored in the memory 240, the processor 210 can implement the TWT capability adjustment method provided in the following embodiments of this application. In another possible design, the memory 240 may also be integrated with the processor 210, that is, the memory 240 may be an internal memory of the processor 210. For example, the memory 240 is a cache, and may be configured to temporarily store some data and/or instruction information.

In an implementable manner, the processor 210 may include one or more CPUs such as a CPU 0 and a CPU 1 in FIG. 3. In another implementable manner, the AP device 200 may include a plurality of processors. In still another implementable manner, the AP device 200 may further include an output device 250 and an input device 260. For example, the input device 260 may be a device such as a keyboard, a mouse, a microphone, or a joystick, and the output device 250 may be a device such as a display or a speaker (speaker).

It should be noted that the AP device 200 may be a general-purpose device or a dedicated device. For example, the AP device 200 may be a desktop computer, a portable computer, a network server, a mobile phone, a tablet computer, a wireless terminal, an embedded device, a chip system, or a device having a similar structure in FIG. 3.

For example, FIG. 4 is another diagram of a hardware structure of a STA device 300 according to an embodiment of this application.

As shown in FIG. 4, the STA device 300 may include a processor 310, a transceiver 320, a user interface unit 330, a display unit 340, and a memory 350.

The transceiver 320 is configured to send and receive radio signals, for example, send a probe request frame and receive a probe response frame. In an example, the transceiver 320 may include at least one communication module using different frequency bands, for example, Wi-Fi firmware and a Bluetooth module. According to performance and a requirement of the STA device 300, the transceiver 320 may use only one communication module at a time, or use a plurality of communication modules. When the STA device 300 includes a plurality of communication modules, each communication module may be implemented by using an independent element, or a plurality of modules may be integrated into one chip.

The user interface unit 330 includes various types of input/output apparatuses provided in the STA device 300. The user interface unit 330 may receive user input by using various input apparatuses, and the processor 310 may control the STA device 300 based on the received user input, for example, search for an available hotspot in response to user's input to a touch screen.

The display unit 340 is configured to output an image on a display. The display unit 340 may output various display objects based on a control command of the processor 310, for example, display an identifier of a discovered personal hotspot. In addition, the memory 350 stores control programs and various data used in the STA device 300. The control program may include an access program required by the STA device 300 to access the AP device.

The processor 310 may execute various commands or programs, and process data in the STA device 300. In addition, the processor 310 may control each unit of the STA device 300, and control data transmission or reception in the unit. In an example, the processor 310 may execute a program stored in the memory 350 for accessing the AP device, and receive a message transmitted by the AP device, for example, a probe response frame. The processor 310 may be a modem configured to modulate a radio signal sent to the transceiver 320 and demodulate a radio signal received from the transceiver 320.

In an implementable manner, elements in the STA device 300 shown in FIG. 4 may be designed and installed in a single chip or a plurality of chips according to a requirement. For example, the processor 310 and the transceiver 320 may be implemented when being integrated into a single chip, or implemented as separate chips. In addition, in this embodiment of this application, some components of the STA device 300, such as the user interface unit 330 and the display unit 340, may be selectively provided in the STA device 300.

The following describes an application scenario of the TWT capability management method provided in this application, by using an example in which a mobile phone 1 that supports a TWT capability is an AP device and a mobile phone 2 that does not support the TWT capability is a STA device.

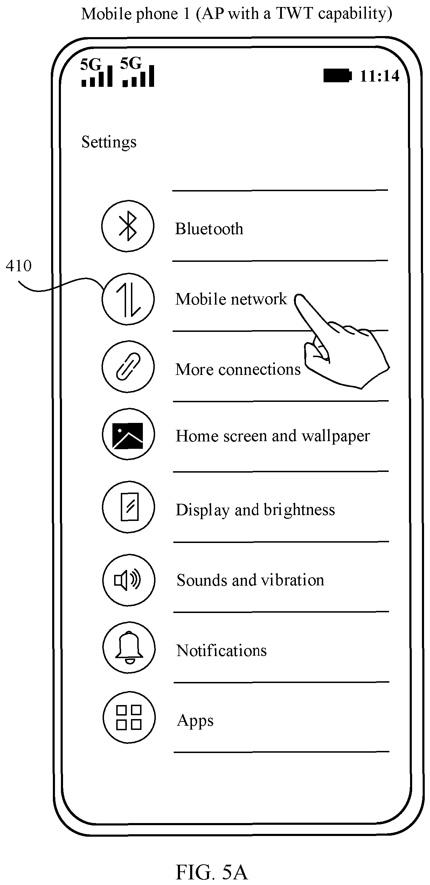

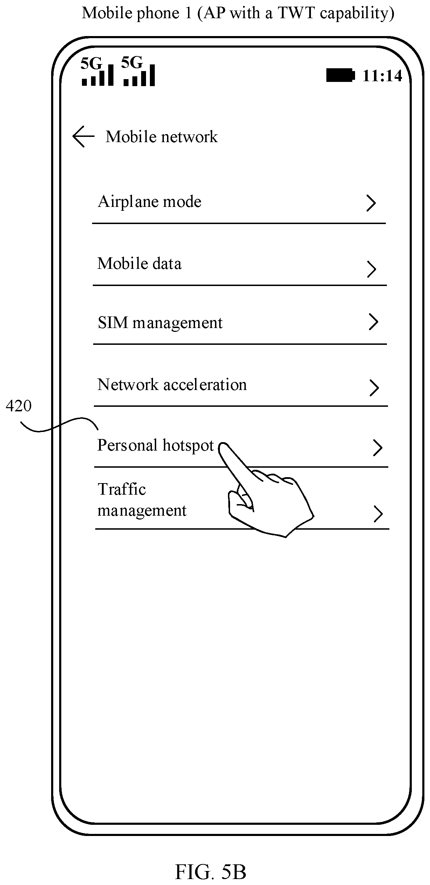

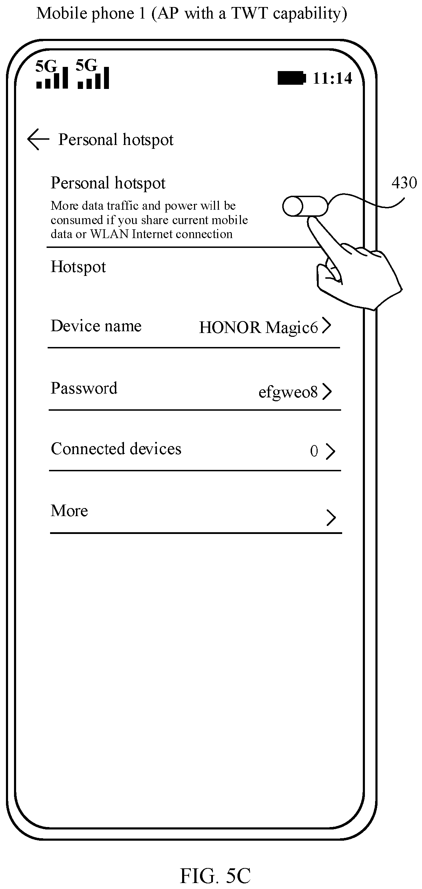

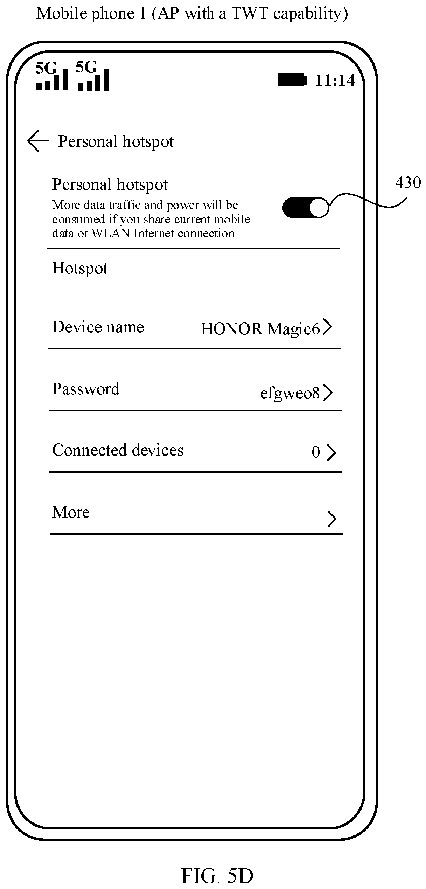

For example, FIG. 5A, FIG. 5B, FIG. 5C, and FIG. 5D are a diagram of a scenario in which a hotspot of a mobile phone 1 is enabled according to an embodiment of this application.

When the mobile phone 2 is in arrears or mobile data traffic is limited, a user may enable a hotspot of the mobile phone 1, so that the mobile phone 2 can access the Internet by using mobile data or a WLAN network of the mobile phone 1. As shown in FIG. 5A, a settings interface of the mobile phone 1 may include setting options such as Bluetooth, Mobile network 410, More connections, and Home screen and wallpaper. The user may tap the mobile network 410. In response to the tap operation performed by the user on the mobile network 410, the mobile phone 1 displays the mobile network setting interface shown in FIG. 5B. The mobile network setting interface may include network setting options such as Airplane mode, Mobile data, SIM management, Network acceleration, Personal hotspot 420, and Traffic management. The user may tap Personal hotspot 420, so that the mobile phone 1 displays a personal hotspot setting interface shown in FIG. 5C. The personal hotspot setting interface may include a personal hotspot switch 430. In an example, in a default case, the personal hotspot switch 430 is in an off state shown in FIG. 5C. The user may trigger, through a rightward slide operation performed on a circular control of the personal hotspot switch 430, the personal hotspot switch 430 to be switched to an on state shown in FIG. 5D. In another example, the user may alternatively trigger, through a leftward slide operation performed on the circular control of the personal hotspot switch 430 shown in FIG. 5D, the personal hotspot switch 430 to be switched to the off state shown in FIG. 5C.

In addition, the user may alternatively perform the following settings on Personal hotspot in the personal hotspot setting interface according to a personal requirement: 1. Tap Device name to set a unique name for Personal hotspot, to help another user identify the mobile phone 1. For example, a device name of the mobile phone 1 is "HONOR Magic6". 2. Tap Password to modify a password for Personal hotspot. For example, a password of the personal hotspot of the mobile phone 1 is "efgweo8". 3. Tap Connected devices to view a connected-device list and a block list. 4. Tap More to set a single traffic limit and an AP frequency band of the hotspot.

In an implementable manner, after the user completes an initial setting operation on the AP hotspot, the user may further enable or disable the personal hotspot by using another entry. For example, the user may trigger, through a pull-down operation at the top of the screen, the mobile phone 1 to display a pull-down menu. The pull-down menu includes a personal hotspot switch. In this way, the user can trigger, through an operation performed on the personal hotspot switch, the mobile phone 1 to enable or disable the personal hotspot.

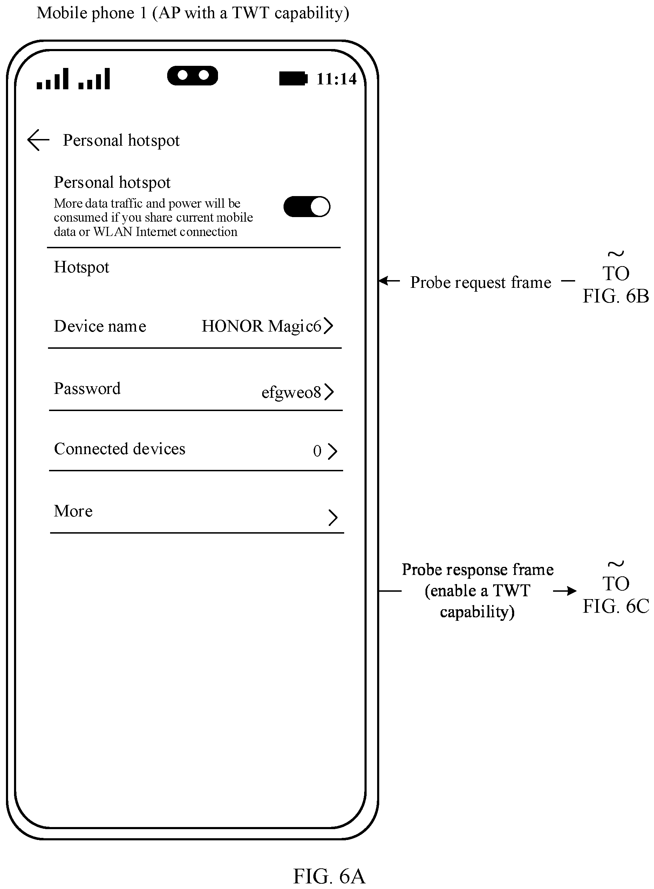

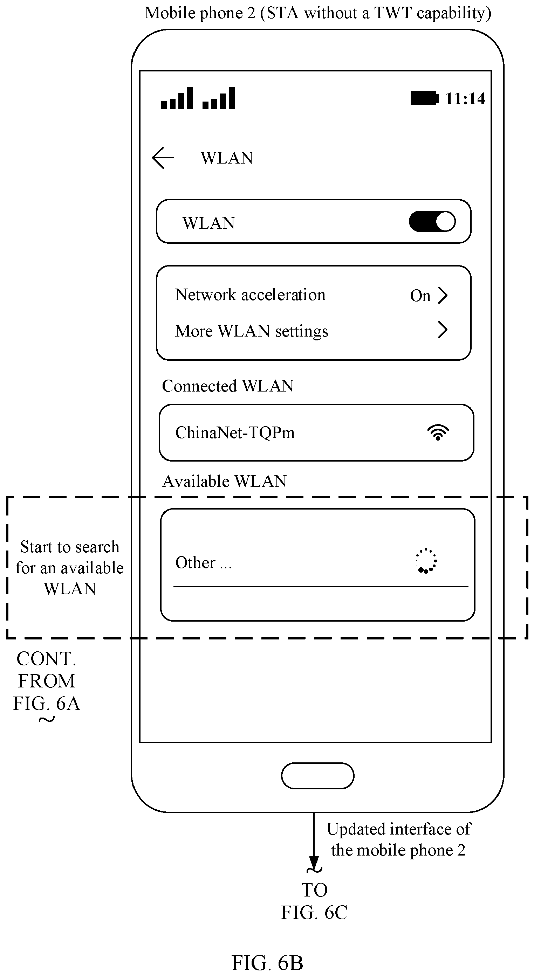

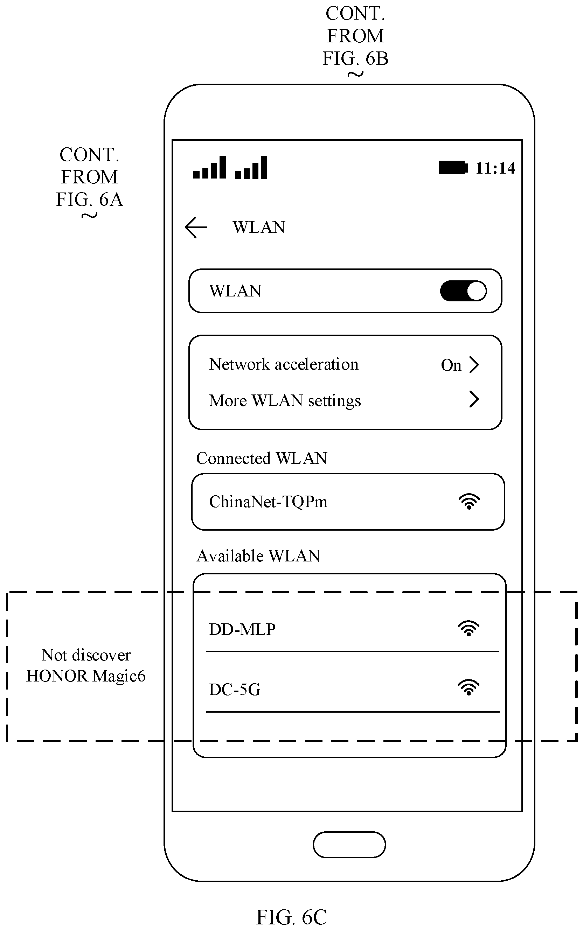

For example, FIG. 6A, FIG. 6B, and FIG. 6C are a diagram of a scenario in which the mobile phone 2 does not discover the mobile phone 1 after the mobile phone 1 enables the hotspot and if the mobile phone 1 enables the TWT capability according to an embodiment of this application.

As shown in FIG. 6A, FIG. 6B, and FIG. 6C, the user may open a WLAN interface of the mobile phone 2, and the mobile phone 2 starts to search for a nearby available WLAN network. For example, the mobile phone 2 may broadcast a probe request frame. The probe request frame is used to scan an available WLAN network. For example, the mobile phone 1 receives the probe request frame. The mobile phone 1 returns a probe response frame to the mobile phone 2. The probe response frame indicates that the mobile phone 1 supports the TWT capability. After a lower layer (for example, Wi-Fi firmware) of the mobile phone 2 receives the probe response frame, the lower layer (for example, a Wi-Fi driver) of the mobile phone 2 parses the probe response frame. If the mobile phone 2 finds that the mobile phone 1 supports the TWT capability but the mobile phone 2 does not support the TWT capability, due to a reason such as an old Wi-Fi firmware model of the mobile phone 2, the Wi-Fi driver of the mobile phone 2 may discard parsed content of the mobile phone 1, and does not report the parsed content of the mobile phone 1 to an upper layer (for example, a Wi-Fi setting module) of the mobile phone 2. Therefore, the upper layer of the mobile phone 2 cannot obtain the parsed content of the mobile phone 1, and consequently, the upper layer of the mobile phone 2 mistakenly determines that the mobile phone 1 is not discovered through scanning. As a result, the device name "HONOR Magic6" of the mobile phone 1 is not included in an available WLAN list obtained through scanning, and therefore, a WLAN connection cannot be established between the mobile phone 1 and the mobile phone 2.

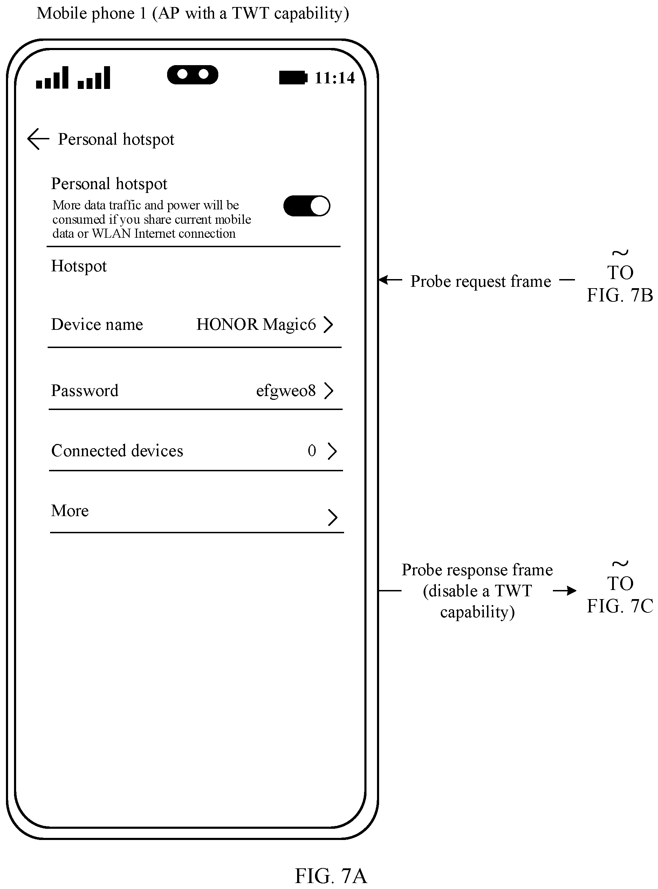

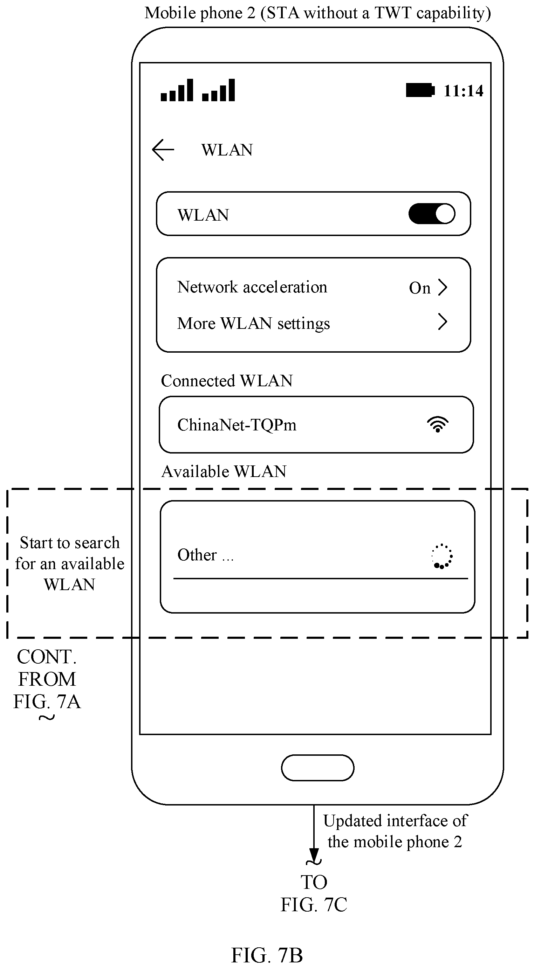

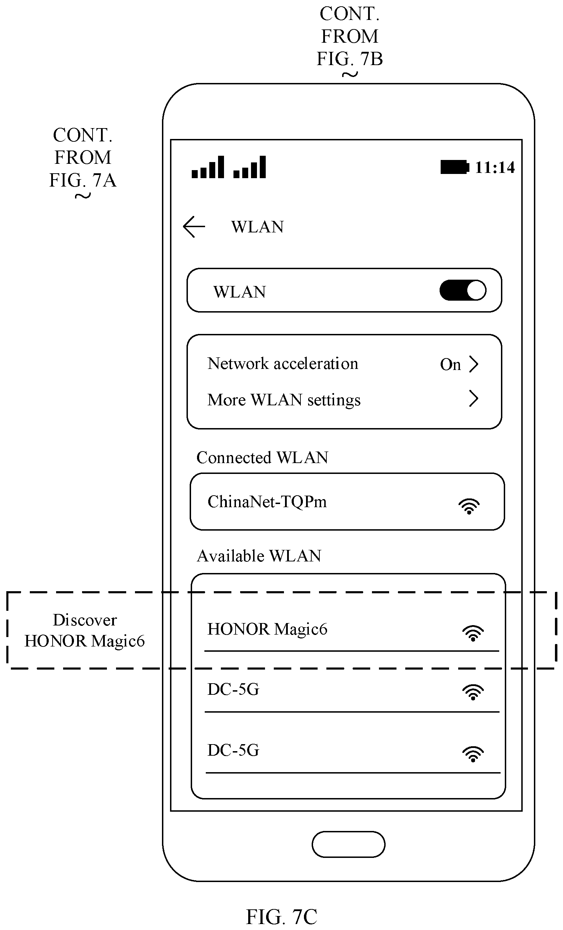

For example, FIG. 7A, FIG. 7B, and FIG. 7C are a diagram of a scenario in which the mobile phone 2 discovers the mobile phone 1 after the mobile phone 1 enables the hotspot and if the mobile phone 1 disables the TWT capability according to an embodiment of this application.

As shown in FIG. 7A, FIG. 7B, and FIG. 7C, the user may open a WLAN interface of the mobile phone 2, and the mobile phone 2 starts to search for a nearby available WLAN network. For example, the mobile phone 2 may broadcast a probe request frame. The probe request frame is used to scan an available WLAN network. For example, the mobile phone 1 receives the probe request frame. The mobile phone 1 returns a probe response frame to the mobile phone 2. The probe response frame indicates that the mobile phone 1 does not support the TWT capability. After a lower layer (for example, Wi-Fi firmware) of the mobile phone 2 receives the probe response frame, the lower layer of the mobile phone 2 parses the probe response frame, and determines that the mobile phone 1 does not support the TWT capability. Although the mobile phone 2 does not support the TWT capability due to a reason such as an early production year of the Wi-Fi firmware (for example, a Wi-Fi driver) of the mobile phone 2, because the mobile phone 1 disables a TWT capabilities tag, the Wi-Fi driver of the mobile phone 2 determines that there is no logical conflict, and normally reports parsed content of the mobile phone 1 to an upper layer (for example, a Wi-Fi setting module) of the mobile phone 2. The parsed content includes the device name "HONOR Magic6" of the mobile phone 1. The upper layer of the mobile phone 2 determines that the mobile phone 1 is discovered through scanning. Therefore, a scanned available WLAN list includes the device name "HONOR Magic6" of the mobile phone 1, that is, a WLAN connection is allowed to be established between the mobile phone 1 and the mobile phone 2. Further, the user may tap the device name "HONOR Magic6" on the mobile phone 2, so that the mobile phone 2 attempts to establish the WLAN connection to the mobile phone 1.

The following describes a software system of an electronic device by using an example. The electronic device may be an AP device, or may be a STA device. The software system of the electronic device may use a layered architecture, an event-driven architecture, a micro-core architecture, and a micro-service architecture. In this embodiment of this application, an Android (Android) system with a layered architecture is used as an example to illustrate the software system architecture of the electronic device.

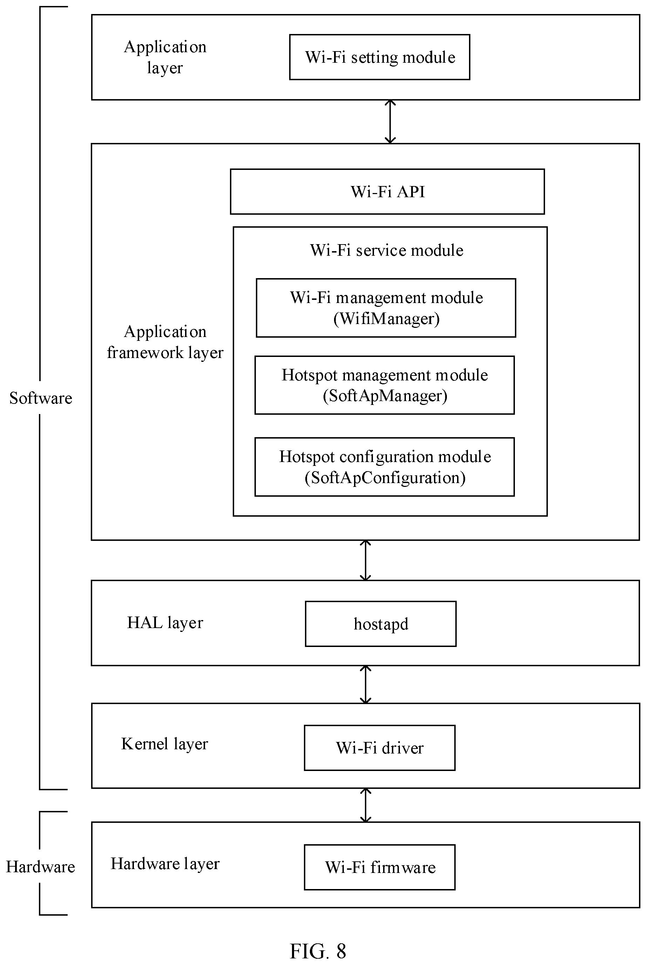

For example, FIG. 8 is a diagram of an architecture of an electronic device according to an embodiment of this application.

As shown in FIG. 8, the electronic device may use a layered architecture in which software is divided into several layers and each layer has a clear role and task. The layers communicate with each other through a software interface. In some embodiments, a software structure is sequentially divided into software layers from top to bottom: an application (application, APP) layer, an application framework (framework, FWK) layer, a hardware abstraction layer (HAL), and a kernel (kernel) layer. The software architecture runs on the hardware layer, and the hardware layer may include Wi-Fi firmware and the like. The Wi-Fi firmware may be understood as a program set stored in a Wi-Fi chip, and is used to implement the following functions in the Wi-Fi chip: 1. Implement interconnection of networks such as IP, TCP, UDP, and ICMP. 2. Receive and send data packets, and perform various processing functions such as data packet filtering, reusing, encryption, compression, and protective wall. 3. Select a next transmission destination of a data packet based on information about a routing table. 4. Exchange topology information between an external gateway protocol and another autonomous domain. 5. Implement functions such as network management and system support.

The application layer, also referred to as an app layer, may include a series of application packages. For example, the application layer may include a Wi-Fi setting module. The Wi-Fi setting module provides a user experience (user experience, UX) interface, and is used to: in response to a touch operation performed by a user on the UX interface, perform a corresponding Wi-Fi setting operation, for example, enable a hotspot, set a device name of the hotspot, set a hotspot password, view a connected-device list and a blocklist, and set a single traffic limit and an AP frequency band of the hotspot.

The application framework layer provides an application programming interface (application programming interface, API) and a programming framework for applications at the application layer. The application framework layer includes some predefined functions. For example, the application framework layer may include a Wi-Fi API and a Wi-Fi service module. When the Wi-Fi setting module runs, the Wi-Fi service module may be accessed by using the Wi-Fi API, and a corresponding Wi-Fi service is executed. The Wi-Fi service module may include a Wi-Fi management module (WifiManager), a hotspot management module (SoftApManager), and a hotspot configuration module (SoftApConfiguration). The Wi-Fi management module (WifiManager) is a class used to manage Wi-Fi, for example, scanning a network, enabling a network, disabling a network, obtaining a network status, and monitoring a network signal. The hotspot management module (SoftApManager) is a class responsible for hotspot management, for example, enabling/disabling a hotspot, obtaining a current hotspot status, modifying a hotspot name and password, obtaining a hotspot name and password, registration, unregistration, and monitoring a hotspot status. SoftApConfiguration is a class used to configure a network parameter.

The hardware abstraction layer has a standard interface implemented by a hardware vendor. For example, the hardware abstraction layer may include a hosted access point daemon (hosted access point daemon, hostapd) process. Herein, hostapd is a daemon process running in a user mode; and hostapd can read a configuration file from SoftApConfiguration, enable a wireless network card to be switched to a master (master) mode, simulate an AP function, serve as an authentication server of an AP, and be responsible for controlling and managing access and authentication of a STA.

The kernel layer is a layer between hardware and software, and is a bottom part of the Android system. The kernel layer may include various driver (drivers) interfaces, for example, a Wi-Fi driver.

It should be noted that although the Android system is used as an example for description in this embodiment of this application, a basic principle of the Android system is also applicable to an electronic device based on an operating system such as iOS or Windows. In addition, the layers in the system architecture shown in FIG. 8 and the components included in each layer do not constitute specific limitation on the electronic device. In some other embodiments, the electronic device may include more or fewer layers than those shown in the figure, and each layer may include more or fewer components. This is not limited in this application.

It may be understood that, to implement the TWT capability management method in embodiments of this application, the electronic device includes corresponding hardware and/or software modules for performing various functions. Algorithm steps in the examples described with reference to the embodiments disclosed in this specification can be implemented by hardware or a combination of hardware and computer software in this application. Whether a function is performed by hardware or computer software driving hardware depends on particular applications and design constraints of the technical solutions. A person skilled in the art may use different methods to implement the described functions with reference to embodiments for each particular application.

The following specifically describes a specific interaction process between the first electronic device and the terminal device with reference to several embodiments by using an example in which the system architecture shown in FIG. 8 is a system architecture of the first electronic device. The first electronic device is an AP device, and the terminal device is a STA device. The first electronic device may include a Wi-Fi setting module, a Wi-Fi service module, hostapd, a Wi-Fi driver, Wi-Fi firmware, and the like.

### Embodiment 1

In Embodiment 1, a first electronic device is an AP device that supports a TWT capability, and a terminal device is a STA device that does not support the TWT capability. When the first electronic device enables a hotspot, the first electronic device directly disables the TWT capability.

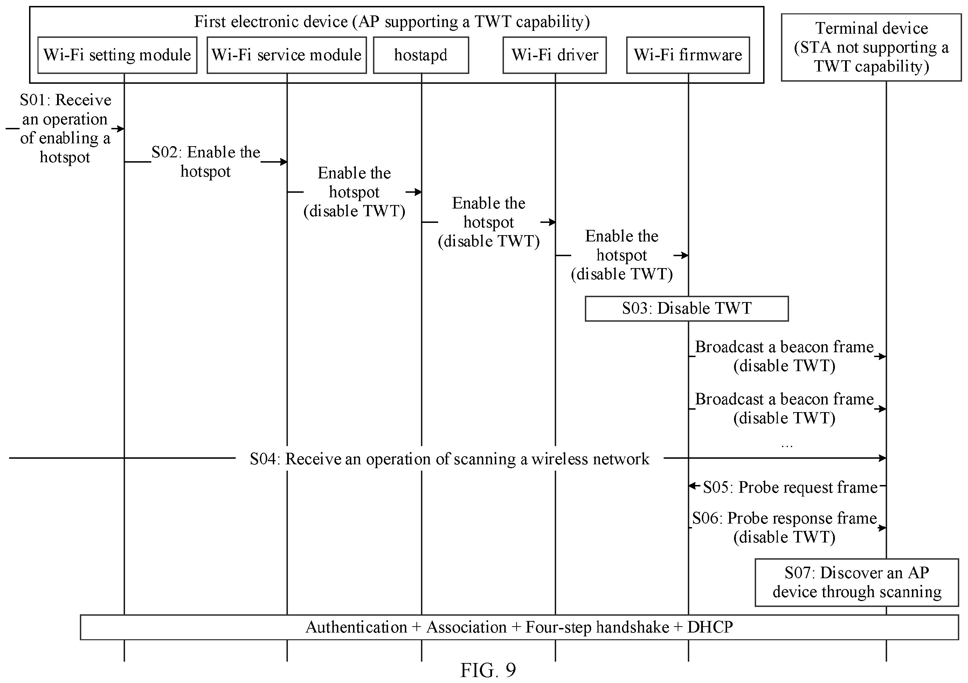

For example, FIG. 9 is a flowchart of a TWT capability management method according to an embodiment of this application.

S01: A Wi-Fi setting module of the first electronic device receives an operation (which may be referred to as a first operation) that is of enabling a hotspot and that is input by a user.

When the terminal device is in arrears or mobile data traffic is limited, the user may enable the hotspot of the first electronic device, so that the terminal device can access the Internet by using mobile data or a WLAN network of the first electronic device. The first electronic device, as an AP, provides a network service for the terminal device.

The Wi-Fi setting module of the first electronic device provides a plurality of UX interfaces as an entry for enabling the hotspot. For example, the first electronic device is the mobile phone 1 shown in FIG. 5A, FIG. 5B, FIG. 5C, and FIG. 5D, or FIG. 7A, FIG. 7B, and FIG. 7C. For example, the user may trigger, through an operation performed on the personal hotspot switch in the personal hotspot setting interface of the mobile phone 1, the mobile phone 1 to enable the hotspot. For another example, the user may trigger, through an operation performed on the personal hotspot switch in the drop-down menu of the mobile phone 1, the mobile phone 1 to enable the hotspot.

S02: The Wi-Fi setting module of the first electronic device indicates, by using a Wi-Fi API interface (not shown in FIG. 9), a Wi-Fi service module to enable the hotspot. The Wi-Fi service module invokes hostapd to enable the hotspot, and hostapd controls, by using a Wi-Fi driver, Wi-Fi firmware to enable the hotspot.

In an implementable manner, as shown in FIG. 8, the Wi-Fi service module may include a Wi-Fi management module (WifiManager), a hotspot management module (SoftApManager), and a hotspot configuration module (SoftApConfiguration). Specifically, the Wi-Fi management module (WifiManager) may indicate the hotspot management module (SoftApManager) to enable the hotspot, and the Wi-Fi management module (WifiManager) may indicate the hotspot configuration module (SoftApConfiguration) to configure a network parameter. After the hotspot configuration module (SoftApConfiguration) configures the network parameter, the hotspot configuration module (SoftApConfiguration) transmits the configured network parameter to the hotspot configuration module (SoftApConfiguration). The hotspot management module (SoftApManager) indicates hostapd to enable the hotspot, and transmits the configured network parameter to hostapd; and hostapd controls, by using the Wi-Fi driver, the Wi-Fi firmware to enable the hotspot, and transmits the configured network parameter to the Wi-Fi firmware by using the Wi-Fi driver. The Wi-Fi firmware stores the configured network parameter.

For example, the hotspot configuration module (SoftApConfiguration) may configure at least one of the following network parameters: a frequency band, a bandwidth, a channel, an encryption manner, a TWT capability parameter, a beacon frame port (beacon_port), operating channel validation (operating channel validation, OCV), a service set identifier (service set identifier, SSID), whether a beamforming feature/function is supported, a MAC address, a country code, whether the hotspot is a hidden hotspot, and the like.

It should be noted that a TWT capability parameter that is configured on the first electronic device and that indicates that "the first electronic device does not support the TWT capability" in Embodiment 1 is different from a TWT capability parameter that is configured on an electronic device that supports the TWT capability and that indicates that "the first electronic device supports the TWT capability", and is equivalent to disabling of the TWT capability of the first electronic device.

S03: The Wi-Fi firmware enables the hotspot and disables the TWT capability when the hotspot is enabled.

After the Wi-Fi firmware enables the hotspot, the first electronic device generates a beacon frame based on the configured network parameter, and periodically broadcasts the beacon frame (which may be referred to as a first beacon frame) by using the Wi-Fi firmware. The first beacon frame indicates that the first electronic device does not support the TWT capability, that is, the TWT capability of the first electronic device is disabled.

After the hotspot is enabled, the first electronic device may generate the beacon frame based on the configured network parameter, and periodically broadcasts the beacon frame according to a preset periodicity (for example, 0.1s) by using the Wi-Fi firmware, to notify the outside of specific performance of a Wi-Fi network. The beacon frame includes a plurality of fields. The fields are used to carry different information. For example, information carried in the beacon frame may include a beacon frame time stamp, a beacon frame periodicity, and beacon frame performance information (for example, a responding manner, a modulation mechanism, whether radio measurement is supported, and whether spectrum management is supported). It should be noted that, different from a beacon frame that is broadcast by an electronic device that supports the TWT capability and that indicates that the device supports the TWT capability, the beacon frame broadcast by the first electronic device in Embodiment 1 indicates that the TWT capability is not supported.

For example, a Wi-Fi version enabled on the first electronic device may be any one of the following:
a 7th generation wireless network technology Wi-Fi7;
a 6th generation wireless network technology Wi-Fi6;
a 5th generation wireless network technology Wi-Fi5; and
a 4th generation wireless network technology Wi-Fi4.

If the Wi-Fi version enabled on the first electronic device is Wi-Fi7, the beacon frame broadcast by the first electronic device includes an extremely high throughput (extremely high throughput, EHT) capabilities tag, a high efficiency (high efficiency, HE) capabilities tag, a very high throughput (very high throughput, VHT) capabilities tag, a high throughput (high throughput, HT) capabilities tag, and an extended (extended) capabilities tag. The EHT capabilities tag, the HE capabilities tag, the VHT capabilities tag, and the HT capabilities tag do not include the TWT capabilities tag. The extended capabilities tag includes the TWT capabilities tag. The first electronic device may set the TWT capabilities tag in the extended capabilities tag of the beacon frame, to indicate that the first electronic device does not support the TWT capability.

If the Wi-Fi version enabled on the first electronic device is Wi-Fi6, the beacon frame broadcast by the first electronic device includes: an HE capabilities tag, a VHT capabilities tag, an HT capabilities tag, and an extended capabilities tag. The HE capabilities tag, the VHT capabilities tag, and the HT capabilities tag do not include the TWT capabilities tag. The extended capabilities tag includes the TWT capabilities tag. The first electronic device may set the TWT capabilities tag in the extended capabilities tag of the beacon frame, to indicate that the first electronic device does not support the TWT capability.

If the Wi-Fi version enabled on the first electronic device is Wi-Fi5, the beacon frame broadcast by the first electronic device includes: a VHT capabilities tag, an HT capabilities tag, and an extended capabilities tag. The VHT capabilities tag and the HT capabilities tag do not include the TWT capabilities tag. The extended capabilities tag includes the TWT capabilities tag. The first electronic device may set the TWT capabilities tag in the extended capabilities tag of the beacon frame, to indicate that the first electronic device does not support the TWT capability.

If the Wi-Fi version enabled on the first electronic device is Wi-Fi4, the beacon frame broadcast by the first electronic device includes: an HT capabilities tag and an extended capabilities tag. The HT capabilities tag does not include the TWT capabilities tag. The extended capabilities tag includes the TWT capabilities tag. The first electronic device may set the TWT capabilities tag in the extended capabilities tag of the beacon frame, to indicate that the first electronic device does not support the TWT capability.

For example, the Wi-Fi version enabled on the first electronic device is Wi-Fi5. In this case, octet 10 of the extended capabilities tag in the beacon frame is as follows:
Extended Capabilities: 0x40 (octet 10)
.... ...0 //represents a 72^{nd} element (element ID=72) indicating no FILS capability.
.... ..0. //represents a 73^{rd} element (element ID=73) indicating no extended spectrum management function.
.... .0.. //represents a 74^{th} element (element ID=74) indicating that future channel isolation is not supported.
.... 0... //represents a 75^{th} element (element ID=75) indicating pre-association discovery: 0x0.
...0 .... //represents a 76^{th} element (element ID=76) indicating reserved: 0x0.
..0. .... //represents a 77^{th} element (element ID=77) indicating that a TWT requester does not support the TWT capability.
.0.. .... //represents a 78^{th} element (element ID=78) indicating that a TWT responder does not support the TWT capability.
0... .... //represents a 79^{th} element (element ID=79) indicating that an OBSS narrow bandwidth is not supported in OFDMA tolerance.

With reference to the description in the foregoing embodiment, the TWT requester is a STA device (that is, a terminal device), and the TWT responder is an AP device (that is, a first electronic device). The 78^{th} element of the beacon frame may be set to 0 (which may be referred to as first information), to indicate that the first electronic device does not support the TWT capability. This is equivalent to disabling of the TWT capability of the first electronic device.

S04: The terminal device receives an operation that is of scanning a wireless network and that is input by the user.

For example, the terminal device is the mobile phone 2 shown in FIG. 7A, FIG. 7B, and FIG. 7C. In this case, the user may trigger, through an operation performed on the mobile phone 2, the mobile phone to open a WLAN interface, and start to scan a nearby wireless network.

S05: The terminal device sends a probe request frame (which may be referred to as a first probe request frame) based on the operation that is of scanning the wireless network and that is input by the user, to scan an available AP device near the terminal device, that is, an available WLAN network.

Because a production year of the Wi-Fi firmware of the terminal device is early, a capability of the terminal device is low, and the TWT capability is not supported. For example, when the terminal device uses Wi-Fi4 or Wi-Fi5, the terminal device does not support the TWT capability.

The probe request frame may include a specific SSID, a wildcard character, or a null value (null). When an SSID parameter set field is a wildcard character or a null value, the terminal device requests all nearby access points (AP) to reply with all SSIDs by using probe response frames. When an SSID parameter set field is a specific SSID, the terminal device requests a nearby AP to reply with a probe response frame only when the AP supports the SSID.

It should be noted that the probe request frame may carry information indicating whether the STA supports the TWT capability, or may not carry information indicating whether the STA supports the TWT capability. This is not limited in this application.

S06: Wi-Fi firmware of the first electronic device generates a probe response frame (which may be referred to as a first probe response frame) based on the received probe request frame and the stored network parameter, and returns the first probe response frame to the terminal device.

The probe response frame is a directional beacon sent for the terminal device that is scanning the wireless network. The probe response frame indicates that the first electronic device does not support the TWT capability, that is, the TWT capability of the first electronic device is disabled.

It should be noted that different from a probe response frame that is sent by an electronic device supporting the TWT capability and that indicates that the device supports the TWT capability, the probe response frame in Embodiment 1 indicates that the first electronic device does not support the TWT capability.

If the Wi-Fi version enabled on the first electronic device is Wi-Fi7, the beacon frame broadcast by the first electronic device includes: an EHT capabilities tag, an HE capabilities tag, a VHT capabilities tag, an HT capabilities tag, and an extended capabilities tag. The EHT capabilities tag, the HE capabilities tag, the VHT capabilities tag, and the HT capabilities tag do not include the TWT capabilities tag. The extended capabilities tag includes the TWT capabilities tag. The first electronic device may set the TWT capabilities tag in the extended capabilities tag of the probe response frame, to indicate that the first electronic device does not support the TWT capability.

If the Wi-Fi version enabled on the first electronic device is Wi-Fi6, the probe response frame broadcast by the first electronic device includes: an HE capabilities tag, a VHT capabilities tag, an HT capabilities tag, and an extended capabilities tag. The HE capabilities tag, the VHT capabilities tag, and the HT capabilities tag do not include the TWT capabilities tag. The extended capabilities tag includes the TWT capabilities tag. The first electronic device may set the TWT capabilities tag in the extended capabilities tag of the probe response frame, to indicate that the first electronic device does not support the TWT capability.

If the Wi-Fi version enabled on the first electronic device is Wi-Fi5, the probe response frame broadcast by the first electronic device includes: a VHT capabilities tag, an HT capabilities tag, and an extended capabilities tag. The VHT capabilities tag and the HT capabilities tag do not include the TWT capabilities tag. The extended capabilities tag includes the TWT capabilities tag. The first electronic device may set the TWT capabilities tag in the extended capabilities tag of the probe response frame, to indicate that the first electronic device does not support the TWT capability.

If the Wi-Fi version enabled on the first electronic device is Wi-Fi4, the probe response frame broadcast by the first electronic device includes: an HT capabilities tag and an extended capabilities tag. The HT capabilities tag does not include the TWT capabilities tag. The extended capabilities tag includes the TWT capabilities tag. The first electronic device may set the TWT capabilities tag in the extended capabilities tag of the probe response frame, to indicate that the first electronic device does not support the TWT capability.

For example, the Wi-Fi version enabled on the first electronic device is Wi-Fi5. In this case, octet 10 of the extended capabilities tag in the probe response frame is as follows:
Extended Capabilities: 0x40 (octet 10)
.... ...0 //represents a 72^{nd} element (element ID=72) indicating no FILS capability.
.... ..0. //represents a 73^{rd} element (element ID=73) indicating no extended spectrum management function.
.... .0.. //represents a 74^{th} element (element ID=74) indicating that future channel isolation is not supported.
.... 0... //represents a 75^{th} element (element ID=75) indicating pre-association discovery: 0x0.
...0 .... //represents a 76^{th} element (element ID=76) indicating reserved: 0x0.
..0. .... //represents a 77^{th} element (element ID=77) indicating that a TWT requester does not support the TWT capability.
.0.. .... //represents a 78^{th} element (element ID=78) indicating that a TWT responder does not support the TWT capability.
0... .... //represents a 79^{th} element (element ID=79) indicating that an OBSS narrow bandwidth is not supported in OFDMA tolerance.

With reference to the description in the foregoing embodiment, the 78^{th} element of the probe response frame may be set to 0 (which may be referred to as first information), to indicate that the first electronic device does not support the TWT capability. This is equivalent to disabling of the TWT capability of the first electronic device.

S07: The terminal device parses the received probe response frame, and determines, based on parsed content, that the AP device (that is, the first electronic device) is discovered through scanning.

For example, the first electronic device is the mobile phone 1, and the terminal device is the mobile phone 2. After the mobile phone 2 discovers the mobile phone 1 through scanning, as shown in FIG. 7A, FIG. 7B, and FIG. 7C, the available WLAN list displayed on the mobile phone 2 includes the device name "HONOR Magic6" of the mobile phone 1. Then, the mobile phone 1 and the mobile phone 2 may further perform operations such as authentication, association, four-step handshake, and establishment of a dynamic host configuration protocol (dynamic host configuration protocol, DHCP). For details, refer to the description in the following embodiments. Details are not described herein.

With reference to the description in the foregoing embodiment, after the terminal device receives the probe response frame from the first electronic device, the terminal device may parse the probe response frame. If the parsed content is that the first electronic device supports the TWT capability, a Wi-Fi driver of the terminal device determines, according to default code logic, that there is a TWT capability conflict between the first electronic device and the terminal device, discards the parsed content, and does not report the parsed content to an upper layer (for example, a Wi-Fi setting module) of the terminal device. Therefore, the upper layer of the terminal device cannot obtain the parsed content, and the upper layer of the STA device mistakenly determines that the AP device is not discovered through scanning. In Embodiment 1, by disabling the TWT capability, the first electronic device may change the parsed content obtained by the terminal device into that the first electronic device does not support the TWT capability. In this way, the Wi-Fi driver of the terminal device determines that there is no logical conflict, and normally reports the parsed content to the upper layer (for example, the Wi-Fi setting module) of the terminal device. Therefore, the first electronic device is discovered through scanning.

It should be noted that Embodiment 1 is described by using an example in which the terminal device determines, based on the parsed content of the probe response frame, that the first electronic device is discovered through scanning. This constitutes no limitation on this application. With reference to the description of S03 and S06, because both the beacon frame and the probe response frame that are sent by the first electronic device carry the element that indicates that the first electronic device does not support the TWT capability, the terminal device may determine, based on the beacon frame, that the first electronic device does not support the TWT capability, or may determine, based on the probe response frame, that the first electronic device does not support the TWT capability.

In an implementable manner, after S05, if the terminal device first receives the beacon frame from the first electronic device, the terminal device may determine, based on the beacon frame, that the first electronic device does not support the TWT capability. After S05, if the terminal device first receives the probe response frame from the first electronic device, the terminal device may determine, based on the probe response frame, that the first electronic device does not support the TWT capability.

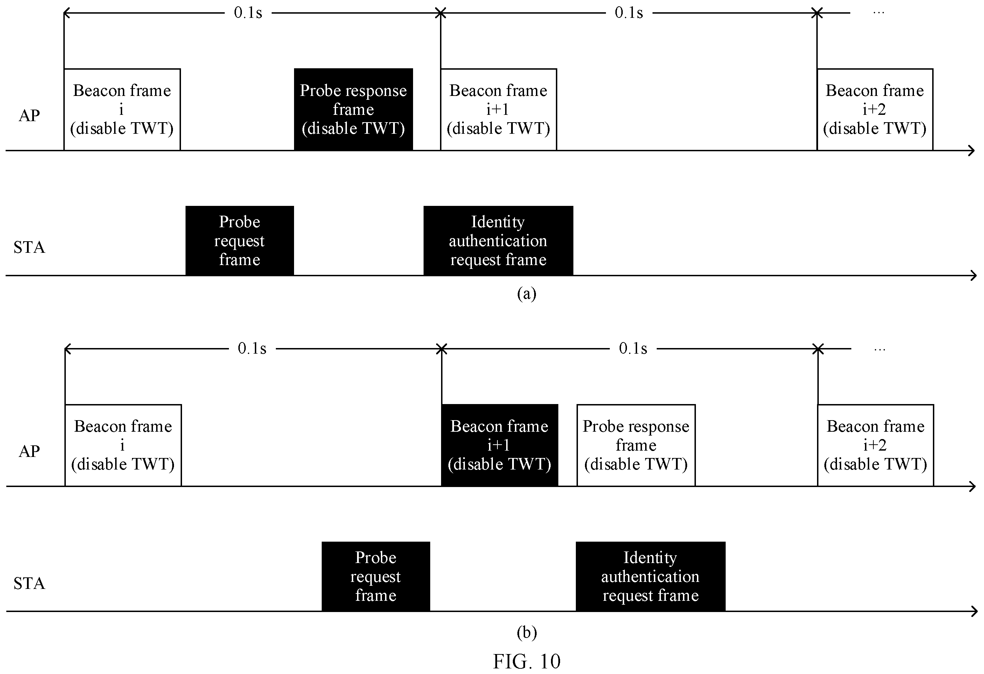

For example, FIG. 10 is a diagram 1 of a scenario in which a STA scans an AP according to an embodiment of this application.

The AP supports a TWT capability, and the STA does not support the TWT capability.

As shown in (a) in FIG. 10, after a hotspot is enabled, the AP may broadcast a beacon frame according to a beacon periodicity of 0.1s, for example, a beacon frame i, a beacon frame i+1, and a beacon frame i+2. Each beacon frame indicates that the AP does not support the TWT capability, that is, the TWT capability of the AP is disabled. After the AP receives a probe request frame sent by the STA, the AP first sends a probe response frame, and then sends the beacon frame i+1, so that the STA first receives a probe response frame. In this case, the STA may parse the probe response frame to determine that the AP does not support the TWT capability, to discover the AP through scanning. Then, the STA sends an identity authentication request frame to the AP for identity authentication.

As shown in (b) in FIG. 10, after a hotspot is enabled, the AP may broadcast a beacon frame according to a beacon periodicity of 0.1s, for example, a beacon frame i, a beacon frame i+1, and a beacon frame i+2. Each beacon frame indicates that the AP does not support the TWT capability, that is, the TWT capability of the AP is disabled. After the AP receives a probe request frame sent by the STA, the AP first sends the beacon frame i+1, and then sends a probe response frame, so that the STA first receives the beacon frame i+1. In this case, the STA may parse the beacon frame i+1 to determine that the AP does not support the TWT capability, to discover the AP through scanning. Then, the STA sends an identity authentication request frame to the AP for identity authentication.

In Embodiment 1, both the beacon frame and the probe response frame that are sent by the first electronic device carry the element that indicates that the first electronic device does not support the TWT capability, and the terminal device may determine, based on a first received frame, whether the AP supports the TWT capability, thereby improving a speed of discovering the AP by the terminal device.

### Embodiment 2

In Embodiment 2, a first electronic device is an AP device that supports a TWT capability, and a terminal device is a STA device that does not support the TWT capability. When the first electronic device enables a hotspot, the first electronic device first enables the TWT capability, and then disables the TWT capability if a STA device is not connected to the first electronic device after a timing duration reaches a preset duration.

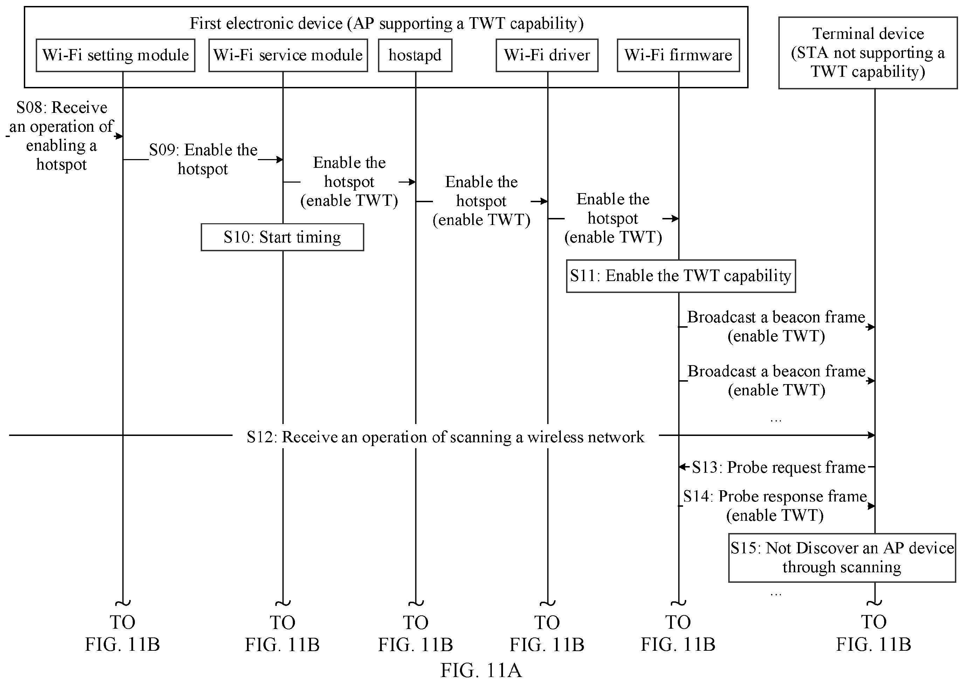

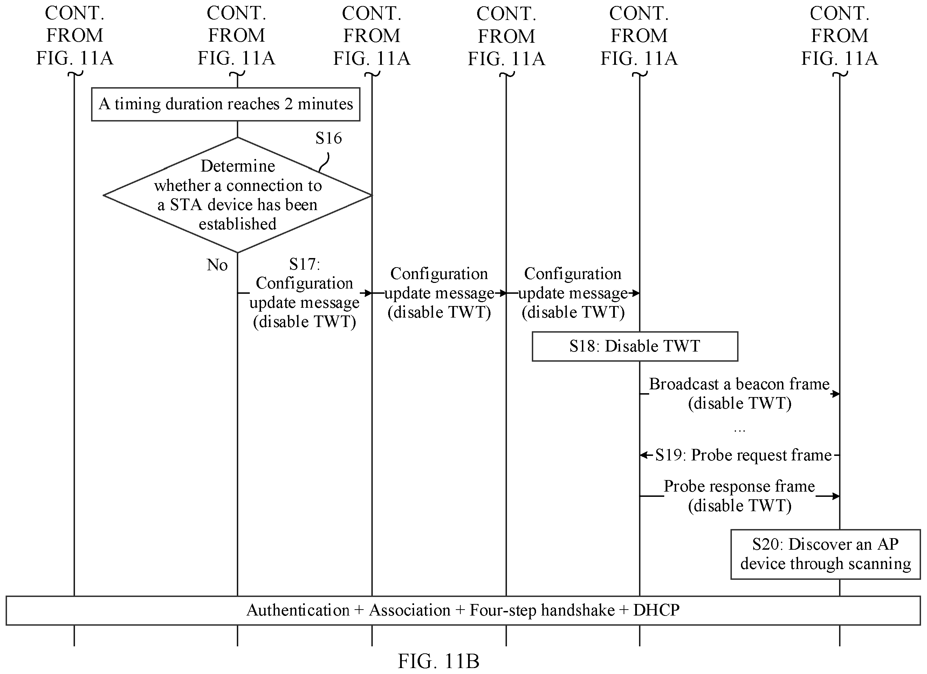

For example, FIG. 11A and FIG. 11B are another flowchart of a TWT capability management method according to an embodiment of this application.

S08: A Wi-Fi setting module of the first electronic device receives an operation (which may be referred to as a first operation) that is of enabling a hotspot and that is input by a user.

S09: The Wi-Fi setting module indicates, by using a Wi-Fi API interface (not shown in FIG. 11A and FIG. 11B), a Wi-Fi service module to enable the hotspot.

For specific implementations of S08 and S09, refer to the description of S01 and S02 in Embodiment 1. Details are not described herein again.

S10: The Wi-Fi service module invokes hostapd to enable the hotspot, and starts timing; and hostapd controls, by using a Wi-Fi driver, Wi-Fi firmware to enable the hotspot.

S11: The Wi-Fi firmware enables the hotspot and enables the TWT capability when the hotspot is enabled.

Different from a network parameter that is configured by the Wi-Fi service module when the hotspot is enabled in Embodiment 1 and that indicates that "the first electronic device does not support the TWT capability", a network parameter configured by the Wi-Fi service module when the hotspot is enabled in Embodiment 2 indicates that "the first electronic device supports the TWT capability". In other words, when the hotspot is enabled, the network parameter configured by the Wi-Fi service module conforms to the real TWT capability.

After the Wi-Fi firmware enables the hotspot, the first electronic device may generate a beacon frame (which may be referred to as a second beacon frame) based on the configured network parameter, and periodically broadcasts the second beacon frame by using the Wi-Fi firmware. The second beacon frame indicates that the first electronic device supports the TWT capability, that is, the TWT capability of the first electronic device is enabled.

With reference to the description of S03 in Embodiment 1, a Wi-Fi version enabled on the first electronic device may be Wi-Fi7, Wi-Fi6, Wi-Fi5, or Wi-Fi4. The first electronic device may set a TWT capabilities tag in an extended capabilities tag of the beacon frame, to indicate that the first electronic device supports the TWT capability.

For example, the Wi-Fi version enabled on the first electronic device is Wi-Fi5. In this case, octet 10 of the extended capabilities tag in the beacon frame broadcast by the first electronic device is as follows:
Extended Capabilities: 0x40 (octet 10)
.... ...0 //represents a 72^{nd} element (element ID=72) indicating no FILS capability.
.... ..0. //represents a 73^{rd} element (element ID=73) indicating no extended spectrum management function.
.... .0.. //represents a 74^{th} element (element ID=74) indicating that future channel isolation is not supported.
.... 0... //represents a 75^{th} element (element ID=75) indicating pre-association discovery: 0x0.
...0 .... //represents a 76^{th} element (element ID=76) indicating reserved: 0x0.
..0. .... //represents a 77^{th} element (element ID=77) indicating that a TWT requester does not support the TWT capability.
.1.. .... //represents a 78^{th} element (element ID=78) indicating that a TWT responder supports the TWT capability.
0... .... //represents a 79^{th} element (element ID=79) indicating that an OBSS narrow bandwidth is not supported in OFDMA tolerance.

The 78^{th} element of the beacon frame may be set to 1 (which may be referred to as second information), to indicate that the first electronic device supports the TWT capability. This is equivalent to enabling of the TWT capability of the first electronic device.

S12: The terminal device receives an operation that is of scanning a wireless network and that is input by the user.

S13: The terminal device sends a probe request frame based on the operation that is of scanning the wireless network and that is input by the user, to scan an available AP device near the terminal device, that is, an available WLAN network.

S14: The Wi-Fi firmware generates a probe response frame based on the received probe request frame and the stored network parameter, and returns the probe response frame to the terminal device.

The probe response frame is a directional beacon sent for the terminal device that is scanning the wireless network. The probe response frame indicates that the first electronic device supports the TWT capability, that is, the TWT capability of the first electronic device is enabled.

With reference to the description of S06 in Embodiment 1, a Wi-Fi version enabled on the first electronic device may be Wi-Fi7, Wi-Fi6, Wi-Fi5, or Wi-Fi4. The first electronic device may set a TWT capabilities tag in the probe response frame, to indicate that the first electronic device supports the TWT capability.

For example, the Wi-Fi version enabled on the first electronic device is Wi-Fi5. In this case, octet 10 of the extended capabilities tag in the probe response frame is as follows:
Extended Capabilities: 0x40 (octet 10)
.... ...0 //represents a 72^{nd} element (element ID=72) indicating no FILS capability.
.... ..0. //represents a 73^{rd} element (element ID=73) indicating no extended spectrum management function.
.... .0.. //represents a 74^{th} element (element ID=74) indicating that future channel isolation is not supported.
.... 0... //represents a 75^{th} element (element ID=75) indicating pre-association discovery: 0x0.
...0 .... //represents a 76^{th} element (element ID=76) indicating reserved: 0x0.
..0. .... //represents a 77^{th} element (element ID=77) indicating that a TWT requester does not support the TWT capability.
.1.. .... //represents a 78^{th} element (element ID=78) indicating that a TWT responder supports the TWT capability.
0... .... //represents a 79^{th} element (element ID=79) indicating that an OBSS narrow bandwidth is not supported in OFDMA tolerance.

The 78^{th} element of the probe response frame may be set to 1, to indicate that the first electronic device supports the TWT capability. This is equivalent to enabling of the TWT capability of the first electronic device.

S15: The terminal device parses the received probe response frame, and determines, based on parsed content, that the AP device (that is, the first electronic device) is not discovered through scanning.

With reference to the description in the foregoing embodiment, if the parsed content is that the first electronic device supports the TWT capability, a Wi-Fi driver of the terminal device determines, according to default code logic, that there is a TWT capability conflict between the first electronic device and the terminal device, discards the parsed content, and does not report the parsed content to an upper layer (for example, a Wi-Fi setting module) of the terminal device. Therefore, the upper layer of the terminal device cannot obtain the parsed content, and the upper layer of the STA device mistakenly determines that the AP device is not discovered through scanning. When the terminal device does not discover the AP device through scanning, the terminal device continues to send the probe request frame, the first electronic device continues to send the probe response frame indicating that the TWT capability is enabled, the terminal device still does not discover the AP device through scanning, and so on. As a result, a WLAN connection cannot be established between the first electronic device and the terminal device.

S16: When a timing duration reaches a preset duration (for example, 2 minutes), the Wi-Fi service module determines whether a connection has been established with the STA device.

If the first electronic device establishes a connection to the STA device, the Wi-Fi service module does not perform a processing operation. It should be noted that the STA device herein is not limited to a terminal device, and may be alternatively another electronic device. It should be understood that when the first electronic device establishes a connection to the STA device, it indicates that the STA device successfully discovers the first electronic device through scanning, and therefore, no other processing operation needs to be further performed.

If the first electronic device is not connected to any STA device, it indicates that another device may not discover the first electronic device through scanning, and the Wi-Fi service module performs S17 below.

S17: The Wi-Fi service module sends a configuration update message to the Wi-Fi firmware by using hostapd and the Wi-Fi driver.

The configuration update message indicates that "the first electronic device does not support the TWT capability". This is equivalent to disabling of the TWT capability of the first electronic device.

In an implementable manner, a hotspot configuration module (SoftApConfiguration) of the Wi-Fi service module may reconfigure all network parameters.

In another implementable manner, a hotspot configuration module (SoftApConfiguration) of the Wi-Fi service module may reconfigure only the element that indicates whether the first electronic device supports the TWT capability. For example, a Wi-Fi version enabled on the first electronic device is Wi-Fi5. The hotspot configuration module (SoftApConfiguration) may reconfigure the 78^{th} element of the extended capabilities tag as "0", to indicate that "the first electronic device does not support the TWT capability".

S18: The Wi-Fi firmware disables the TWT capability.

After the Wi-Fi firmware disables the TWT capability, the Wi-Fi firmware may generate a new beacon frame based on the reconfigured network parameter and periodically broadcast the new beacon frame. The new beacon frame indicates that the first electronic device does not support the TWT capability, that is, the TWT capability of the first electronic device is disabled.

S19: The terminal device resends a probe request frame (which may be referred to as a second probe request frame). Correspondingly, the Wi-Fi firmware generates a probe response frame (which may be referred to as a second probe response frame) based on the received second probe request frame, and returns the second probe response frame to the terminal device.

The probe response frame is a directional beacon sent for the terminal device that is scanning the wireless network. The probe response frame indicates that the first electronic device does not support the TWT capability, that is, the TWT capability of the first electronic device is disabled.

It should be noted that the probe request frame may carry information indicating whether the STA supports the TWT capability, or may not carry information indicating whether the STA supports the TWT capability. This is not limited in this application.

S20: The terminal device parses the received probe response frame, and determines, based on parsed content, that the AP device (that is, the first electronic device) is discovered through scanning.

Then, the first electronic device and the terminal device may further perform operations such as authentication, association, four-step handshake, and establishment of a DHCP. For details, refer to the description in the following embodiments. Details are not described herein.

For specific implementations of S18 to S20, refer to the description of S05 to S07 in Embodiment 1. Details are not described herein again.

In Embodiment 2, the terminal device serving as the STA device does not support the TWT capability. In actual implementation, the terminal device serving as the STA device may alternatively support the TWT capability. When the terminal device supports the TWT capability, the following problem does not exist: the terminal device cannot discover the first electronic device through scanning due to a low capability. In view of this, when the first electronic device enables the hotspot, the first electronic device may first enable the TWT capability, and then disable the TWT capability of the first electronic device if the first electronic device is not connected to the STA device after the timing duration reaches the preset duration, to avoid a problem in which the terminal device supporting the TWT capability cannot establish the TWT protocol with the first electronic device because the TWT capability of the first electronic device is directly disabled.

With reference to the description of S18 to S20, because both the beacon frame and the probe response frame that are sent by the first electronic device carry the element that indicates that the first electronic device does not support the TWT capability, the terminal device may execute the following solution: After S19, if the terminal device first receives the beacon frame from the first electronic device, the terminal device may determine, based on the beacon frame, that the first electronic device does not support the TWT capability. After S19, if the terminal device first receives the probe response frame from the first electronic device, the terminal device may determine, based on the probe response frame, that the first electronic device does not support the TWT capability.

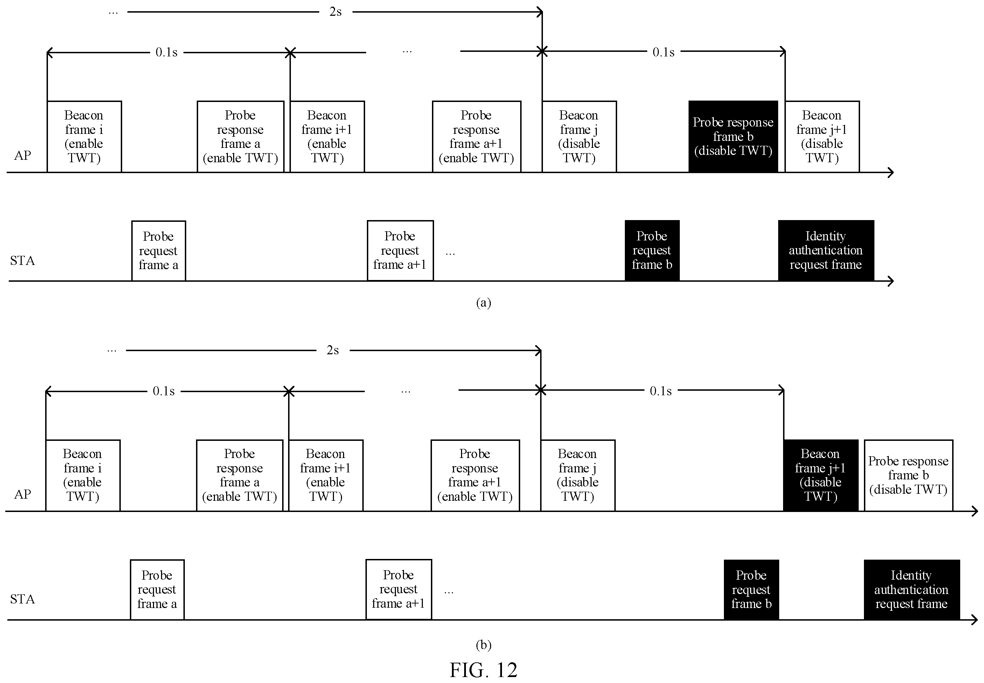

For example, FIG. 12 is a diagram 2 of a scenario in which a STA scans an AP according to an embodiment of this application.

The AP supports a TWT capability, and the STA does not support the TWT capability.

As shown in (a) in FIG. 12, after a hotspot is enabled, the AP may broadcast a beacon frame according to a beacon periodicity of 0.1s, for example, a beacon frame i and a beacon frame i+1. Each beacon frame indicates that the AP supports the TWT capability, that is, the TWT capability of the AP is enabled. In addition, after a first beacon frame is sent, the AP starts timing. After the AP receives a probe request frame a sent by the STA, the AP returns a probe response frame a. Because the probe response frame a indicates that the AP supports the TWT capability but the STA does not support the TWT capability, the STA mistakenly determines that the AP is not discovered through scanning and continues to send a probe response frame a+1 and the like. After a timing duration reaches 2s, the AP reconfigures a network parameter, to indicate that the AP does not support the TWT capability, that is, the TWT capability of the AP is disabled. After the AP receives a probe request frame b sent by the STA, the AP first sends a probe response frame b, and then sends a beacon frame j+1. Both the probe response frame b and the beacon frame j+1 indicate that the AP does not support the TWT capability. The STA first receives the probe response frame b, parses the probe response frame b, and determines that the AP does not support the TWT capability, to discover the AP through scanning. Then, the STA sends an identity authentication request frame to the AP for identity authentication.

As shown in (b) in FIG. 12, after a hotspot is enabled, the AP may broadcast a beacon frame according to a beacon periodicity of 0.1s, for example, a beacon frame i and a beacon frame i+1. Each beacon frame indicates that the AP supports the TWT capability, that is, the TWT capability of the AP is enabled. In addition, after a first beacon frame is sent, the AP starts timing. After the AP receives a probe request frame a sent by the STA, the AP returns a probe response frame a. Because the probe response frame a indicates that the AP supports the TWT capability but the STA does not support the TWT capability, the STA mistakenly determines that the AP is not discovered through scanning and continues to send a probe response frame a+1 and the like. After a timing duration reaches 2s, the AP reconfigures a network parameter, to indicate that the AP does not support the TWT capability, that is, the TWT capability of the AP is disabled. After the AP receives a probe request frame b sent by the STA, the AP first sends a beacon frame j+1, and then sends a probe response frame b. Both the beacon frame j+1 and the probe response frame b indicate that the AP does not support the TWT capability. The STA first receives the beacon frame j+1, parses the beacon frame j+1, and determines that the AP does not support the TWT capability, to discover the AP through scanning. Then, the STA sends an identity authentication request frame to the AP for identity authentication.

In Embodiment 2, after the TWT capability of the first electronic device is disabled, both the beacon frame and the probe response frame that are sent by the first electronic device carry the element that indicates that the first electronic device does not support the TWT capability, and the terminal device may determine, based on a first received frame, whether the AP supports the TWT capability, thereby improving a speed of discovering the AP by the terminal device.

### Embodiment 3

In Embodiment 3, a first electronic device is an AP device that supports a TWT capability; and a terminal device may be a STA device that supports the TWT capability, or the terminal device may be a STA device that does not support the TWT capability. When the first electronic device enables a hotspot, the first electronic device first enables the TWT capability, and then determines, based on the TWT capability that is of the terminal device and that is carried in the probe request frame, whether to disable the TWT capability of the first electronic device.

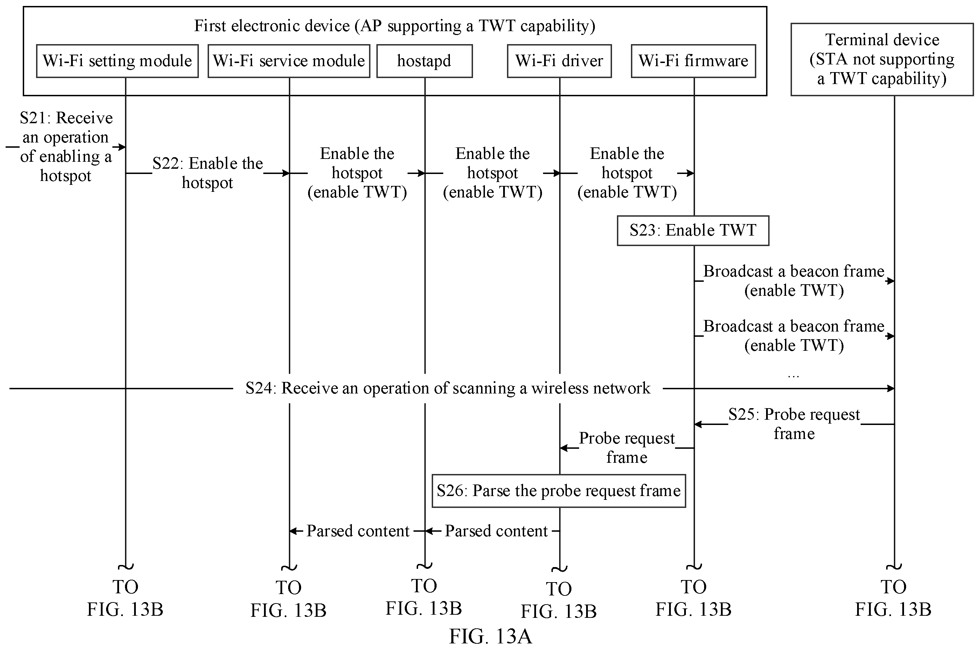

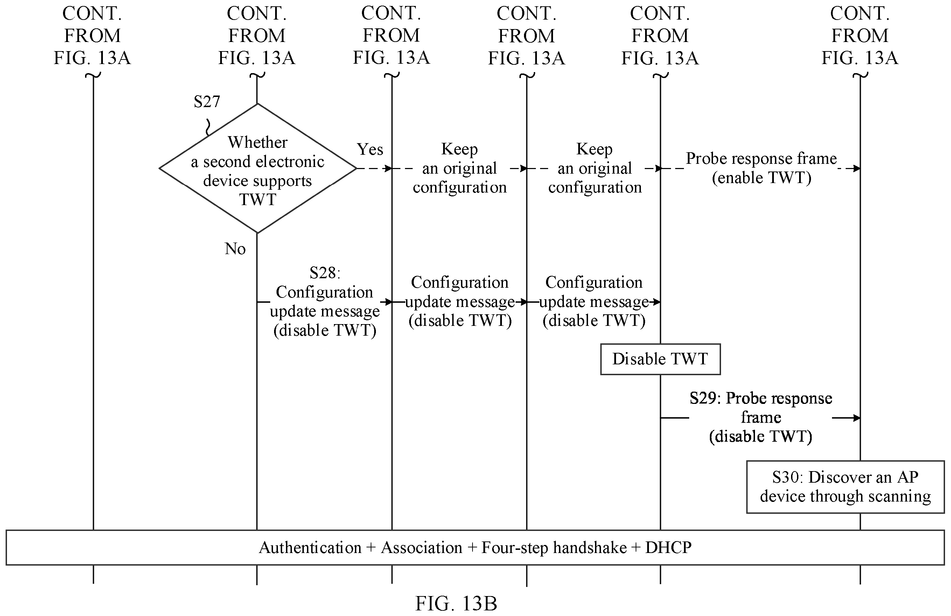

For example, FIG. 13A and FIG. 13B are another flowchart of a TWT capability management method according to an embodiment of this application.

S21: A Wi-Fi setting module of the first electronic device receives an operation (which may be referred to as a first operation) that is of enabling a hotspot and that is input by a user.

S22: The Wi-Fi setting module indicates, by using a Wi-Fi API interface (not shown in FIG. 13A and FIG. 13B), a Wi-Fi service module to enable the hotspot. The Wi-Fi service module invokes hostapd to enable the hotspot, and hostapd controls, by using a Wi-Fi driver, Wi-Fi firmware to enable the hotspot.

S23: The Wi-Fi firmware enables the hotspot and enables the TWT capability when the hotspot is enabled.

In Embodiment 3, a network parameter (which may be referred to as second information) configured by the Wi-Fi service module when the hotspot is enabled indicates that "the first electronic device supports the TWT capability". In other words, when the hotspot is enabled, the network parameter configured by the Wi-Fi service module conforms to the real TWT capability.

After the Wi-Fi firmware enables the hotspot, the first electronic device may generate a beacon frame (which may be referred to as a third beacon frame) based on the configured network parameter, and periodically broadcasts the third beacon frame by using the Wi-Fi firmware. The third beacon frame indicates that the first electronic device supports the TWT capability, that is, the TWT capability of the first electronic device is enabled.

It should be noted that implementations of S21 to S23 in Embodiment 3 are similar to implementations of S08 to S11 in Embodiment 2. A difference between the two lies in that there is a timing mechanism in S08 to S11, and there is no timing mechanism in S21 to S23. For specific implementations of S21 to S23, refer to the description of S08 to S11. Details are not described herein again.

S24: The terminal device receives an operation that is of scanning a wireless network and that is input by the user.

S25: The terminal device sends a probe request frame (which may be referred to as a third probe request frame) based on the operation that is of scanning the wireless network and that is input by the user, to scan an available AP device near the terminal device, that is, an available WLAN network.

In a possible implementation, the terminal device may be a STA device that supports the TWT capability.

In another possible implementation, the terminal device may be alternatively a STA device that does not support the TWT capability. For example, when the terminal device uses Wi-Fi4 or Wi-Fi5, the terminal device does not support the TWT capability. For example, a Wi-Fi version enabled on the terminal device is Wi-Fi5. A packet of the probe request frame broadcast by the terminal device includes a VHT capabilities tag, an HT capabilities tag, and an extended capabilities tag. In an example, none of the VHT capabilities tag, the HT capabilities tag, and the extended capabilities tag includes the TWT capabilities tag. At this moment, it is considered by default that the terminal device does not support the TWT capability. In another example, the VHT capabilities tag and the HT capabilities tag do not include the TWT capabilities tag, the extended capabilities tag includes the TWT capabilities tag, and the TWT capabilities tag of the extended capabilities tag indicates that the terminal device does not support the TWT capability.

S26: The Wi-Fi firmware reports the received third probe request frame to the Wi-Fi driver. The Wi-Fi driver parses the third probe request frame, and transmits parsed content (which may be referred to as first parsed content) to the Wi-Fi service module by using the Wi-Fi driver and hostapd.

S27: The Wi-Fi service module determines, based on the parsed content, whether the terminal device supports the TWT capability.

If the first parsed content indicates that the terminal device supports the TWT capability, it indicates that there is no conflict between the TWT capability of the first electronic device and that of the terminal device. The Wi-Fi service module does not perform a processing operation to maintain the second information. The Wi-Fi firmware may return, to the terminal device, a probe response frame (which may be referred to as a fourth probe response frame) generated based on the second information. The fourth probe response frame indicates that the first electronic device supports the TWT capability, that is, the TWT capability of the first electronic device is enabled. Then, the terminal device performs S30 below.

If the first parsed content indicates that the terminal device does not support the TWT capability, it indicates that there may be a conflict between the TWT capability of the first electronic device and that of the terminal device, and the first electronic device performs S28 and S29 below.

S28: The Wi-Fi service module sends a configuration update message (which may be referred to as first information) to the Wi-Fi firmware by using hostapd and the Wi-Fi driver, so that the Wi-Fi firmware disables the TWT capability of the first electronic device.

For example, a Wi-Fi version enabled on the first electronic device is Wi-Fi5. The Wi-Fi service module may reconfigure the 78^{th} element of the extended capabilities tag as "0", to indicate that the first electronic device does not support the TWT capability.

S29: After the Wi-Fi firmware disables the TWT capability based on the configuration update message, the Wi-Fi firmware returns a probe response frame (which may be referred to as a third probe response frame) to the terminal device. The third probe response frame is a directional beacon sent for the terminal device that is scanning the wireless network. The third probe response frame indicates that the first electronic device does not support the TWT capability, that is, the TWT capability of the first electronic device is disabled.

After the Wi-Fi firmware disables the TWT capability, the Wi-Fi firmware may further generate a new beacon frame based on the reconfigured network parameter and the Wi-Fi firmware periodically broadcasts the new beacon frame. The new beacon frame indicates that the first electronic device does not support the TWT capability, that is, the TWT capability of the first electronic device is disabled.

S30: The terminal device parses the received probe response frame, and determines, based on parsed content, that the AP device (that is, the first electronic device) is discovered through scanning.

Then, the first electronic device and the terminal device may further perform operations such as authentication, association, four-step handshake, and establishment of a DHCP. For details, refer to the description in the following embodiments. Details are not described herein.

It should be noted that implementations of S28 to S30 in Embodiment 3 are similar to implementations of S18 to S20 in Embodiment 2. A difference between the two lies in that or S18 to S20, after the TWT capability of the first electronic device is disabled, the first electronic device first receives a probe request frame, and then returns a probe response frame. For S28 to S30, after the TWT capability of the first electronic device is disabled, the first electronic device directly returns a probe response frame. For specific implementations of S28 to S30, refer to the description of S18 to S20. Details are not described herein again.

In Embodiment 3, the terminal device may support the TWT capability, or may not support the TWT capability. When the terminal device supports the TWT capability, the following problem does not exist: the terminal device cannot discover the first electronic device through scanning due to a low capability. After S30, the TWT connection shown in FIG. 2 may be further established between the first electronic device and the terminal device.

In view of this, when the first electronic device enables the hotspot, the first electronic device may first enable the TWT capability, and then determine, based on the TWT capability that is of the terminal device and that is carried in the probe request frame, whether to disable the TWT capability of the first electronic device, to avoid a problem in which the terminal device supporting the TWT capability cannot establish the TWT protocol with the first electronic device because the TWT capability of the first electronic device is directly disabled.

With reference to the description of S28 to S30 in the foregoing embodiment, because both the beacon frame and the probe response frame that are sent by the first electronic device carry the element that indicates that the first electronic device does not support the TWT capability, the terminal device may execute the following solution: After S25, if the terminal device first receives the beacon frame from the first electronic device, the terminal device may determine, based on the beacon frame, that the first electronic device does not support the TWT capability. After S25, if the terminal device first receives the probe response frame from the first electronic device, the terminal device may determine, based on the probe response frame, that the first electronic device does not support the TWT capability.

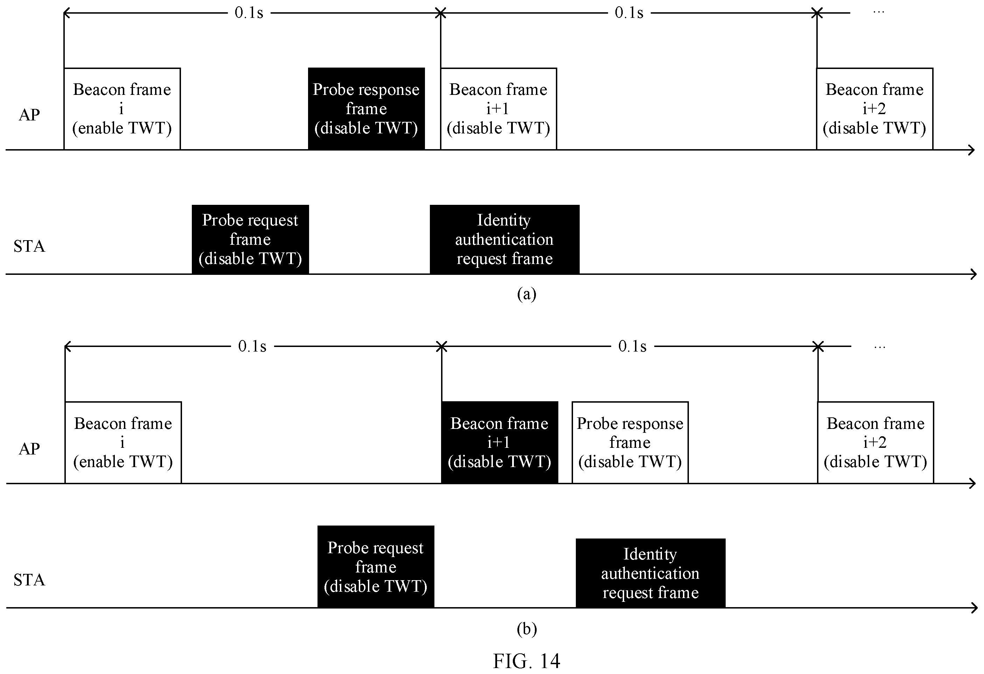

For example, FIG. 14 is a diagram 3 of a scenario in which a STA scans an AP according to an embodiment of this application.

The AP supports a TWT capability, and the STA does not support the TWT capability.

As shown in (a) in FIG. 14, after a hotspot is enabled, the AP may broadcast a beacon frame according to a beacon periodicity of 0.1s, for example, a beacon frame 1, a beacon frame 2, and a beacon frame i. Each beacon frame indicates that the AP supports a TWT capability, that is, the TWT capability of the AP is enabled. After the AP receives a probe request frame sent by the STA, the AP parses the probe request frame. Because the probe request frame indicates that the STA does not support the TWT capability, and the AP supports the TWT capability, the AP may disable the TWT capability of the AP, to avoid a case in which the STA cannot discover the AP through scanning due to the conflict. Then, the AP first sends a probe response frame, and then sends a beacon frame i+1. Both the probe response frame and the beacon frame i+1 indicate that the AP does not support the TWT capability. The STA first receives the probe response frame, parses the probe response frame, and determines that the AP does not support the TWT capability, to discover the AP through scanning. Then, the STA sends an identity authentication request frame to the AP for identity authentication.

As shown in (b) in FIG. 14, after a hotspot is enabled, the AP may broadcast a beacon frame according to a beacon periodicity of 0.1s, for example, a beacon frame 1, a beacon frame 2, and a beacon frame i. Each beacon frame indicates that the AP supports a TWT capability, that is, the TWT capability of the AP is enabled. After the AP receives a probe request frame sent by the STA, the AP parses the probe request frame. Because the probe request frame indicates that the STA does not support the TWT capability, and the AP supports the TWT capability, the AP may disable the TWT capability of the AP, to avoid a case in which the STA cannot discover the AP through scanning due to the conflict. Then, the AP first sends a beacon frame i+1, and then sends a probe response frame. Both the beacon frame i+1 and the probe response frame indicate that the AP does not support the TWT capability. The STA first receives the beacon frame i+1, parses the beacon frame i+1, and determines that the AP does not support the TWT capability, to discover the AP through scanning. Then, the STA sends an identity authentication request frame to the AP for identity authentication.

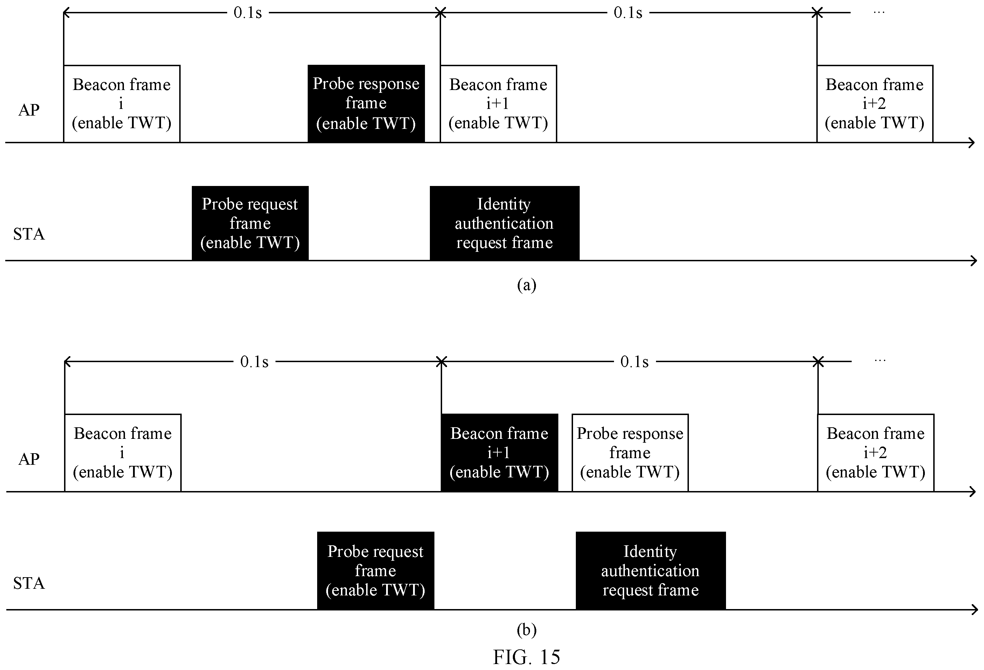

For example, FIG. 15 is a diagram 4 of a scenario in which a STA scans an AP according to an embodiment of this application.

The AP supports a TWT capability, and the STA supports the TWT capability.

As shown in (a) in FIG. 15, after a hotspot is enabled, the AP may broadcast a beacon frame according to a beacon periodicity of 0.1s, for example, a beacon frame 1, a beacon frame 2, and a beacon frame i. Each beacon frame indicates that the AP supports a TWT capability, that is, the TWT capability of the AP is enabled. After the AP receives a probe request frame sent by the STA, the AP parses the probe request frame. Because the probe request frame indicates that the STA supports the TWT capability, there is no conflict between the TWT capability of the AP and that of the STA, and the AP does not need to disable the TWT capability of the AP. Then, the AP first sends a probe response frame, and then sends a beacon frame i+1. Both the probe response frame and the beacon frame i+1 indicate that the AP supports the TWT capability. The STA first receives the probe response frame, parses the probe response frame, and determines that the AP supports the TWT capability. Because there is no conflict between the TWT capability of the AP and that of the STA, the STA can discover the AP through scanning. Then, the STA sends an identity authentication request frame to the AP for identity authentication, and then establishes a TWT connection.

As shown in (b) in FIG. 15, after a hotspot is enabled, the AP may broadcast a beacon frame according to a beacon periodicity of 0.1s, for example, a beacon frame 1, a beacon frame 2, and a beacon frame i. Each beacon frame indicates that the AP supports a TWT capability, that is, the TWT capability of the AP is enabled. After the AP receives a probe request frame sent by the STA, the AP parses the probe request frame. Because the probe request frame indicates that the STA supports the TWT capability, there is no conflict between the TWT capability of the AP and that of the STA, and the AP does not need to disable the TWT capability of the AP. Then, the AP first sends a beacon frame i+1, and then sends a probe response frame. Both the beacon frame i+1 and the probe response frame indicate that the AP supports the TWT capability. The STA first receives the beacon frame i+1, parses the beacon frame i+1, and determines that the AP supports the TWT capability. Because there is no conflict between the TWT capability of the AP and that of the STA, the STA can discover the AP through scanning. Then, the STA sends an identity authentication request frame to the AP for identity authentication, and then establishes a TWT connection.

It should be noted that a difference between FIG. 14 and FIG. 15 lies in that in FIG. 14, the probe request frame of the STA indicates that the STA does not support the TWT capability, the AP needs to disable the TWT capability of the AP, and a TWT connection cannot be established between the AP and the STA in a subsequent process; and in FIG. 15, the probe request frame of the STA indicates that the STA supports the TWT capability, the AP does not need to disable the TWT capability of the AP, and a TWT connection can be established between the AP and the STA in a subsequent process.

In Embodiment 3, after the probe request frame is parsed, both the beacon frame and the probe response frame that are sent by the first electronic device carry the element that indicates whether the first electronic device supports the TWT capability, and the terminal device may determine, based on a first received frame, whether the AP supports the TWT capability, thereby improving a speed of discovering the AP by the terminal device.

### Embodiment 4

In Embodiment 4, a first electronic device is an AP device that supports a TWT capability; and a terminal device may be a STA device that supports the TWT capability, or the terminal device may be a STA device that does not support the TWT capability. When the first electronic device enables a hotspot, the first electronic device may send two packets: One packet indicates that the first electronic device supports the TWT capability, and the other packet indicates that the first electronic device does not support the TWT capability.

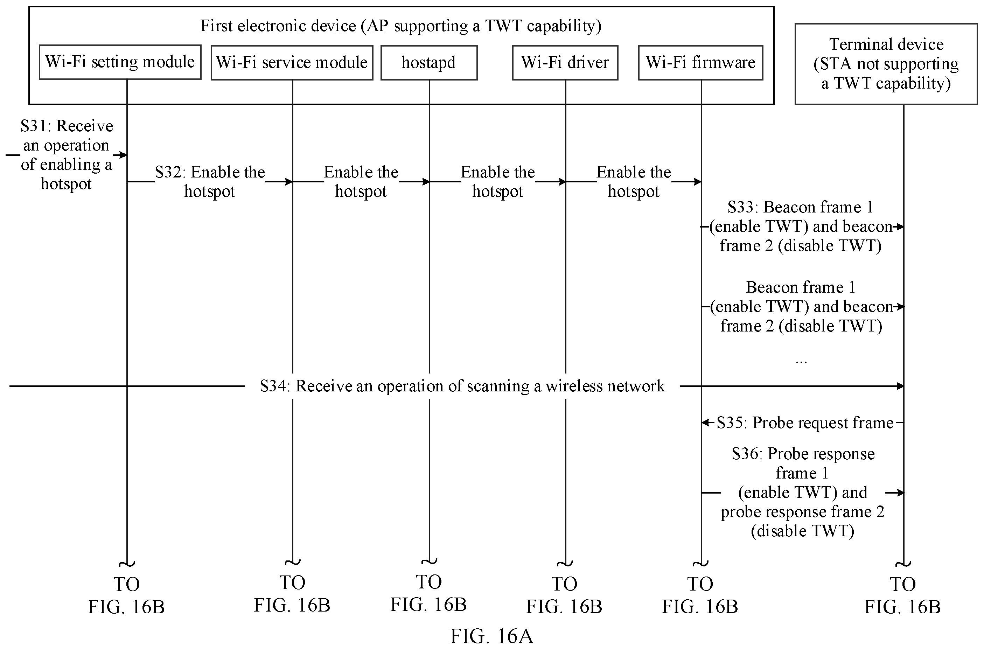

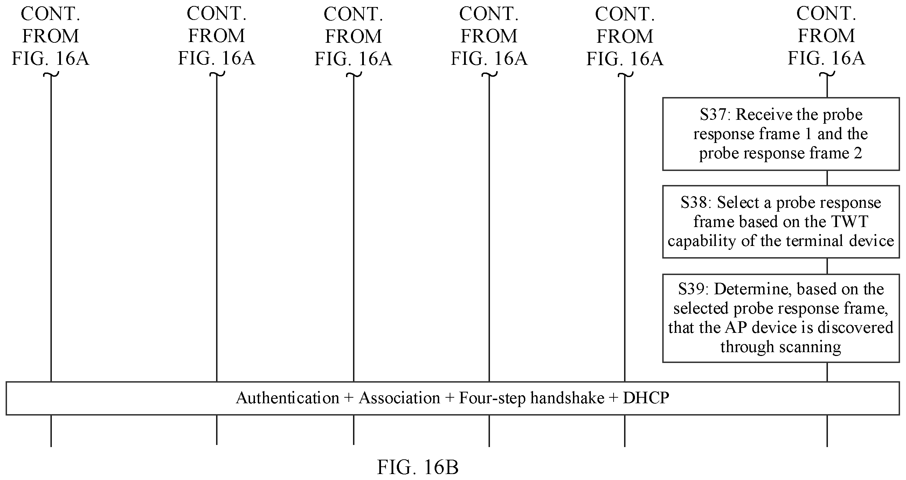

For example, FIG. 16A and FIG. 16B are another flowchart of a TWT capability management method according to an embodiment of this application.

S31: A Wi-Fi setting module of the first electronic device receives an operation (which may be referred to as a first operation) that is of enabling a hotspot and that is input by a user.

S32: The Wi-Fi setting module indicates, by using a Wi-Fi API interface (not shown in FIG. 16A and FIG. 16B), a Wi-Fi service module to enable the hotspot. The Wi-Fi service module invokes hostapd to enable the hotspot, and hostapd controls, by using a Wi-Fi driver, Wi-Fi firmware to enable the hotspot.

In an implementable manner, as shown in FIG. 8, the Wi-Fi service module includes a Wi-Fi management module (WifiManager), a hotspot management module (SoftApManager), and a hotspot configuration module (SoftApConfiguration). Specifically, the Wi-Fi management module (WifiManager) may indicate the hotspot management module (SoftApManager) to enable the hotspot, and the Wi-Fi management module (WifiManager) may indicate the hotspot configuration module (SoftApConfiguration) to configure a network parameter. A hotspot configuration module (SoftApConfiguration) of the Wi-Fi service module configures two TWT capability parameters: a first TWT capability parameter (which may be referred to as second information) indicates that "the first electronic device supports the TWT capability", and a second TWT capability parameter (which may be referred to as first information) indicates that "the first electronic device does not support the TWT capability". The hotspot configuration module (SoftApConfiguration) transmits a configured network parameter to the hotspot configuration module (SoftApConfiguration). The hotspot management module (SoftApManager) indicates hostapd to enable the hotspot, and transmits the configured network parameter to hostapd; and hostapd controls, by using the Wi-Fi driver, the Wi-Fi firmware to enable the hotspot, and transmits the configured network parameter to the Wi-Fi firmware by using the Wi-Fi driver. The Wi-Fi firmware stores the configured network parameter.

S33: The Wi-Fi firmware enables the hotspot.

After the Wi-Fi firmware enables the hotspot, the Wi-Fi firmware generates a beacon frame 1 (which may be referred to as a seventh beacon frame) based on the first TWT capability parameter. The beacon frame 1 indicates that the first electronic device supports the TWT capability. The Wi-Fi firmware generates a beacon frame 2 (which may be referred to as a sixth beacon frame) based on the second TWT capability parameter. The beacon frame 2 indicates that the first electronic device does not support the TWT capability. The Wi-Fi firmware may broadcast signaling at intervals of 0.1s. The signaling includes a beacon frame 1 and a beacon frame 2.

It should be noted that implementations of S31 to S33 in Embodiment 4 are similar to implementations of S01 to S03 in Embodiment 1. A difference between the two lies in that in S01 to S03, only one TWT capability parameter is configured and only one beacon frame is broadcast in one beacon periodicity; and in S31 to S33, the first TWT capability parameter and the second TWT capability parameter are configured, and two beacon frames are broadcast in one beacon periodicity. For specific implementations of S31 to S33, refer to the description of S01 to S03. Details are not described herein again.

S34: The terminal device receives an operation that is of scanning a wireless network and that is input by the user.

S35: The terminal device sends a probe request frame based on the operation that is of scanning the wireless network and that is input by the user, to scan an available AP device near the terminal device, that is, an available WLAN network.

The terminal device may support a TWT capability, or may not support a TWT capability.

It should be noted that the probe request frame may carry information indicating whether the STA supports the TWT capability, or may not carry information indicating whether the STA supports the TWT capability. This is not limited in this application.

S36: The Wi-Fi firmware of the first electronic device parses the received probe request frame, and returns a probe response frame 1 and a probe response frame 2 to the terminal device.

The probe response frame 1 and the probe response frame 2 are directional beacons sent for the terminal device that is scanning the wireless network. The probe response frame 1 indicates that the first electronic device supports the TWT capability, and the probe response frame 2 indicates that the first electronic device does not support the TWT capability.

S37: The terminal device receives the probe response frame 1 and the probe response frame 2.

S38: The terminal device selects a probe response frame (which may be referred to as first signaling) based on the TWT capability of the terminal device.

S39: The terminal device determines, based on the probe response frame selected through S38, that the AP device (that is, the first electronic device) is discovered through scanning.

For example, after a lower layer (for example, Wi-Fi firmware) of the terminal device receives the probe response frame 1 and the probe response frame 2, the lower layer (for example, a Wi-Fi driver) of the terminal device may parse the probe response frame 1 to obtain parsed content 1, where the parsed content 1 is that the first electronic device supports the TWT capability; and parse the probe response frame 2 to obtain parsed content 2, where the parsed content 2 is that the first electronic device does not support the TWT capability. If the terminal device supports the TWT capability, the lower layer (for example, the Wi-Fi driver) of the terminal device may discard the parsed content 2, and report the parsed content 1 to an upper layer (for example, a Wi-Fi setting module) of the terminal device, to discover the first electronic device through scanning. If the terminal device does not support the TWT capability, the lower layer (for example, the Wi-Fi driver) of the terminal device may discard the parsed content 1, and report the parsed content 2 to an upper layer (for example, a Wi-Fi setting module) of the terminal device, to discover the first electronic device through scanning. Then, the first electronic device and the terminal device may further perform operations such as authentication, association, four-step handshake, and establishment of a DHCP. For details, refer to the description in the following embodiments. Details are not described herein.

It should be noted that implementations of S34 to S38 in Embodiment 4 are similar to implementations of S04 to S07 in Embodiment 1. A difference between the two lies in that in S04 to S07, the terminal device receives only one probe beacon frame; and in S04 to S07, the terminal device receives both the probe response frame 1 and the probe response frame 2 and determines, based on the TWT capability of the terminal device, which packet is to be reported. For specific implementations of S34 to S38, refer to the description of S04 to S07. Details are not described herein again.

Because the terminal device may support the TWT capability or may not support the TWT capability, if the TWT capability of the first electronic device is directly disabled in the method in Embodiment 1, a problem in which the terminal device supporting the TWT capability cannot establish the TWT protocol with the first electronic device may occur. In Embodiment 4, when the hotspot is enabled, the first electronic device may send two packets: One packet indicates that the first electronic device supports the TWT capability, and the other packet indicates that the first electronic device does not support the TWT capability. In this way, the lower layer (for example, the Wi-Fi driver) of the terminal device may determine, based on whether the terminal device supports the TWT capability, which packet is to be discarded and which packet is to be reported. In this way, the terminal device can discover the first electronic device through scanning, or can establish the TWT protocol when the terminal device supports the TWT capability.

In an implementable manner, after S35, if the terminal device first receives the beacon frame from the first electronic device, the terminal device may determine, based on the beacon frame, that the first electronic device does not support the TWT capability. After S35, if the terminal device first receives the probe response frame from the first electronic device, the terminal device may determine, based on the probe response frame, that the first electronic device does not support the TWT capability.

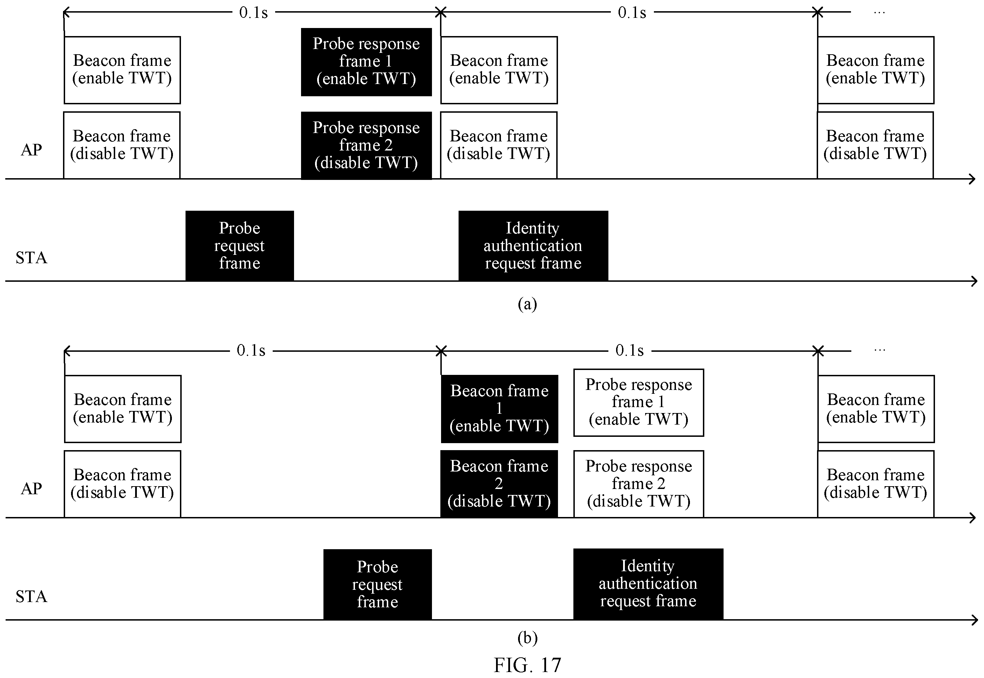

For example, FIG. 17 is a diagram 5 of a scenario in which a STA scans an AP according to an embodiment of this application.

The AP supports a TWT capability, and the STA does not support the TWT capability.

As shown in (a) in FIG. 17, after a hotspot is enabled, the AP may broadcast two beacon frames at intervals of 0.1s. One beacon frame indicates that the AP supports the TWT capability, and the other beacon frame indicates that the AP does not support the TWT capability. After the AP receives a probe request frame sent by the STA, the AP first sends a probe response frame 1 and a probe response frame 2, and then sends the beacon frames, so that the STA first receives the probe response frame 1 and the probe response frame 2. The probe response frame 1 indicates that the AP supports the TWT capability, and the probe response frame 2 indicates that the AP does not support the TWT capability. In this case, a lower layer (for example, a Wi-Fi driver) of the STA may parse the probe response frame 1 and the probe response frame 2 to respectively obtain parsed content 1 and parsed content 2. If the STA supports the TWT capability, the lower layer (for example, the Wi-Fi driver) of the STA may discard the parsed content 2, and report the parsed content 1 to an upper layer (for example, a Wi-Fi setting module) of the STA, to discover the AP through scanning. If the STA does not support the TWT capability, the lower layer (for example, the Wi-Fi driver) of the STA may discard the parsed content 1, and report the parsed content 2 to an upper layer (for example, a Wi-Fi setting module) of the STA, to discover the AP through scanning. Then, the STA sends an identity authentication request frame to the AP for identity authentication.

As shown in (b) in FIG. 17, after a hotspot is enabled, the AP may broadcast two beacon frames at intervals of 0.1s. One beacon frame indicates that the AP supports the TWT capability, and the other beacon frame indicates that the AP does not support the TWT capability. After the AP receives a probe request frame sent by the STA, the AP first sends a beacon frame 1 and a beacon frame 2, and then sends a probe response frame, so that the STA first receives the beacon frame 1 and the beacon frame 2. The beacon frame 1 indicates that the AP supports the TWT capability, and the beacon frame 2 indicates that the AP does not support the TWT capability. In this case, a lower layer (for example, a Wi-Fi driver) of the STA may parse the beacon frame 1 and the beacon frame 2 to respectively obtain parsed content 1 and parsed content 2. If the STA supports the TWT capability, the lower layer (for example, the Wi-Fi driver) of the STA may discard the parsed content 2, and report the parsed content 1 to an upper layer (for example, a Wi-Fi setting module) of the STA, to discover the AP through scanning. If the STA does not support the TWT capability, the lower layer (for example, the Wi-Fi driver) of the STA may discard the parsed content 1, and report the parsed content 2 to an upper layer (for example, a Wi-Fi setting module) of the STA, to discover the AP through scanning. Then, the STA sends an identity authentication request frame to the AP for identity authentication.

In Embodiment 4, both the beacon frame and the probe response frame that are sent by the first electronic device carry the element that indicates that the first electronic device does not support the TWT capability, and the terminal device may determine, based on a first received frame, whether the AP supports the TWT capability, thereby improving a speed of discovering the AP by the terminal device.

### Embodiment 5

In Embodiment 5, a first electronic device is an AP device that supports a TWT capability, and a terminal device is a STA device that does not support the TWT capability. When the first electronic device enables a hotspot, the first electronic device may send two packets: One packet indicates that the first electronic device supports the TWT capability, and the other packet indicates that the first electronic device does not support the TWT capability.

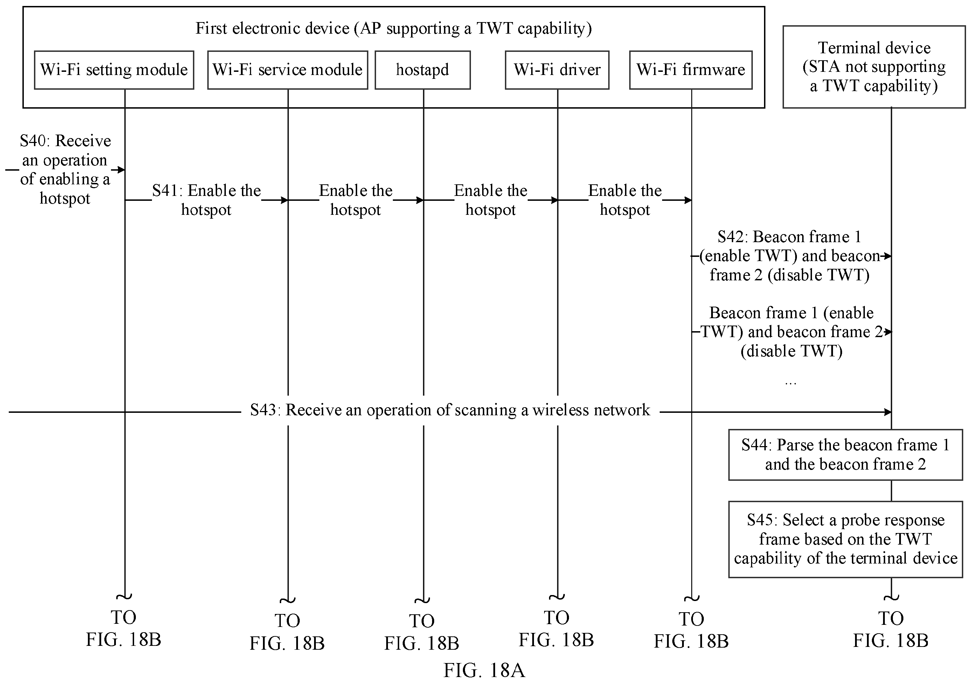

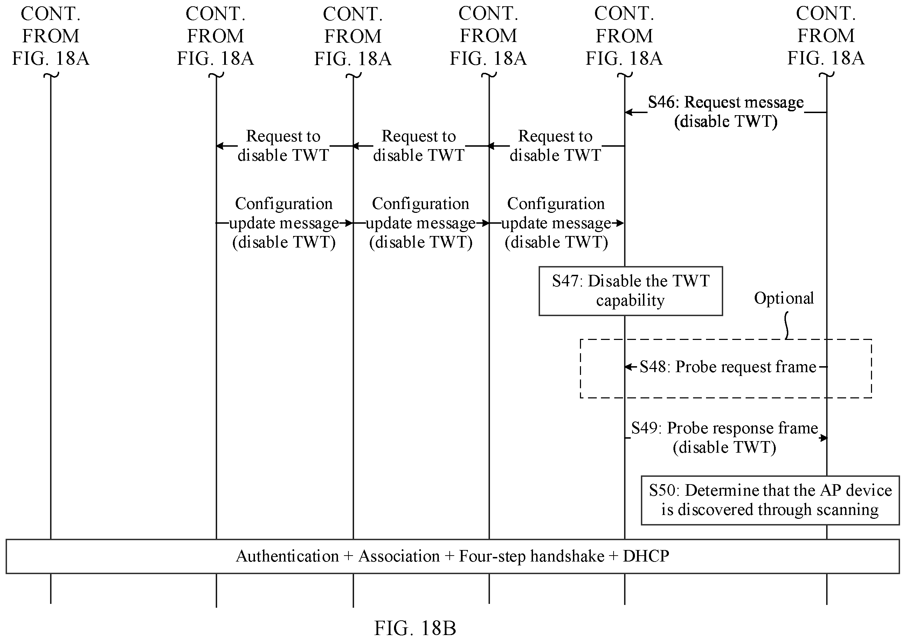

For example, FIG. 18A and FIG. 18B are another flowchart of a TWT capability management method according to an embodiment of this application.

S40: A Wi-Fi setting module of the first electronic device receives an operation (which may be referred to as a first operation) that is of enabling a hotspot and that is input by a user.

S41: The Wi-Fi setting module indicates, by using a Wi-Fi API interface (not shown in FIG. 18A and FIG. 18B), a Wi-Fi service module to enable the hotspot. The Wi-Fi service module invokes hostapd to enable the hotspot, and hostapd controls, by using a Wi-Fi driver, Wi-Fi firmware to enable the hotspot.

S42: The Wi-Fi firmware enables the hotspot.

After the Wi-Fi firmware enables the hotspot, the Wi-Fi firmware generates a beacon frame 1 based on a first TWT capability parameter (which may be referred to as second information), where the beacon frame 1 indicates that the first electronic device supports the TWT capability. The Wi-Fi firmware generates a beacon frame 2 based on a second TWT capability parameter (which may be referred to as first information), where the beacon frame 2 indicates that the first electronic device does not support the TWT capability. The Wi-Fi firmware may broadcast signaling at intervals of 0.1s. The signaling includes a beacon frame 1 (which may be referred to as a seventh beacon frame) and a beacon frame 2 (which may be referred to as a sixth beacon frame).

It should be noted that implementations of S40 to S42 in Embodiment 5 are similar to implementations of S31 to S33 in Embodiment 4. For specific implementations of S40 to S42, refer to the description of S31 to S33. Details are not described herein again.

S43: The terminal device receives an operation that is of scanning a wireless network and that is input by the user.

S44: The terminal device parses the beacon frame 1 and the beacon frame 2.

S45: The terminal device selects a beacon frame based on the TWT capability of the terminal device.

With reference to the description of S37 to S39 in Embodiment 4, after a lower layer (for example, Wi-Fi firmware) of the terminal device receives the beacon frame 1 and the beacon frame 2, the lower layer (for example, a Wi-Fi driver) of the terminal device may parse the beacon frame 1 to obtain parsed content 1, where the parsed content 1 is that the first electronic device supports the TWT capability; and parse the beacon frame 2 to obtain parsed content 2, where the parsed content 2 is that the first electronic device does not support the TWT capability. If the terminal device does not support the TWT capability, the terminal device may select the beacon frame 2, and then execute S46 below to indicate the first electronic device to enable the TWT capability. In another example, if the terminal device supports the TWT capability, the terminal device may select the beacon frame 1, and indicate the first electronic device to enable the TWT capability. Details are not described herein.

S46: The terminal device sends a request message to the first electronic device, where the request message is used to request to disable the TWT of the first electronic device.

Correspondingly, the Wi-Fi driver of the first electronic device parses the received request message, and transmits parsed content to the Wi-Fi service module by using hostapd. The Wi-Fi service module reconfigures a network parameter based on the parsed content, and sends a configuration update message to the Wi-Fi firmware by using hostapd and the Wi-Fi driver, to indicate the Wi-Fi firmware to disable the TWT capability of the first electronic device.

For example, a Wi-Fi version enabled on the first electronic device is Wi-Fi5. The Wi-Fi service module may reconfigure the 78^{th} element of the extended capabilities tag as "0", to indicate that the first electronic device does not support the TWT capability.

S47: The Wi-Fi firmware disables the TWT capability.

The Wi-Fi firmware may generate a new beacon frame based on a reconfigured network parameter and the Wi-Fi firmware periodically broadcasts the new beacon frame. The new beacon frame indicates that the first electronic device does not support the TWT capability.

S48: The terminal device resends a probe request frame to scan an available AP device near the terminal device.

S49: The Wi-Fi firmware returns a probe response frame (which may be referred to as first signaling) to the terminal device based on the probe request frame.

The probe response frame is a directional beacon sent for the terminal device that is scanning the wireless network. The probe response frame indicates that the first electronic device does not support the TWT capability.

S50: The terminal device parses the received probe response frame, and determines, based on parsed content, that the AP device (that is, the first electronic device) is discovered through scanning.

For specific implementations of S48 to S50, refer to the description of S18 to S20. Details are not described herein again.

Because the terminal device may support the TWT capability or may not support the TWT capability, if the TWT capability of the first electronic device is directly disabled in the method in Embodiment 1, a problem in which the terminal device supporting the TWT capability cannot establish the TWT protocol with the first electronic device may occur. In Embodiment 5, when the hotspot is enabled, the first electronic device may send two packets: One packet indicates that the first electronic device supports the TWT capability, and the other packet indicates that the first electronic device does not support the TWT capability. In this way, after receiving the two beacon frames, the terminal device may indicate, based on the TWT capability of the terminal device, the first electronic device to disable or enable the TWT capability, so that the terminal device can discover the first electronic device through scanning.

In an implementable manner, after S59, if the terminal device first receives the beacon frame from the first electronic device, the terminal device may determine, based on the beacon frame, that the first electronic device does not support the TWT capability. After S59, if the terminal device first receives the probe response frame from the first electronic device, the terminal device may determine, based on the probe response frame, that the first electronic device does not support the TWT capability.

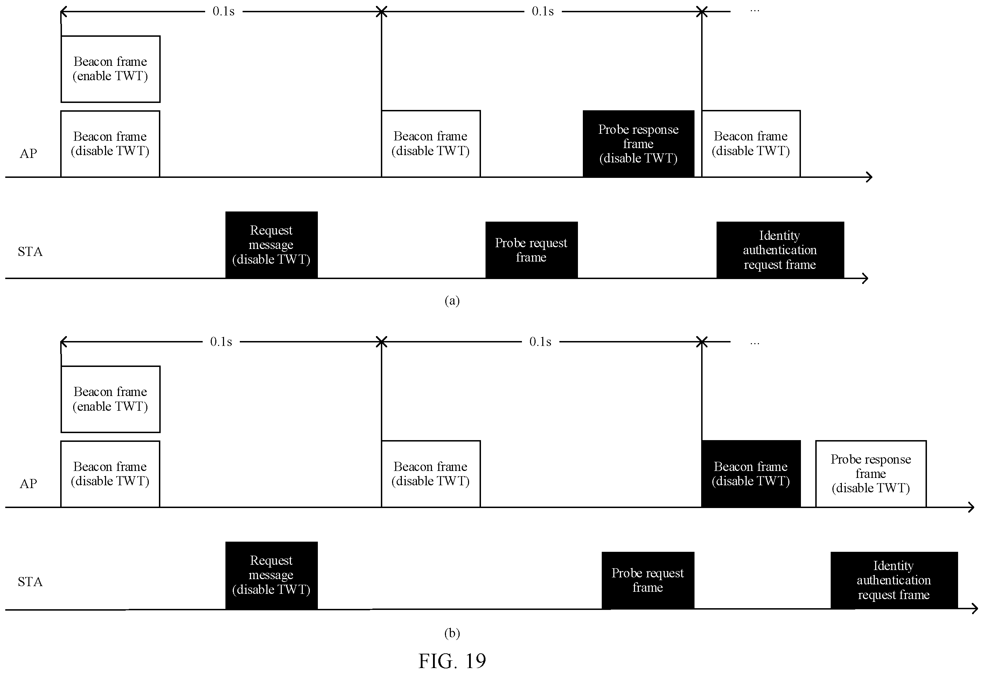

For example, FIG. 19 is a diagram 6 of a scenario in which a STA scans an AP according to an embodiment of this application.

The AP supports a TWT capability, and the STA does not support the TWT capability.

As shown in (a) in FIG. 19, after a hotspot is enabled, the AP may broadcast two beacon frames at intervals of 0.1s. One beacon frame indicates that the AP supports the TWT capability, and the other beacon frame indicates that the AP does not support the TWT capability. After the STA receives the two beacon frames, the STA may send a request message to the AP based on that the STA does not support the TWT capability, to indicate the AP to disable the TWT capability. After the AP receives the request message sent by the STA, the AP disables the TWT capability. Then, the STA sends a probe request frame to the AP. The AP first sends a probe response frame to the STA, and then sends a beacon frame. Both the probe response frame and the beacon frame indicate that the AP does not support the TWT capability. The STA first receives the probe response frame, parses the probe response frame, and determines that the AP does not support the TWT capability, to discover the AP through scanning. Then, the STA sends an identity authentication request frame to the AP for identity authentication.

As shown in (b) in FIG. 19, after a hotspot is enabled, the AP may broadcast two beacon frames at intervals of 0.1s. One beacon frame indicates that the AP supports the TWT capability, and the other beacon frame indicates that the AP does not support the TWT capability. After the STA receives the two beacon frames, the STA may send a request message to the AP based on that the STA does not support the TWT capability, to indicate the AP to disable the TWT capability. After the AP receives the request message sent by the STA, the AP disables the TWT capability. Then, the STA sends a probe request frame to the AP. The AP first sends a beacon frame to the STA, and then sends a probe response frame. Both the beacon frame and the probe response frame indicate that the AP does not support the TWT capability. The STA first receives the beacon frame, parses the beacon frame, and determines that the AP does not support the TWT capability, to discover the AP through scanning. Then, the STA sends an identity authentication request frame to the AP for identity authentication.

In Embodiment 5, both the beacon frame and the probe response frame that are sent by the first electronic device carry the element that indicates that the first electronic device does not support the TWT capability, and the terminal device may determine, based on a first received frame, whether the AP supports the TWT capability, thereby improving a speed of discovering the AP by the terminal device.

### Embodiment 6

In Embodiment 6, a first electronic device is an AP device that supports a TWT capability, and a terminal device is a STA device that does not support the TWT capability. When the first electronic device enables a hotspot, the first electronic device first enables the TWT capability. After the terminal device determines, based on a packet of the first electronic device, that the first electronic device supports the TWT capability, the terminal device indicates the first electronic device to disable the TWT capability.

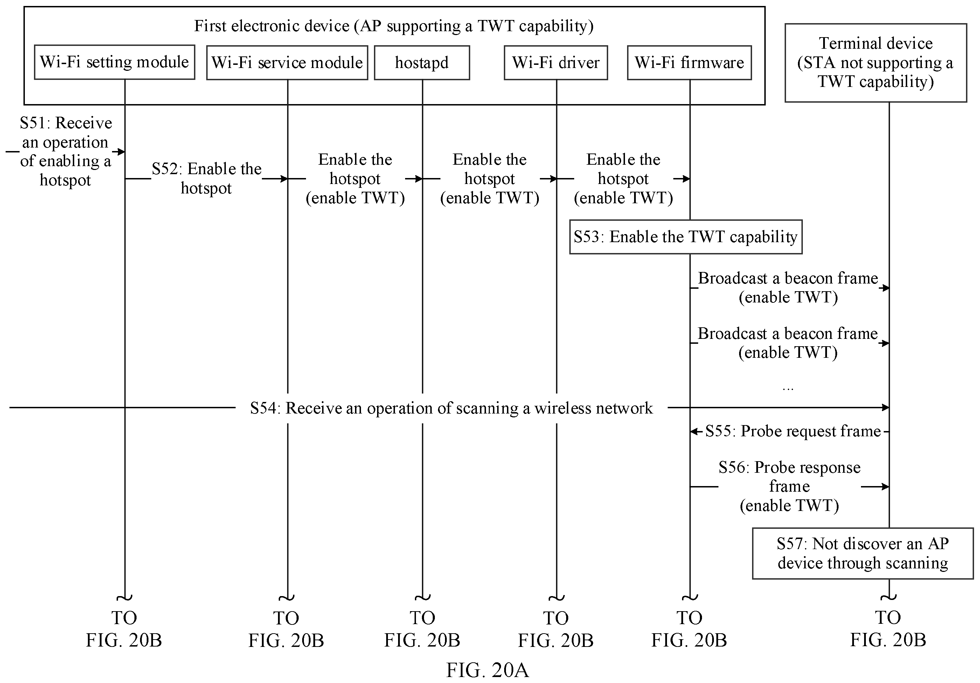

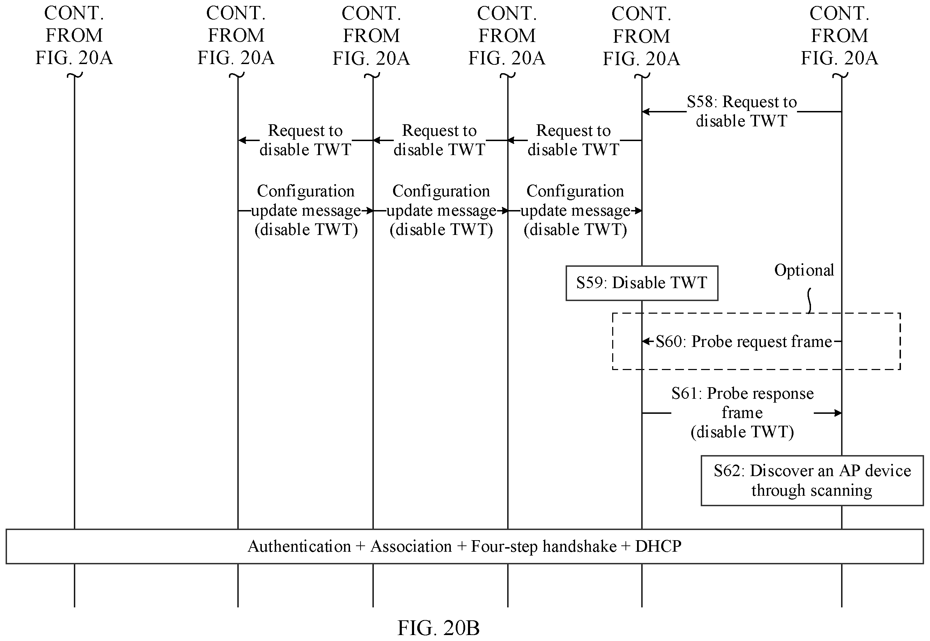

For example, FIG. 20A and FIG. 20B are another flowchart of a TWT capability management method according to an embodiment of this application.

S51: A Wi-Fi setting module of the first electronic device receives an operation (which may be referred to as a first operation) that is of enabling a hotspot and that is input by a user.

S52: The Wi-Fi setting module indicates, by using a Wi-Fi API interface (not shown in FIG. 20A and FIG. 20B), a Wi-Fi service module to enable the hotspot. The Wi-Fi service module invokes hostapd to enable the hotspot, and hostapd controls, by using a Wi-Fi driver, Wi-Fi firmware to enable the hotspot.

S53: The Wi-Fi firmware enables the hotspot and enables the TWT capability when the hotspot is enabled.

In Embodiment 6, a network parameter (which may be referred to as second information) configured by the Wi-Fi service module when the hotspot is enabled indicates that "the first electronic device supports the TWT capability". In other words, when the hotspot is enabled, the network parameter configured by the Wi-Fi service module conforms to the real TWT capability.

After the Wi-Fi firmware enables the hotspot, the first electronic device may generate a beacon frame based on the configured network parameter, and periodically broadcasts the beacon frame by using the Wi-Fi firmware. The beacon frame indicates that the first electronic device supports the TWT capability, that is, the TWT capability of the first electronic device is enabled.

For specific implementations of S51 to S53, refer to the description of S08 to S11. Details are not described herein again.

S54: The terminal device receives an operation that is of scanning a wireless network and that is input by the user.

S55: The terminal device sends a probe request frame based on the operation that is of scanning the wireless network and that is input by the user, to scan an available AP device near the terminal device, that is, an available WLAN network.

The terminal device does not support the TWT capability.

S56: The Wi-Fi firmware generates a probe response frame based on the received probe request frame and the stored network parameter, and returns the probe response frame to the terminal device.

The probe response frame is a directional beacon sent for the terminal device that is scanning the wireless network. The probe response frame indicates that the first electronic device supports the TWT capability, that is, the TWT capability of the first electronic device is enabled.

S57: The terminal device parses the received probe response frame, and determines, based on parsed content, that the AP device (that is, the first electronic device) is not discovered through scanning.

For specific implementations of S54 to S57, refer to the description of S12 to S15. Details are not described herein again.

S58: The terminal device sends a request message (which may be referred to as a first request message) to the first electronic device, where the first request message is used to request to disable the TWT of the first electronic device.

Correspondingly, the Wi-Fi driver of the first electronic device parses the received request message, and transmits parsed content to the Wi-Fi service module by using hostapd. The Wi-Fi service module reconfigures a network parameter based on the parsed content, and sends a configuration update message to the Wi-Fi firmware by using hostapd and the Wi-Fi driver, to indicate the Wi-Fi firmware to disable the TWT capability of the first electronic device.

For example, a Wi-Fi version enabled on the first electronic device is Wi-Fi5. The Wi-Fi service module may reconfigure the 78^{th} element of the extended capabilities tag as "0", to indicate that the first electronic device does not support the TWT capability.

S59: The Wi-Fi firmware disables the TWT capability.

The Wi-Fi firmware may generate a new beacon frame based on a reconfigured network parameter (which may be referred to as first information) and the Wi-Fi firmware periodically broadcasts the new beacon frame. The new beacon frame indicates that the first electronic device does not support the TWT capability.

S60: The terminal device resends a probe request frame to scan an available AP device near the terminal device.

S61: The Wi-Fi firmware returns a probe response frame (which may be referred to as a fifth probe response frame) to the terminal device based on the probe request frame.

The probe response frame is a directional beacon sent for the terminal device that is scanning the wireless network. The probe response frame indicates that the first electronic device does not support the TWT capability.

It should be noted that the foregoing embodiment is described by using an example in which after the Wi-Fi firmware of the first electronic device disables the TWT capability, the Wi-Fi firmware of the first electronic device returns the probe response frame to the terminal device based on the probe request frame from the terminal device. This imposes no limitation on this application. In another example, after the Wi-Fi firmware of the first electronic device disables the TWT capability, the Wi-Fi firmware of the first electronic device may directly return the probe response frame to the terminal device. In other words, S60 does not need to be performed.

S62: The terminal device parses the received probe response frame, and determines, based on parsed content, that the AP device (that is, the first electronic device) is discovered through scanning.

For specific implementations of S60 and S61, refer to the description of S18 to S20. Details are not described herein again.

In Embodiment 6, when the first electronic device enables the hotspot, the TWT capability is enabled. If the terminal device does not support the TWT capability, the following case may occur: the terminal device cannot discover the first electronic device through scanning. Therefore, when the first electronic device enables the hotspot, the first electronic device first enables the TWT capability. After the terminal device determines, based on the packet of the first electronic device, that the first electronic device supports the TWT capability, the terminal device may indicate the first electronic device to disable the TWT capability, so that the terminal device can discover the first electronic device through scanning.

After the TWT capability of the first electronic device is disabled, because both the beacon frame and the probe response frame that are sent by the first electronic device carry the element that indicates that the first electronic device does not support the TWT capability, the terminal device may execute the following solution: If the terminal device first receives the beacon frame from the first electronic device, the terminal device may determine, based on the beacon frame, that the first electronic device does not support the TWT capability. If the terminal device first receives the probe response frame from the first electronic device, the terminal device may determine, based on the probe response frame, that the first electronic device does not support the TWT capability.

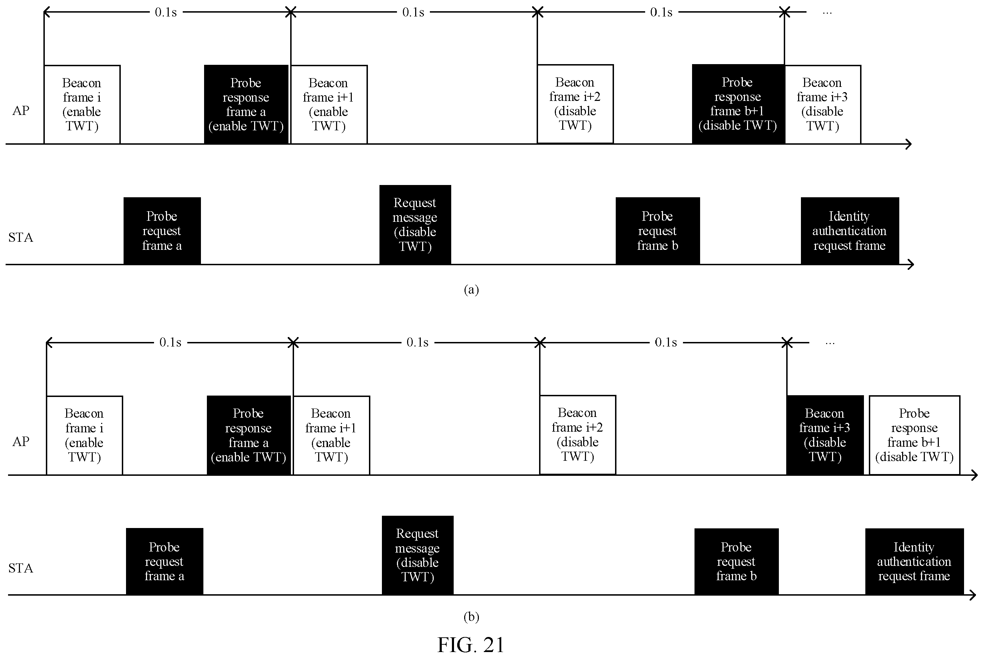

For example, FIG. 21 is a diagram 7 of a scenario in which a STA scans an AP according to an embodiment of this application.

The AP supports a TWT capability, and the STA does not support the TWT capability.

As shown in (a) in FIG. 21, after a hotspot is enabled, the AP may broadcast a beacon frame according to a beacon periodicity of 0.1s. Each beacon frame indicates that the AP supports the TWT capability, that is, the TWT capability of the AP is enabled. After the AP receives a probe request frame a sent by the STA, the AP returns a probe response frame a. Because the probe response frame a indicates that the AP supports the TWT capability, and the STA does not support the TWT capability, the STA sends a request message to the AP to request to disable the TWT capability of the AP. The AP reconfigures a network parameter based on the request message to indicate that the AP does not support the TWT capability, that is, the TWT capability of the AP is disabled. After the AP receives a probe request frame b newly sent by the STA, the AP first sends a probe response frame b+1, and then sends a beacon frame i+3. Both the probe response frame b+1 and the beacon frame i+3 indicate that the AP does not support the TWT capability. The STA first receives the probe response frame b+1, parses the probe response frame b+1, and determines that the AP does not support the TWT capability, to discover the AP through scanning. Then, the STA sends an identity authentication request frame to the AP for identity authentication.

As shown in (b) in FIG. 21, after a hotspot is enabled, the AP may broadcast a beacon frame according to a beacon periodicity of 0.1s. Each beacon frame indicates that the AP supports the TWT capability, that is, the TWT capability of the AP is enabled. After the AP receives a probe request frame a sent by the STA, the AP returns a probe response frame a. Because the probe response frame a indicates that the AP supports the TWT capability, and the STA does not support the TWT capability, the STA sends a request message to the AP to request to disable the TWT capability of the AP. The AP reconfigures a network parameter based on the request message to indicate that the AP does not support the TWT capability, that is, the TWT capability of the AP is disabled. After the AP receives a probe request frame b newly sent by the STA, the AP first sends a beacon frame i+3, and then sends a probe response frame b+1. Both the beacon frame i+3 and the probe response frame b+1 indicate that the AP does not support the TWT capability. The STA first receives the beacon frame i+3, parses the beacon frame i+3, and determines that the AP does not support the TWT capability, to discover the AP through scanning. Then, the STA sends an identity authentication request frame to the AP for identity authentication.

In Embodiment 6, after the TWT capability of the first electronic device is disabled, both the beacon frame and the probe response frame that are sent by the first electronic device carry the element that indicates that the first electronic device does not support the TWT capability, and the terminal device may determine, based on a first received frame, whether the AP supports the TWT capability, thereby improving a speed of discovering the AP by the terminal device.

It should be noted that Embodiment 1 to Embodiment 6 are all described by using an example in which the user first triggers the first electronic device to enable the hotspot, and then triggers the terminal device to search for an available WLAN. This imposes limitation on this application. In actual implementation, the user may first trigger the terminal device to search for the available WLAN, and then trigger the first electronic device to enable the hotspot. It may be understood that before the first electronic device enables the hotspot, the terminal device cannot discover the first electronic device.

In addition, Embodiment 1 to Embodiment 6 describe specific manners of implementing hotspot scanning by disabling the TWT capability. After the terminal device scans the hotspot (that is, the first electronic device), the first electronic device and the terminal device may further perform operations such as authentication, association, four-step handshake, and establishment of a DHCP.

### Embodiment 7

In Embodiment 7, a first electronic device is an AP device that supports a TWT capability, and a terminal device is a STA device that does not support the TWT capability. After the terminal device starts to search for a network, the terminal device may first not indicate to the AP device whether the TWT capability is supported, and then disable the TWT capability of the terminal device if the terminal device is not connected to the AP device after a timing duration reaches a preset duration.

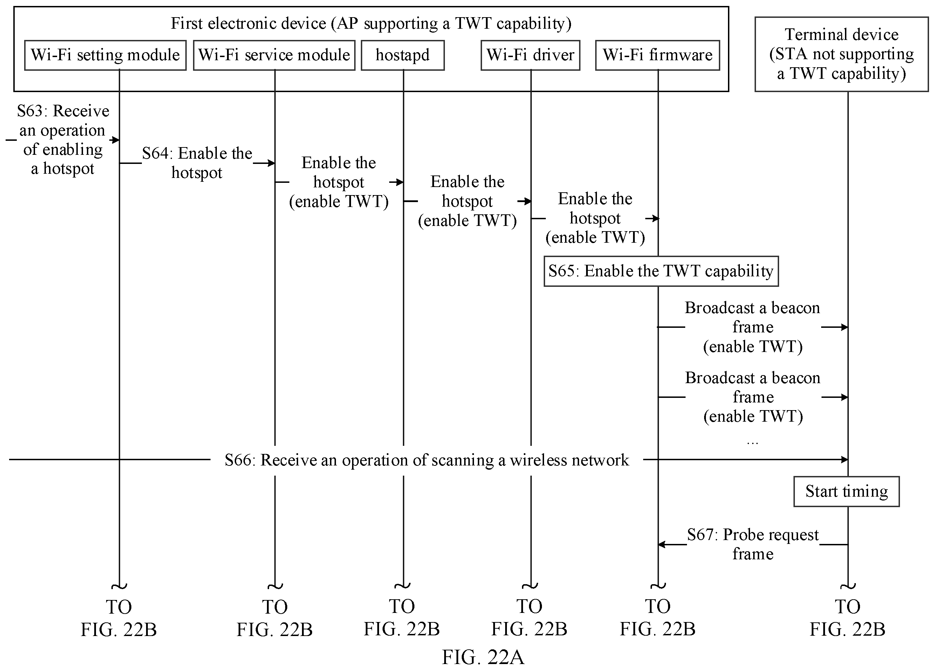

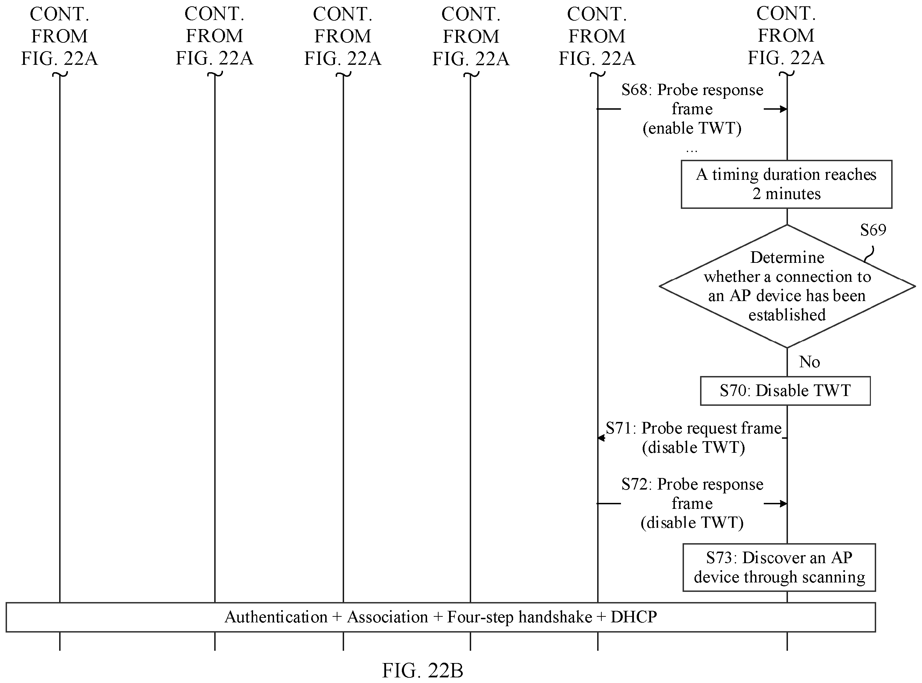

For example, FIG. 22A and FIG. 22B are another flowchart of a TWT capability management method according to an embodiment of this application.

S63: A Wi-Fi setting module of the first electronic device receives an operation (which may be referred to as a first operation) that is of enabling a hotspot and that is input by a user.

S64: The Wi-Fi setting module indicates, by using a Wi-Fi API interface (not shown in FIG. 22A and FIG. 22B), a Wi-Fi service module to enable the hotspot. The Wi-Fi service module invokes hostapd to enable the hotspot, and hostapd controls, by using a Wi-Fi driver, Wi-Fi firmware to enable the hotspot.

S65: The Wi-Fi firmware enables the hotspot and enables the TWT capability when the hotspot is enabled.

In Embodiment 7, a network parameter (which may be referred to as second information) configured by the Wi-Fi service module when the hotspot is enabled indicates that "the first electronic device supports the TWT capability". In other words, when the hotspot is enabled, the network parameter configured by the Wi-Fi service module conforms to the real TWT capability.

After the Wi-Fi firmware enables the hotspot, the first electronic device may generate a beacon frame based on the configured network parameter, and periodically broadcasts the beacon frame by using the Wi-Fi firmware. The beacon frame indicates that the first electronic device supports the TWT capability, that is, the TWT capability of the first electronic device is enabled.

For specific implementations of S63 to S65, refer to the description of S08 to S11. Details are not described herein again.

S66: The terminal device receives an operation that is of scanning a wireless network and that is input by the user.

The terminal device does not support the TWT capability.

S67: The terminal device sends a probe request frame to scan a nearby available WLAN network, and starts timing.

S68: The Wi-Fi firmware of the first electronic device generates a probe response frame based on the received probe request frame and the stored network parameter, and returns the probe response frame to the terminal device. The terminal device parses the received probe response frame, and determines, based on parsed content, that the AP device (that is, the first electronic device) is not discovered through scanning.

The probe response frame is a directional beacon sent for the terminal device that is scanning the wireless network. The probe response frame indicates that the first electronic device supports the TWT capability, that is, the TWT capability of the first electronic device is enabled.

For specific implementations of S66 to S68, refer to the description of S12 to S15. Details are not described herein again.

S69: When a timing duration reaches a preset duration (for example, 2 minutes), the terminal device determines whether a connection has been established with the AP device.

If the terminal device establishes a connection to the AP device, the Wi-Fi service module does not perform a processing operation. It should be noted that the AP device herein is not limited to a first electronic device, and may be alternatively another electronic device. It should be understood that when the terminal device establishes a connection to the AP device, it indicates that the terminal device successfully discovers the first electronic device through scanning, and therefore, no other processing operation needs to be further performed.

If the terminal device is not connected to any AP device, it indicates that this may be because the terminal device does not support the TWT capability. Therefore, the terminal device performs S70 and S71 below.

S70: The terminal device disables the TWT capability.

S71: The terminal device resends a probe request frame (which may be referred to as a second probe request frame). The second probe request frame indicates that the terminal device does not support the TWT capability, that is, the TWT capability of the terminal device is disabled.

S72: The Wi-Fi firmware of the first electronic device generates a probe response frame (which may be referred to as a second probe response frame) based on the second probe request frame, and returns the second probe response frame to the terminal device.

The second probe response frame is a directional beacon sent for the terminal device that is scanning the wireless network. The second probe response frame indicates that the first electronic device does not support the TWT capability, that is, the TWT capability of the first electronic device is disabled.

S73: The terminal device parses the received probe response frame, and determines, based on parsed content, that the AP device (that is, the first electronic device) is discovered through scanning.

Then, the first electronic device and the terminal device may further perform operations such as authentication, association, four-step handshake, and establishment of a DHCP. For details, refer to the description in the following embodiments. Details are not described herein.

For specific implementations of S69 to S73, refer to the description of S27 to S30 in Embodiment 2. Details are not described herein again.

In Embodiment 7, after the terminal device starts to search for the network, timing starts. In an initial stage, the terminal device may not indicate, to the first electronic device, whether the terminal device supports the TWT capability. After the timing duration reaches the preset duration, if the terminal device is not connected to an AP device, the terminal device may indicate, to the first electronic device, that the terminal device does not support the TWT capability. Therefore, the first electronic device changes TWT capability information of a probe response frame and a beacon frame, so that the terminal device can discover the first electronic device through scanning.

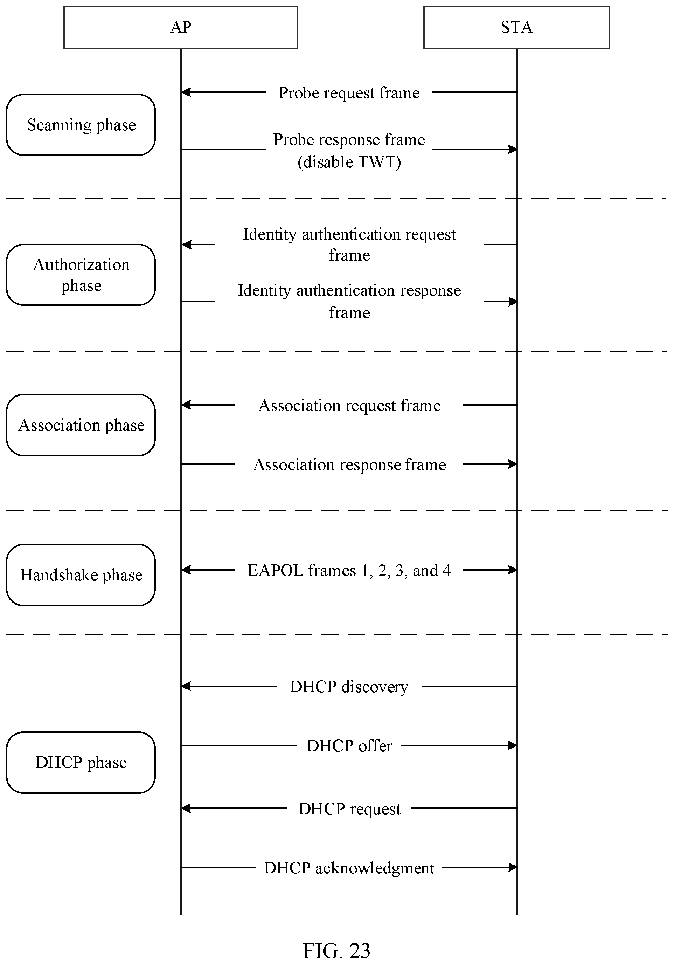

For example, FIG. 23 is a diagram of establishing a WLAN connection between an AP and a STA according to an embodiment of this application.

A link between the AP and the STA is set through five phases: scanning, authentication, association, handshake, and DHCP.

In the scanning phase, the STA sends a probe request message to the AP to scan an available WLAN network near the STA. The AP returns a probe response message to the STA. The probe response frame is a directional beacon sent for the STA. The probe response frame indicates that the AP does not support a TWT capability. In this way, the STA discovers the AP through scanning.

In the authentication phase, the STA sends an identity authentication request frame (auth request) to the AP to request for identity authentication. The AP returns an identity authentication response frame (auth response) to the STA to indicate that identity authentication succeeds.

In the association phase, the STA sends an association request (association request) frame to the AP to request for association. P returns an association response (association response) frame to the STA to indicate that association is completed.

In the handshake phase, the AP and the STA sequentially exchange Eapol frame 1, Eapol frame 2, Eapol frame 3, and Eapol frame 4 to complete four-way handshake.

In the DHCP phase, the STA sends a DHCP discovery request to the AP, and the AP returns a DHCP offer response to the STA. Then, the STA sends a DHCP selection request to the AP, and the AP returns a DHCP acknowledgment response to the STA.

Therefore, a WLAN connection is established between the AP and the STA. The AP and the STA may exchange data through a WLAN connection.

An embodiment of this application further provides a computer-readable storage medium. The computer-readable storage medium stores computer instructions. When the computer-readable storage medium runs on an electronic device, the electronic device is enabled to perform the method shown in the foregoing embodiments. The computer instructions may be stored in the computer-readable storage medium, or may be transmitted from one computer-readable storage medium to another computer-readable storage medium. The computer-readable storage medium may be any usable medium accessible by a computer, or a data storage device, such as a server or a data center, integrating one or more usable media. The usable medium may be a magnetic medium, an optical medium, a semiconductor medium, or the like.

An embodiment of this application further provides a computer program product. The computer program product includes computer program code. When the computer program code is run on an electronic device, the electronic device is enabled to perform the method according to the foregoing embodiments.

An embodiment of this application further provides a chip. The chip is coupled to a memory. The chip is configured to read and execute a computer program or instructions stored in the memory, to perform the method according to the foregoing embodiments. The chip may be a general-purpose processor or a dedicated processor.

The electronic device, the computer-readable storage medium, the computer program product, and the chip provided in embodiments of this application are all configured to perform the method provided in the foregoing embodiments. Therefore, for beneficial effects that can be achieved by the electronic device, the computer-readable storage medium, the computer program product, and the chip, refer to beneficial effects corresponding to the method provided above. Details are not described herein again.

In descriptions of this application, "/" means or. For example, A/B may indicate A or B. In the descriptions of this application, "and/or" is merely used to describe an association relationship between associated objects, and represents that three relationships may exist. For example, A and/or B may represent the following three cases: Only A exists, both A and B exist, and only B exists.

The foregoing descriptions about implementations allow a person skilled in the art to understand that, for the purpose of convenient and brief description, division of the foregoing functional modules is used as an example for illustration. In actual application, the foregoing functions can be allocated to different modules and implemented according to a requirement, that is, an inner structure of an apparatus is divided into different functional modules to implement all or a part of the functions described above. In addition, the functional units in embodiments of this application may be integrated into one processing unit, or each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A target wake time TWT adjustment method, wherein the method is applied to a first electronic device, and the method comprises:
enabling, by the first electronic device, a hotspot; and
sending, by the first electronic device, first signaling, wherein the first signaling comprises information indicating that the first electronic device has disabled a TWT capability.

2. The method according to claim 1, wherein the first signaling comprises a first beacon frame and a first probe response frame; and
the enabling, by the first electronic device, a hotspot, and sending, by the first electronic device, first signaling comprises:
receiving, by the first electronic device, a first operation of enabling the hotspot by a user;
in response to the first operation, enabling, by the first electronic device, the hotspot, and periodically broadcasting the first beacon frame;
receiving, by the first electronic device, a first probe request frame from a terminal device; and
sending, by the first electronic device, the first probe response frame to the terminal device.

3. The method according to claim 2, wherein in response to the first operation, the enabling, by the first electronic device, the hotspot, and periodically broadcasting the first beacon frame comprises:
configuring, by the first electronic device, first information in response to the first operation, wherein the first information indicates to disable the TWT capability of the first electronic device; and
enabling, by the first electronic device, the hotspot, disabling the TWT capability of the first electronic device based on the first information, and periodically broadcasting the first beacon frame.

4. The method according to claim 1, wherein
the enabling, by the first electronic device, a hotspot comprises:
enabling, by the first electronic device, the hotspot, and starting timing; and
the sending, by the first electronic device, first signaling comprises:
when a timing duration reaches a preset duration, if no wireless local area network connection is established between the first electronic device and another device, sending, by the first electronic device, the first signaling.

5. The method according to claim 4, wherein the first signaling is a second probe response frame; and
the enabling, by the first electronic device, the hotspot, and starting timing comprises:
configuring, by the first electronic device, second information in response to a first operation of enabling the hotspot by a user, wherein the second information indicates to enable the TWT capability of the first electronic device; enabling, by the first electronic device, the hotspot, enabling the TWT capability of the first electronic device based on the second information, and starting timing; and periodically broadcasting, by the first electronic device, a second beacon frame, wherein the second beacon frame comprises information indicating that the first electronic device has enabled the TWT capability; and
when the timing duration reaches the preset duration, if no wireless local area network connection is established between the first electronic device and the another device, the sending, by the first electronic device, the first signaling comprises:
when the timing duration reaches the preset duration, if no wireless local area network connection is established between the first electronic device and the another device, configuring, by the first electronic device, first information, and deleting the second information, wherein the first information indicates to disable the TWT capability of the first electronic device; receiving, by the first electronic device, a second probe request frame from a terminal device; and sending, by the first electronic device, the second probe response frame to the terminal device, wherein the second probe response frame comprises the information indicating that the first electronic device has disabled the TWT capability.

6. The method according to claim 1, wherein after the enabling, by the first electronic device, a hotspot, before the sending, by the first electronic device, first signaling, the method further comprises:
receiving, by the first electronic device, a third probe request frame from a terminal device; and
the sending, by the first electronic device, first signaling comprises:
if the third probe request frame comprises information indicating that the terminal device does not support the TWT capability, sending, by the first electronic device, the first signaling to the terminal device.

7. The method according to claim 6, wherein after the receiving, by the first electronic device, a third probe request frame from a terminal device, the method further comprises:
if the third probe request frame comprises information indicating that the terminal device supports the TWT capability, sending, by the first electronic device, second signaling to the terminal device, wherein the second signaling comprises information indicating that the first electronic device has enabled the TWT capability.

8. The method according to claim 7, wherein the first signaling is a third probe response frame, and the second signaling is a fourth probe response frame;
the enabling, by the first electronic device, a hotspot comprises: configuring, by the first electronic device, second information in response to a first operation of enabling the hotspot by a user, wherein the second information indicates to enable the TWT capability of the first electronic device; and enabling, by the first electronic device, the hotspot, enabling the TWT capability of the first electronic device based on the second information, and periodically broadcasting a third beacon frame, wherein the third beacon frame comprises the information indicating that the first electronic device has enabled the TWT capability;
the receiving, by the first electronic device, a third probe request frame from a terminal device comprises: receiving, by the first electronic device, the third probe request frame from the terminal device, and parsing the third probe request frame to obtain first parsed content;
if the third probe request frame comprises the information indicating that the terminal device does not support the TWT capability, the sending, by the first electronic device, the first signaling to the terminal device comprises: if the first parsed content indicates that the terminal device does not support the TWT capability, configuring, by the first electronic device, first information, and deleting the second information, wherein the first information indicates to disable the TWT capability of the first electronic device; and generating, by the first electronic device, the third probe response frame based on the first information, and sending the third probe response frame to the terminal device, wherein the third probe response frame comprises information indicating that the first electronic device has disabled the TWT capability; and
if the third probe request frame comprises the information indicating that the terminal device supports the TWT capability, the sending, by the first electronic device, second signaling to the terminal device comprises: if the first parsed content indicates that the terminal device supports the TWT capability, maintaining, by the first electronic device, the second information, and generating the fourth probe response frame based on the second information; and sending, by the first electronic device, the fourth probe response frame to the terminal device, wherein the fourth probe response frame comprises the information indicating that the first electronic device has enabled the TWT capability.

9. The method according to claim 1, wherein after the enabling, by the first electronic device, a hotspot, before the sending, by the first electronic device, first signaling, the method further comprises:
receiving, by the first electronic device, a first request message from a terminal device, wherein the first request message is used to request to disable the TWT capability of the first electronic device; and
the sending, by the first electronic device, first signaling comprises:
disabling, by the first electronic device, the TWT capability of the first electronic device based on the first request message, and sending the first signaling to the terminal device.

10. The method according to claim 9, wherein the first signaling is a fifth probe response frame;
the enabling, by the first electronic device, a hotspot comprises:
configuring, by the first electronic device, second information in response to a first operation of enabling the hotspot by a user, wherein the second information indicates to enable the TWT capability of the first electronic device; and enabling, by the first electronic device, the hotspot based on the second information, and periodically broadcasting a fourth beacon frame, wherein the fourth beacon frame comprises information indicating that the first electronic device has enabled the TWT capability; and
the disabling, by the first electronic device, the TWT capability of the first electronic device based on the first request message, and sending the first signaling to the terminal device comprises:
configuring, by the first electronic device, first information based on the first request message, and deleting the second information, wherein the first information indicates to disable the TWT capability of the first electronic device; disabling, by the first electronic device, the TWT capability of the first electronic device based on the first information, and generating the fifth probe response frame; and sending, by the first electronic device, the fifth probe response frame to the terminal device, wherein the fifth probe response frame comprises information indicating that the first electronic device has disabled the TWT capability.

11. The method according to any one of claims 4, 6, and 9, wherein after the enabling, by the first electronic device, a hotspot, before the sending, by the first electronic device, first signaling, the method further comprises:
periodically broadcasting, by the first electronic device, a fifth beacon frame, wherein the fifth beacon frame comprises information indicating that the first electronic device has enabled the TWT capability.

12. The method according to claim 1, wherein after the enabling, by the first electronic device, a hotspot, before the sending, by the first electronic device, first signaling, the method further comprises:
sending, by the first electronic device, third signaling and fourth signaling, wherein the third signaling comprises the information indicating that the first electronic device has disabled the TWT capability, and the fourth signaling comprises information indicating that the first electronic device has enabled the TWT capability; and
receiving, by the first electronic device, a second request message from a terminal device, wherein the second request message is used to request to disable the TWT capability of the first electronic device; and
the sending, by the first electronic device, first signaling comprises:
disabling, by the first electronic device, the TWT capability of the first electronic device based on the second request message, and sending the first signaling to the terminal device.

13. The method according to claim 12, wherein the third signaling is a sixth beacon frame, and the fourth signaling is a seventh beacon frame;
the enabling, by the first electronic device, a hotspot comprises:
in response to a first operation of enabling the hotspot by a user, enabling, by the first electronic device, the hotspot, and configuring first information and second information, wherein the first information indicates to disable the TWT capability of the first electronic device, and the second information indicates to enable the TWT capability of the first electronic device;
the sending, by the first electronic device, third signaling and fourth signaling comprises:
generating, by the first electronic device, a sixth beacon frame based on the first information, and generating a seventh beacon frame based on the second information; and broadcasting, by the first electronic device, the sixth beacon frame and the seventh beacon frame according to a preset periodicity; and
the disabling, by the first electronic device, the TWT capability of the first electronic device based on the second request message, and sending the first signaling to the terminal device comprises:
reconfiguring, by the first electronic device, the first information based on the second request message; disabling, by the first electronic device, the TWT capability of the first electronic device based on the first information, and generating the first signaling; and sending, by the first electronic device, the first signaling to the terminal device.

14. The method according to any one of claims 1, 4, 6, 9, and 12, wherein the first signaling is a beacon frame or a probe response frame.

15. A TWT adjustment method, wherein the method is applied to a terminal device, and the method comprises:
starting, by the terminal device, to search for a wireless local area network; and
receiving, by the terminal device, first signaling from a first electronic device, wherein the first signaling comprises information indicating that the first electronic device has disabled a TWT capability.

16. The method according to claim 15, wherein the first signaling comprises a first beacon frame and a first probe response frame, and the starting, by the terminal device, to search for a wireless local area network, and receiving, by the terminal device, first signaling from a first electronic device comprises:
starting, by the terminal device, to search for the wireless local area network, and periodically receiving the first beacon frame from the first electronic device;
sending, by the terminal device, a first probe request frame to the first electronic device; and
receiving, by the terminal device, the first probe response frame from the first electronic device, wherein
the terminal device does not support the TWT capability.

17. The method according to claim 15, wherein the first signaling is a second probe response frame, and the starting, by the terminal device, to search for a wireless local area network, and receiving, by the terminal device, first signaling from a first electronic device comprises:
starting, by the terminal device, to search for the wireless local area network, and starting timing;
when a timing duration reaches a preset duration, if no wireless local area network connection is established between the terminal device and another device, sending, by the terminal device, a second probe request frame, wherein the second probe request frame comprises information indicating that the terminal device does not support the TWT capability; and
receiving, by the terminal device, the second probe response frame from the first electronic device based on the second probe request frame.

18. The method according to claim 15, wherein the receiving, by the terminal device, first signaling from a first electronic device comprises:
if the terminal device does not support the TWT capability, sending, by the terminal device, a third probe request frame to the first electronic device, wherein the third probe request frame comprises information indicating that the terminal device does not support the TWT capability; and
receiving, by the terminal device, a third probe response frame from the first electronic device based on the third probe request frame, wherein the first signaling is the third probe response frame.

19. The method according to claim 15, wherein after the starting, by the terminal device, to search for a wireless local area network, the method further comprises:
if the terminal device supports the TWT capability, sending, by the terminal device, a third probe request frame to the first electronic device, wherein the third probe request frame comprises information indicating that the terminal device supports the TWT capability; and
receiving, by the terminal device, second signaling from the first electronic device based on the third probe request frame, wherein the second signaling comprises information indicating that the first electronic device has enabled the TWT capability.

20. The method according to claim 15, wherein after the starting, by the terminal device, to search for a wireless local area network, before the receiving, by the terminal device, first signaling from a first electronic device, the method further comprises:
sending, by the terminal device, a fourth probe request frame to the first electronic device, wherein the fourth probe request frame does not comprise information indicating whether to disable the TWT capability of the terminal device.

21. The method according to claim 15, wherein after the starting, by the terminal device, to search for a wireless local area network, before the receiving, by the terminal device, first signaling from a first electronic device, the method further comprises:
sending, by the terminal device, a first request message to the first electronic device, wherein the first request message is used to request to disable the TWT capability of the first electronic device; and
the receiving, by the terminal device, first signaling from a first electronic device comprises:
receiving, by the terminal device, the first signaling from the first electronic device based on the first request message.

22. The method according to any one of claims 17 to 21, wherein after the starting, by the terminal device, to search for a wireless local area network, before the receiving, by the terminal device, first signaling from a first electronic device, the method further comprises:
receiving, by the terminal device, a second beacon frame from the first electronic device, wherein the second beacon frame comprises the information indicating that the first electronic device has enabled the TWT capability.

23. The method according to claim 15, wherein after the starting, by the terminal device, to search for a wireless local area network, before the receiving, by the terminal device, first signaling from a first electronic device, the method further comprises:
receiving, by the terminal device, third signaling and fourth signaling from the first electronic device, wherein the third signaling comprises the information indicating that the first electronic device has disabled the TWT capability, and the fourth signaling comprises information indicating that the first electronic device has enabled the TWT capability; and
selecting, in the third signaling by the terminal device based on the TWT capability of the terminal device, the information indicating that the first electronic device has disabled the TWT capability, or selecting, in the fourth signaling, the information indicating that the first electronic device has enabled the TWT capability.

24. The method according to claim 23, wherein both the third signaling and the fourth signaling are beacon frames; and
the selecting, in the third signaling by the terminal device based on the TWT capability of the terminal device, the information indicating that the first electronic device has disabled the TWT capability, or selecting, in the fourth signaling, the information indicating that the first electronic device has enabled the TWT capability comprises:
if the terminal device does not support the TWT capability, selecting, by the terminal device, the third signaling, and sending a second request message to the first electronic device, wherein the second request message is used to request to disable the TWT capability of the first electronic device, the first signaling is a sixth probe response frame, and the sixth probe response frame is obtained based on the second request message; or
if the terminal device supports the TWT capability, selecting, by the terminal device, the fourth signaling, and sending a third request message to the first electronic device, wherein the third request message is used to request to enable the TWT capability of the first electronic device, the first signaling is a seventh probe response frame, and the seventh probe response frame is obtained based on the third request message.

25. The method according to claim 23, wherein both the third signaling and the fourth signaling are probe response frames; and
the selecting, in the third signaling by the terminal device based on the TWT capability of the terminal device, the information indicating that the first electronic device has disabled the TWT capability, or selecting, in the fourth signaling, the information indicating that the first electronic device has enabled the TWT capability comprises:
if the terminal device does not support the TWT capability, selecting, by the terminal device, probe response frame information corresponding to the third signaling, and determining that the first electronic device is discovered through scanning for connection; or
if the terminal device supports the TWT capability, selecting, by the terminal device, probe response frame information corresponding to the fourth signaling, and determining that the first electronic device is discovered through scanning for connection.

26. The method according to any one of claims 15 to 21 and 23, wherein the first signaling is a beacon frame or a probe response frame.

27. An electronic device, wherein the electronic device is a first electronic device, the first electronic device is an access point device, and the first electronic device comprises one or more processors and a memory, wherein
the memory is coupled to the one or more processors, the memory is configured to store computer program code, the computer program code comprises computer instructions, and the one or more processors invoke the computer instructions, so that the first electronic device performs the TWT adjustment method according to any one of claims 1 to 14.

28. A terminal device, wherein the terminal device is a station device, and the terminal device comprises one or more processors and a memory, wherein
the memory is coupled to the one or more processors, the memory is configured to store computer program code, the computer program code comprises computer instructions, and the one or more processors invoke the computer instructions, so that the terminal device performs the TWT adjustment method according to any one of claims 15 to 26.

29. A communication system, wherein the communication system comprises the electronic device according to claim 27 and the terminal device according to claim 28.

30. A computer-readable storage medium, wherein the computer-readable storage medium comprises instructions; and
when the instructions are run on a first electronic device, the first electronic device is enabled to perform the TWT adjustment method according to any one of claims 1 to 14; and when the instructions are run on a terminal device, the terminal device is enabled to perform the TWT adjustment method according to any one of claims 15 to 26.
